# EUROPEAN PATENT SPECIFICATION

(11) **EP 0 517 213 B1**
(45) Date of publication and mention of the grant of the patent: **04.01.1995**
(21) Application number: 92109455.3
(22) Date of filing: 04.06.1992
(51) Int. Cl.: H01G 4/12, C04B 35/49

(54) **Ceramic capacitor and method for fabricating the same**
Keramischer Kondensator und sein Herstellungsverfahren
Condensateur céramique et son procédé de fabrication

(30) Priority: 05.06.1991 JP 161033/91; 05.06.1991 JP 161034/91; 05.06.1991 JP 161035/91
(43) Date of publication of application: 09.12.1992
(73) Proprietor: TAIYO YUDEN CO., LTD., Taito-ku Tokyo 110 (JP)
(72) Inventor: Kishi, Hiroshi, Taito-ku, Tokyo (JP); Shizuno, Hisamitsu, Taito-ku, Tokyo (JP); Kusumi, Shinya, Taito-ku, Tokyo (JP); Saito, Hiroshi, Taito-ku, Tokyo (JP)
(74) Representative: Fiener, Josef

(56) References cited:
- EP-A- 0 290 859
- EP-A- 0 431 531
- DATABASE WPIL Week 8340, Derwent Publications Ltd., London, GB; AN 83-779541 & JP-A-58 143 515

## Description

### BACKGROUND OF THE INVENTION

### 1. Field of the Invention

The invention relates to a ceramic capacitor having a one-layer structure or a laminated structure in which one or more than one dielectric ceramic layer is (are) sandwiched between two or more internal electrodes, and a method for fabricating the same.

### 2. Description of Related Art

In a conventional method for fabricating a laminated ceramic capacitor, a desired pattern of conductive paste consisting mainly of noble metal such as platinum or palladium is printed on a non-sintered ceramic sheet (a green sheet) consisting essentially of dielectric ceramic material powder. Then, a plural number of the green sheets are laminated, pressed and attached each other, and the laminated green sheets are fired at a temperature in the range of 1300°C to 1600°C under an oxidative atmosphere. The non-sintered ceramic sheets become dielectric ceramic layers by the firing and the conductive paste become internal electrode by the firing.

As described above, by adopting the conductive paste consisting mainly of noble metal such as platinum or palladium, a desired conductive internal electrode can be obtained without oxidation thereof even if the material thereof is fired at a high temperature in the range of 1300 °C to 1600°C under an oxidative atmosphere.

However, noble metals such as platinum or palladium are expensive, so that the laminated ceramic capacitor become essentially costly.

In order to resolve the problem described above, the applicant of the present invention has proposed in Japanese Patent Publication No. 20851/85, Japanese Patent Provisional Publication No. 147404/86, Japanese Patent Provisional Publication No. 147405/86 and Japanese Patent Provisional Publication No. 147406/86.

Japanese Patent Publication No. 20851/85 has disclosed dielectric ceramic compositions including basic components consisting essentially of 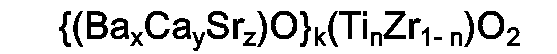 and additional components consisting essentially of Li₂0, Si0₂ and MO (MO is one or more than one kind of oxides selected from a group consisting of BaO, CaO and SrO).

Japanese Patent Provisional Publication No. 147404/86 has disclosed dielectric ceramic compositions including basic components consisting essentially of {(Ba_{1- x- y}CaₓSr_{y})O}ₖ(Ti_{1- z}Zr_{z})O₂ and additional components consisting essentially of B₂0₃, Si0₂ and Li₂0.

Japanese Patent Provisional Publication No. 147405/86 has disclosed dielectric ceramic compositions including basic components consisting essentially of 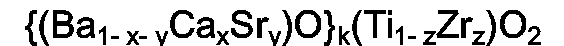 and additional components consisting essentially of B₂0₃ and Si0₂ .

Japanese Patent Provisional Publication No. 147406/86 has disclosed dielectric ceramic compositions including basic components consisting essentially of 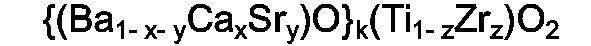 and additional components consisting essentially of B₂0₃, Si0₂ and MO (MO is one or more than one kind of oxides selected from a group consisting essentially of BaO, CaO and SrO).

These dielectric ceramic compositions disclosed in the Publications have a dielectric constant sₛ at least 5000, and a resistivity p at least 1 x 10⁶ MQ.cm. By using one of the dielectric ceramic compositions as a dielectric layer and using the conductive paste consisting mainly of base metal such as nickel (Ni) as internal electrodes, ceramic capacitors with the better electric characteristics can be obtained at a low cost by firing at a temperature up to 1200°C under a reductive (non-oxidative) atmosphere.

Recently, electric circuits become high densed, which requires intensely miniaturization of ceramic capacitors, especially those having a laminated structure, so that it has been expected to make the dielectric constant sₛ of the dielectric ceramic compositions still larger, without making other electric characteristics worse, than that of the dielectric ceramic compositions disclosed in the cited references shown above.

### SUMMARY OF THE INVENTION

Accordingly, it is an object of the invention to provide a ceramic capacitor, whose electric characteristics are still better than before, including a dielectric ceramic composition which has a dielectric constant sₛ at least 7000, a dielectric loss (tan 8) up to 2.5 %, a resistivity p at least 1 x 10⁶ MΩ.cm, by firing the composition even at a temperature up to 1200°C in a non-oxidative atmosphere, and a method for fabricating the same.

This object is achieved by a ceramic capacitor according to claim 1, 2 or 3 and a method for fabricating the same according to claim 4, 5 or 6, respectively.
Fig. 1 is a cross sectional view illustrating an example of a laminated ceramic capacitor according to the invention;
Fig. 2 is a ternary-system diagram showing the adequate composition ratio in the additional component according to the first and fourth invention embodiments;
Fig. 3 is a ternary-system diagram showing the adequate composition ratio in the additional component according to the second and fifth invention embodiments; and
Fig. 4 is a ternary-system diagram showing the adequate composition ratio in the additional component according to the third and sixth invention embodiments.

### DESCRIPTION OF THE PREFERRED EMBODIMENTS

According to the first invention, a ceramic capacitor includes at least one dielectric ceramic layer consisting essentially of a dielectric ceramic composition and at least two internal electrodes sandwiching the dielectric ceramic composition.

The dielectric ceramic composition consisting essentially of a fired mixture of a basic component of 100.0 weight portions and an additional component in the range of 0.2 to 5.0 weight portions.

The basic component consisting essentially of a material represented by the following formula: 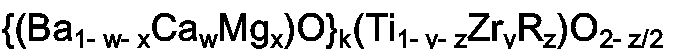 where, R is one or more elements selected from a group consisting of Sc, Y, Gd, Dy, Ho, Er, Yb, Tb, Tm and Lu. And, w, x, y, z and k are numerals fulfilling the following conditions:

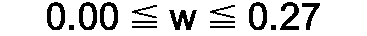

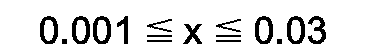

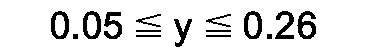

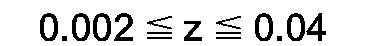

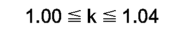

Next, an additional component consisting essentially of Li₂0, Si0₂ and MO (MO is at least one oxide selected from a group consisting of BaO, SrO, CaO, MgO and ZnO).

The range of a ratio among the amounts of Li₂0, Si0₂ and MO in the additional component is represented by an area having five vertexes in the ternary system diagram of mol %, as follows:
the first vertex A where the amounts of Li₂0 is 1 mol %, Si0₂ is 80 mol % and MO is 19 mol %;
the second vertex B where the amounts of Li₂0 is 1 mol %, Si0₂ is 39 mol % and MO is 60 mol %;
the third vertex C where the amounts of Li₂0 is 30 mol %, Si0₂ is 30 mol % and MO is 40 mol %;
the fourth vertex D where the amounts of Li₂0 is 50 mol %, Si0₂ is 50 mol % and MO is 0 mol %; and
the fifth vertex E where the amounts of Li₂0 is 20 mol %, Si0₂ is 80 mol % and MO is 0 mol %.

A dielectric ceramic composition having desired electric characteristics, high dielectric constant sₛ, and high resistivity p can be obtained on the condition of 0.00 ≦ w Z 0.27 (w represents the ratio of Ca in the composition formula of the basic component), however, the firing temperature will be high up to 1250°C, and the dielectric constant εₛ will be smaller than 7000, if w is larger than 0.27.

Ca is the element which is added in order mainly to make the temperature characteristics of the ceramic capacitors flat and to improve the resistivity p, therefore sintered materials having desired electric characteristics can be obtained without Ca. Accordingly, the lower limit ofw involves 0.00.

A dielectric ceramic composition having desired electric characteristics can be obtained on the condition of 0.001 ≦ x Z 0.03 (x represents the ratio of Mg in the composition formula of the basic component), however, the dielectric constant sₛ goes down rapidly to smaller than 7000, if x is larger than 0.03.

Mg can shift the Curie point to lower temperature, make the temperature characteristics flat, and improve the resistivity p. There is observed a significant effect, if x is smaller than 0.03 even in the vicinity of 0, but it is desirable that a value of x is at least 0.001 because the electric characteristics cannot be the same in the case of mass-production.

A dielectric ceramic composition having desired electric characteristics can be obtained on the condition of 0.05 ≦ y Z 0.26 (y represents the ratio of Zr in the composition formula of the basic component), however, the dielectric constant sₛ is smaller than 7000, if y is smaller than 0.05 and larger than 0.26.

A dielectric ceramic composition having desired electric characteristics can be obtained on the condition of 0.002≦ z Z 0.04 (z represents the ratio of R in the composition formula of the basic component), however, the dielectric loss (tan 8) becomes considerably heavy and the resistivity p is smaller than 1 x 10⁴MΩ.cm, if z is smaller than 0.002, on the other hand, a dense sintered material cannot be obtained, even if the firing temperature is 1250 °C, if z is larger than 0.04.

Sc, Y, Gd, Dy, Ho, Er, Yb, Tb, Tm, and Lu of the R component work for almost the same function, so that any one or more than one of them can be used. Tb, Tm, and Lu are not involved in the Table 3 shown after, but they have the same effect as other R components.

A dielectric ceramic composition having desired electric characteristics can be obtained on the condition of 1.00 -- k Z 1.04 (k represents the ratio of {(Ba_{1- w- x}Ca_{w}Mgₓ)O} in the composition formula of the basic component), however, the resistivity p becomes considerably small, that is smaller than 1 x 10⁶ MΩ.cm and tan δ becomes heavy, if k is smaller than 1.00, on the other hand, a dense sintered material cannot be obtained, even if the firing temperature is 1250°C, if k is larger than 1.04.

Asmall amount (desirably in the range of 0.05 to 0. weight %) of mineralizers such as Mn0₂ may be added to the basic component to improve the sintering characteristic thereof so long as the addition does not obstruct objects of the invention. Other materials may be also added if necessary. The starting material for obtaining the basic component may be oxides, hydroxides or other compounds, in addition to the compounds shown in the embodiments stated after.

Next, if the amount of the additional component added is in the range of 0.2 to 5.0 weight portions in 100 weight portions of the basic component, the sintered material having desired electric characteristics can be obtained by firing at a temperature in the range of 1190 °C to 1200°C, however, a dense sintered material cannot be obtained, even if the firing temperature is 1250°C, if the amount of the additional component is smaller than 0.2 weight portions, on the other hand, the dielectric constant sₛ becomes smaller than 7000, if the amount of the additional component is larger than 5.0 weight portions.

A sintered material having desired electric characteristics can be obtained if the ratio among the amounts of Li₂0, Si0₂ and MO in the additional component is within the area in the ternary system diagram of mol % described above, however, a dense sintered material can not be obtained, if the ratio is out of the area. MO component may be one of metal oxides selected from a group consisting of BaO, SrO, CaO, MgO and ZnO, or more than one of them in adequate ratio.

The second invention of the application will be described. According to the second invention, a ceramic capacitor includes at least one dielectric ceramic layer consisting essentially of a dielectric ceramic composition and at least two internal electrodes sandwiching the dielectric ceramic composition.

The dielectric ceramic composition consisting essentially of a fired mixture of a basic component of 100.0 weight portions and an additional component in the range of 0.2 to 5.0 weight portions.

The basic component consisting essentially of a material represented by the following formula: 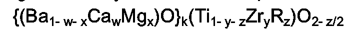 where, R is one or more elements selected from a group consisting of Sc, Y, Gd, Dy, Ho, Er, Yb, Tb, Tm and Lu. And, w, x, y, z and k are numerals fulfilling the following conditions:

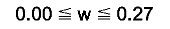

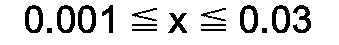

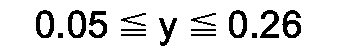

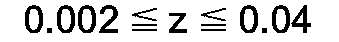

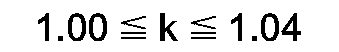

Next, an additional component consisting essentially of B₂0₃, Si0₂ and MO (MO is at least one oxide selected from a group consisting of BaO, SrO, CaO, MgO and ZnO).

The range of a ratio among the amounts of B₂0₃, Si0₂ and MO in the additional component is represented by an area having six vertexes in the ternary system diagram of mol %, as follows:
the first vertex F where the amounts of B₂0₃ is 1 mol %, Si0₂ is 80 mol % and MO is 19 mol %;
the second vertex G where the amounts of B₂0₃ is 1 mol %, Si0₂ is 39 mol % and MO is 60 mol %;
the third vertex H where the amounts of B₂0₃ is 30 mol %, Si0₂ is 0 mol % and MO is 70 mol %;
the fourth vertex I where the amounts of B₂0₃ is 90 mol %, Si0₂ is 0 mol % and MO is 10 mol %;
the fifth vertex J where the amounts of B₂0₃ is 90 mol %, Si0₂ is 10 mol % and MO is 0 mol %; and
the sixth vertex K where the amounts of B₂0₃ is 20 mol %, Si0₂ is 80 mol % and MO is 0 mol %.

Both the content of the basic component and the amount of the additional component are the same as those in the first invention. A sintered material having desired electric characteristics can be obtained if the ratio among the amounts of B₂0₃, Si0₂ and MO in the additional component is within the area in the ternary system diagram of mol % described above, however, a dense sintered material cannot be obtained, if the ratio of additional component is out of the area. MO component may be one of metal oxides selected from a group consisting of BaO, SrO, CaO, MgO and ZnO, or more than one of them in adequate ratio.

The third invention of the application will be described. According to the third invention, a ceramic capacitor includes at least one dielectric ceramic layer consisting essentially of a dielectric ceramic composition and at least two internal electrodes sandwiching the dielectric ceramic composition.

The dielectric ceramic composition consisting essentially of a fired mixture of a basic component of 100.0 weight portions and an additional component in the range of 0.2 to 5.0 weight portions.

The basic component consisting essentially of a material represented by the following formula: 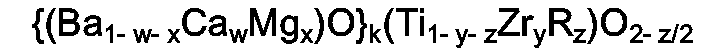 where, R is one or more elements selected from a group consisting of Sc, Y, Gd, Dy, Ho, Er, Yb, Tb, Tm and Lu. And w, x, y, z and k are numerals fulfilling the following conditions:

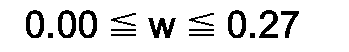

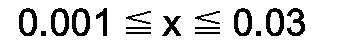

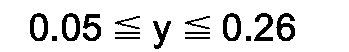

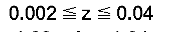

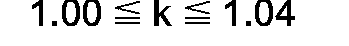

Next, an additional component consisting essentially of B₂0₃, Si0₂ and Li₂0.

The range of a ratio among the amounts of B₂0₃, Si0₂ and Li₂0 in the additional component is represented by an area having six vertexes in the ternary system diagram of mol %, as follows:
the first vertex L where the amounts of B₂0₃ is 1 mol %, Si0₂ is 50 mol % and Li₂0 is 49 mol %;
the second vertex M where the amounts of B₂0₃ is 50 mol %, Si0₂ is 1 mol % and Li₂0 is 49 mol %;
the third vertex N where the amounts of B₂0₃ is 80 mol %, Si0₂ is 1 mol % and Li₂0 is 19 mol %;
the fourth vertex O where the amounts of B₂0₃ is 89 mol %, Si0₂ is 10 mol % and Li₂0 is 1 mol %;
the fifth vertex P where the amounts of B₂0₃ is 19 mol %, Si0₂ is 80 mol % and Li₂0 is 1 mol %; and
the sixth vertex Q where the amounts of B₂0₃ is 1 mol %, Si0₂ is 80 mol % and Li₂0 is 19 mol %.

Both the content of the basic component and the amount of the additional component are the same as those in the first invention. A sintered material having desired electric characteristics can be obtained if the ratio among the amounts of B₂0₃, Si0₂, and Li₂0 in the additional component is within the area in the ternary system diagram of mol % described above, however, a dense sintered material cannot be obtained if the ration is out of the area.

Next, the fourth invention of the application will be described. According to the fourth invention, a method for fabricating a ceramic capacitor includes the steps of providing a mixture of non-sintered ceramic powder consisting essentially of basic and additional components in the first invention, forming a non-sintered ceramic sheet consisting of the mixture, fabricating a laminated structure in which the non-sintered ceramic sheet is sandwiched between at least two conductive paste layers, firing the laminated structure under a non-oxidative atmosphere, and heating the fired laminated structure under an oxidative atmosphere.

Next, the fifth invention of the application will be described. According to the fifth invention, a method for fabricating a ceramic capacitor includes the steps of providing a mixture of non-sintered ceramic powder consisting essentially of basic and additional components in the second invention, forming a non-sintered ceramic sheet consisting of the mixture, fabricating a laminated structure in which the non-sintered ceramic sheet is sandwiched between at least two conductive paste layers, firing the laminated structure under a non-oxidative atmosphere, and heating the fired laminated structure under an oxidative atmosphere.

Next, the sixth invention of the application will be described. According to the sixth invention, a method for fabricating a ceramic capacitor includes the steps of providing a mixture of non-sintered ceramic powder consisting essentially of basic and additional components in the third invention, forming a non-sintered ceramic sheet consisting of the mixture, fabricating a laminated structure in which the non-sintered ceramic sheet is sandwiched between at least two conductive paste layers, firing the laminated structure under a non-oxidative atmosphere, and heating the fired laminated structure under an oxidative atmosphere.

In the fourth to sixth inventions, the non-oxidative atmosphere may be a neutral atmosphere such as in N₂ or Ar, in addition to a reductive atmosphere such as in H₂ or CO. The temperature in the firing under a non-oxidative atmosphere can be changed in consideration of electrode materials. If Ni is adopted as the material of the inner electrode, cohesion of Ni particles may scarcely occur at a temperature in the range of 1050 °C to 1200 °C.

The temperature of heating the fired laminated structure under an oxidative atmosphere should be lower than the temperature in the firing under a non-oxidative atmosphere, and it is more preferred to be in the range of 500°C to 1000°C. The oxidative atmosphere is not limited to the airy atmosphere. The low oxygen atmosphere, for example, where some ppm of 0₂ are mixed in N₂ or the atmosphere with any oxygen partial pressure is available. The temperature and the oxygen partial pressure must be changed in consideration of oxidation of the electrode materials such as Ni and the dielectric ceramic materials. The temperature of heating the fired laminated structure is set at 600 °C in the embodiments as described after, however, the temperature is not limited to be such a temperature.

In the embodiments, the heating under a non-oxidative atmosphere and the heating under an oxidative atmosphere are explained to be done in the series offiring process, but it is possible that the heating are divided into two different processes.

In the embodiments, Zn is used as the external electrode, but Ni, Ag, and Cu are also available in consideration of the plating condition of the electrode. Firing the laminated structure and plating the external electrode can be done at the same time by coating the surface of non-sintered laminated structure with external electrode of Ni.

In this application, ceramic capacitors having laminated structures are described, however, the present inventions may be applied to general ceramic capacitors having one-layer structure.

### Example 1:

The first and fourth inventions will be supported here.

First, Sample No. 1 in the Table 3-d) is described.

### MAKING THE BASIC COMPONENT

Compounds in the Table 1 are weighed, poured into a pot mill with alumina balls and 2.5f of water, and stirred and mixed for 15 hours to obtain a material mixture.

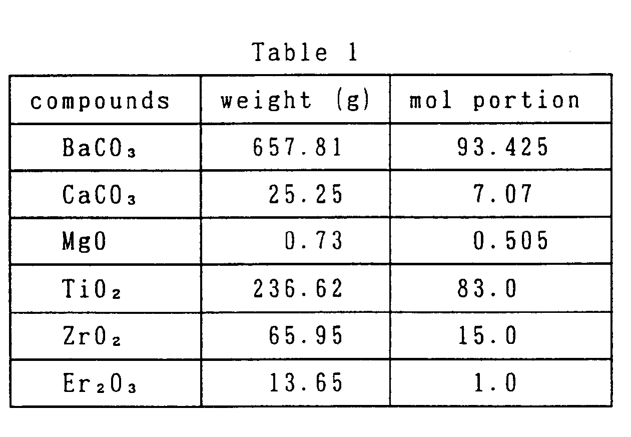

Here, values of the weight (g) of the compounds in Table 1 are calculated so as that the composition formula of the basic com_{D}onent: 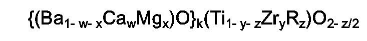 becomes:

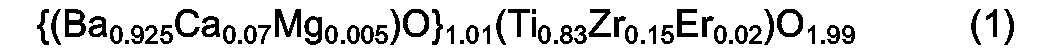

Next, the material mixture is poured into a stainless pot and dried for 4 hours at 150°C with using a hot blast drier. The dried material mixture is grinded roughly. The grinded material mixture is baked for 2 hours at 1200 °C in the air with using a tunnel furnace, and the powder of the basic component in the composition formula (1) can be obtained.

### MAKING THE ADDITIONAL COMPONENT

Compounds in Table 2 are weighed, added with 300 cc of alcohol, and stirred for 10 hours in a polyethylene pot with using aluminum balls to obtain a mixture.

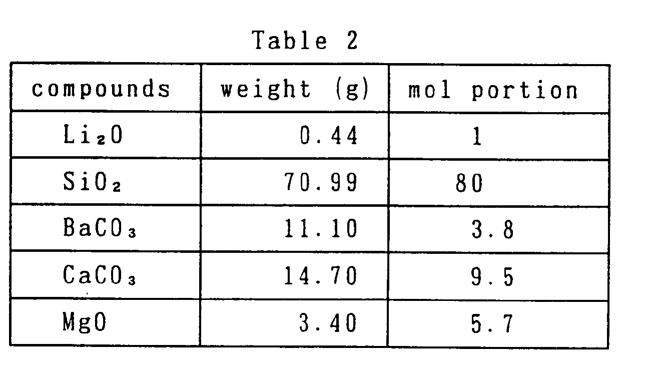

Here, values of the weight (g) of the compounds in Table 2 are calculated so as that the Li₂0 is 1 mol %, Si0₂ is 80 mol %, and MO is 19 mol % {BaO (3.8 mol %) + CaO (9.5 mol %) + MgO (5.7 mol %)}. The ratio among BaO, CaO and MgO in MO is that of 20 mol %, 50 mol % and 30 mol %, respectively.

Next, the mixture is baked for two hours at 1000°C in the air and is poured into an alumina pot with 300 cc of water and grinded for 15 hours with using alumina balls. Then, the grinded mixture is dried for 4 hours at 150 °C, and the powder of the additional component is obtained.

### MAKING SLURRY

2 weight portions (20 g) of the additional component is added to 100 weight portions (1000 g) of the basic component. Then, the mixture of the basic and additional components are added with 15 weight % of organic binder consisting of an aqueous solution of acryl acid ester polymer, glycerin and condensed phosphate and 50 weight % of water. Thus obtained mixture is poured into a ball mill, grinded and mixed to obtain slurry as dielectric ceramic material.

### MAKING NON-SINTERED CERAMIC SHEET

The slurry is poured into a vacuum foam remover to remove foam thereof, and then is poured into a reverse roll coater to form a molded thin sheet which is continuously laid on a long polyester film. The molded thin sheet is heated to 100 °C on the polyester film to dry, and a non-sintered ceramic sheet having a thickness of approximately 25 f..lm is obtained. The non-sintered ceramic sheet having a large length is cut to be a 10 cm square each to be used.

### MAKING AND PRINTING CONDUCTIVE PASTE

A mixture of 10 g of Ni powder having an average particle diameter of 1.5 µm and 0.9 g of ethylcellulose dissolved in 9.1 g of butylcarbitol is put in a stirrer and stirred for 10 hours, and the conductive paste for internal electrodes is obtained. Then, the conductive paste is printed on one surface of the non-sintered ceramic sheet through a screen having 50 patterns each of which is 14 mm in length and 7 mm in width, and is dried.

### LAMINATING THE NON-SINTERED CERAMIC SHEET

Two of the non-sintered ceramic sheets are laminated with facing the printed surfaces thereof upward so that the printed patterns of the upper sheet and those of the lower sheet are shifted each other by a half length of the longer side of one pattern. Then, four of the non-sintered sheets having a total thickness of 60 µm is laminated on each surface of the laminated sheets thus obtained by laminating the two single sheets.

### PRESSURE WELDING AND CUTTING THE LAMINATED SHEETS

The laminated sheets are pressure welded by applying a pressure of approximately 40 tons in the direction of the thickness at approximately 50°C. Then, the laminated sheets are cut to be lattices to obtain fifty laminated chips.

### FIRING THE LAMINATED CHIP

The laminated chip is put into a furnace in which an atmosphere firing can be carried out, and the temperature is increased by 100 °C/h to 600 °C in the atmosphere of the air to burn and remove the organic binder of the non-sintered ceramic sheet.

Then, the atmosphere of the furnace is changed from the atmosphere of the air to the reductive atmosphere of H₂ (2 volume %) + N₂ (98 volume %). The temperature is increased by 100 °C/h from 600°C to 1150°C with keeping the reducible atmosphere, and the highest temperature of 1150 °C is kept for 3 hours. After that, the temperature is decreased by 100 °C/h to 600 °C, and the reductive atmosphere is changed to the atmosphere of the air (the oxidative atmosphere), and the temperature of 600°C is kept for 30 minutes to oxidate the laminated chip. Finally, the temperature is decreased to the room temperature, and a laminated fired chip is obtained.

### FABRICATING EXTERNAL ELECTRODES

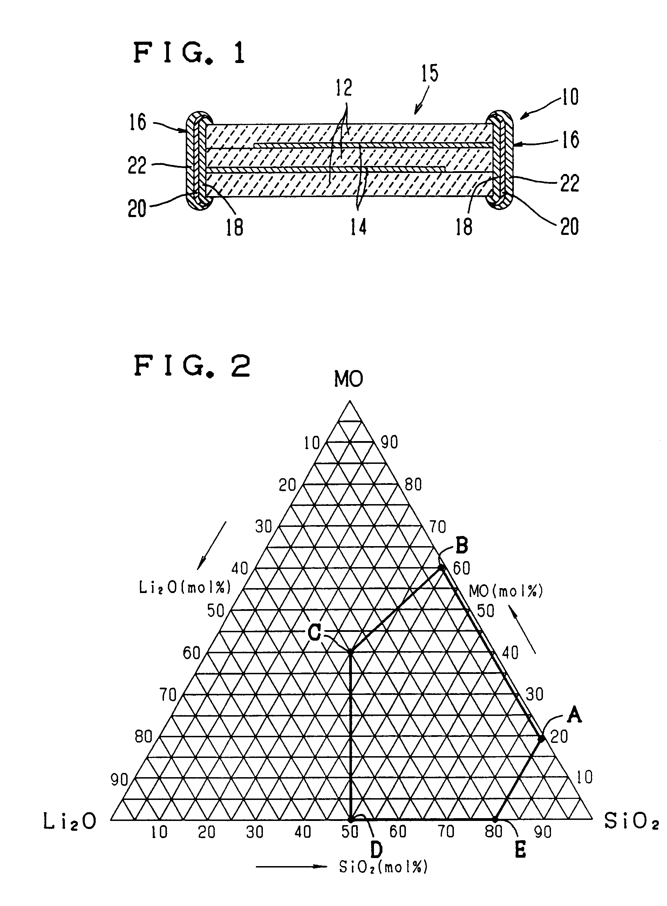

A pair of external electrodes are fabricated on the side where the laminated fired chips face each other and the edge of the internal electrodes is exposed. Thus, as shown in Fig. 1, the laminated ceramic capacitor 10 consists of a laminated fired chip 15 consisting of a 3-layer dielectric ceramic layer 12,12,12 and a 2-layer internal electrode 14,14 on which a pair of external electrodes 16,16 are formed.

The conductive paste consisting of zinc, glass frit and vehicle is coated on the side surfaces of the laminated fired chip in which the internal electrodes are exposed to the outside, and is dried. Then, the chip is burned for 15 minutes at 550°C in the air to form a zinc electrode 18. Copper layer 20 is formed on the zinc electrode 18 by non-electrolytic plating, and Pb-Sn solder layer 22 is formed on the copper layer 20 by electric plating. Thus, a pair of external electrodes 16 are fabricated.

A thickness of the dielectric ceramic layer 12 in the laminated ceramic capacitor 10 is 0.02 mm, and a facing area of a pair of the internal electrodes 14 is 5 mm x 5 mm = 25 mm². And, the composition of the dielectric ceramic layer 12 after being sintered is substantially the same as the mixed composition of the basic and additional component before experiencing a sintering.

### MEASUREMENTS OF ELECTRIC CHARACTERISTICS

The measurements of electric characteristics of the laminated ceramic capacitor 10 were carried out. The results of the measurement, shown in Table 4-① , are that a dielectric constant sₛ is 14700, tan δ is 1.3 %, a resistivity p is 3. 46 x 10⁶ M Ω.cm.

The measurements of the electric characteristics are carried out in accordance with the process as shown below.
(A) The dielectric constant sₛ is calculated by values of the capacitance measured on conditions of a temperature at 20 °C, a frequency 1 kHz, a voltage (effective value) 1.0 V, a facing area 25 mm² of the pair of the internal electrodes 14,14 and a thickness 0.02 mm of the dielectric ceramic layer 12 between the pair of the internal electrodes 14,14.
(B) The dielectric loss (tan 8) (%) is measured on the same conditions as in the measurement of the dielectric constants, as shown above.
(C) The resistivity p (M Ω.cm) is calculated by values of resistance between the pair of the external electrodes 16,16 measured after applying DC 100 V at 20 °C for 1 minute, and the size thereof.

The method for making Sample No. 1 and the characteristics thereof have been described as shown above. As for Samples No. 2 to 100, laminated ceramic capacitors are fabricated by the same method as that of Sample No. 1, except that the compositions of the basic component are varied as shown in ① to ⑥ of Table 3, the compositions of the additional component are varied as shown in ① to ⑥ of Table 4, and the temperatures of firing are varied as shown in ① to ⑥ of Table 4. Then, the electric characteristics are measured on the same conditions as those in the measurement of Sample No. 1. The temperatures of firing and the electric characteristics of Samples No. 1 to 100 are shown in ① to ⑥ of Table 4.

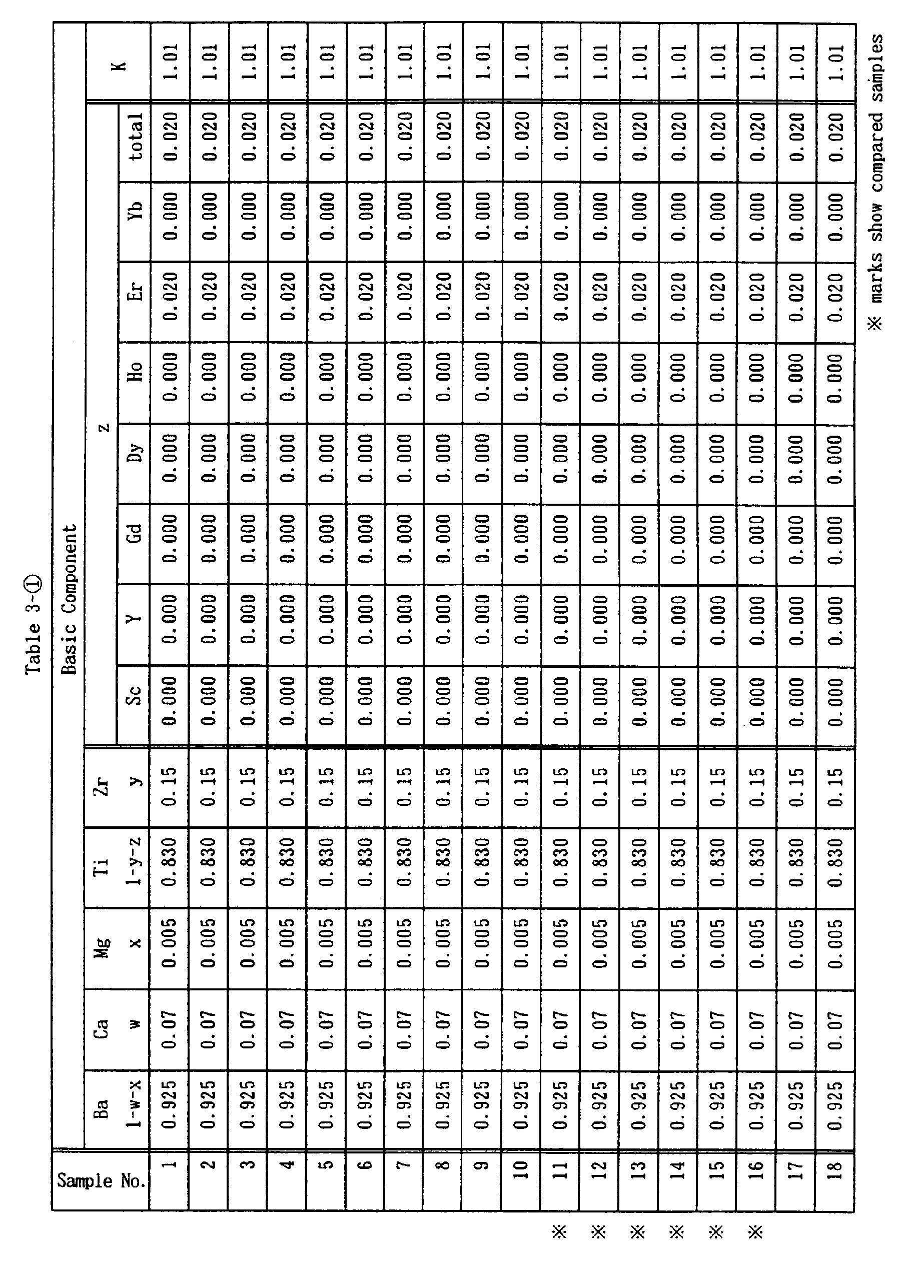

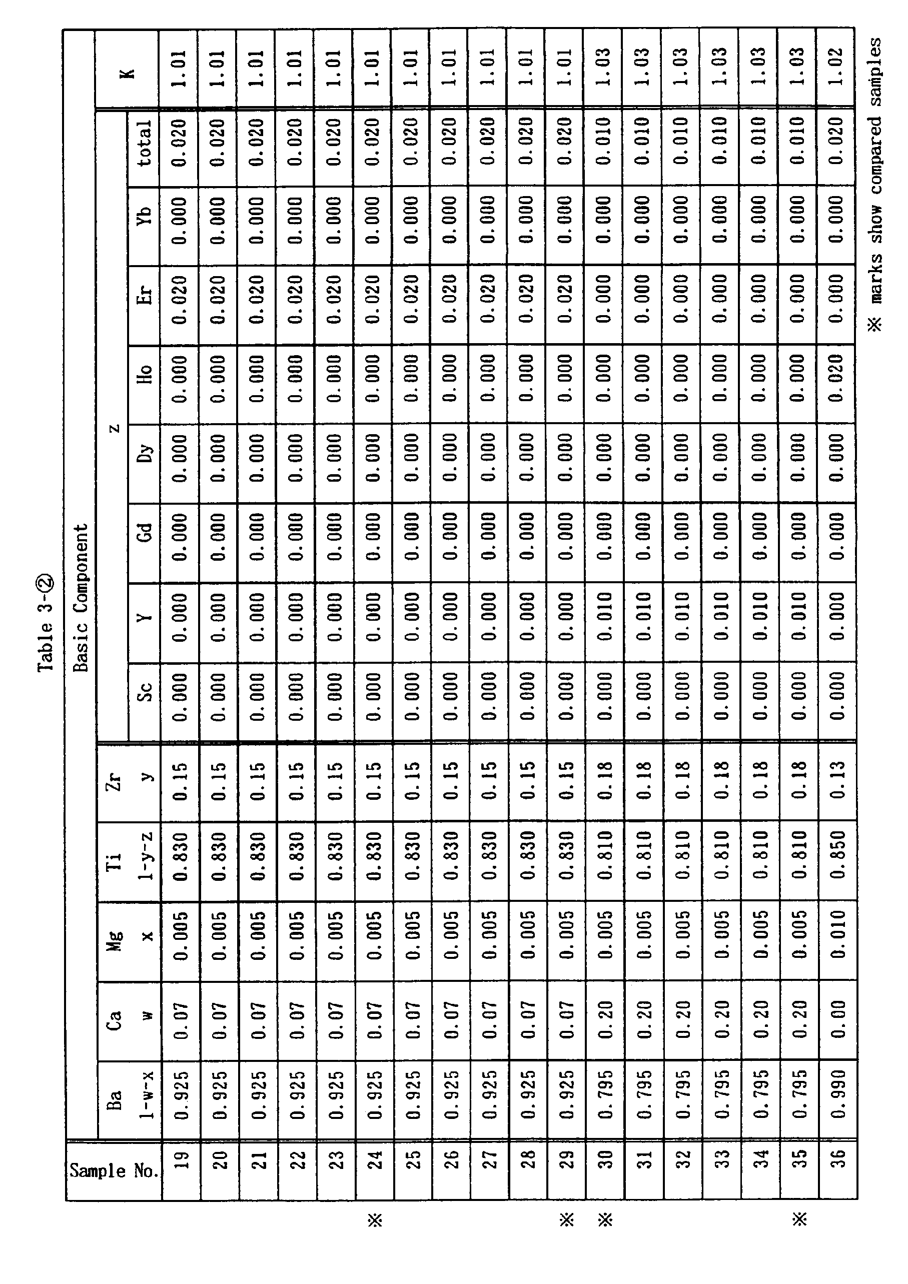

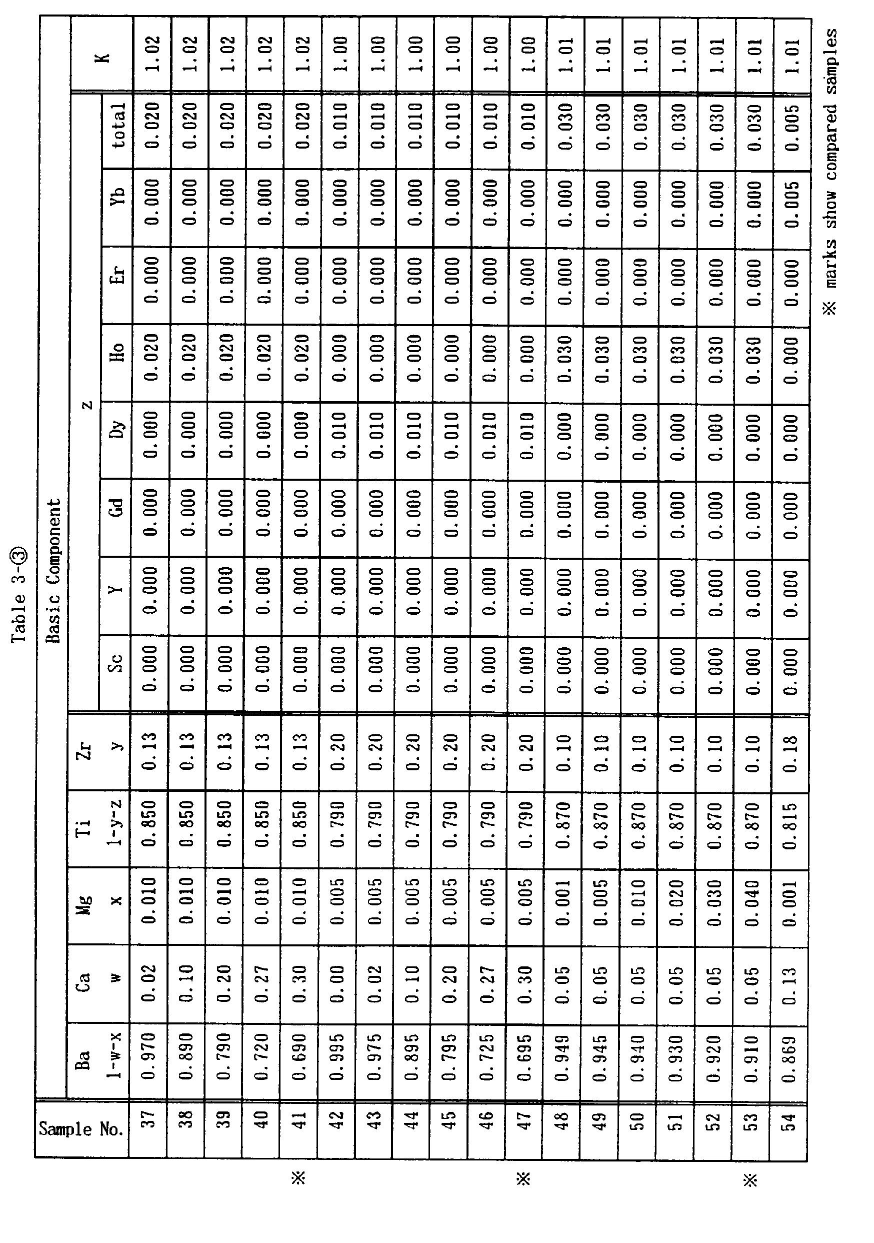

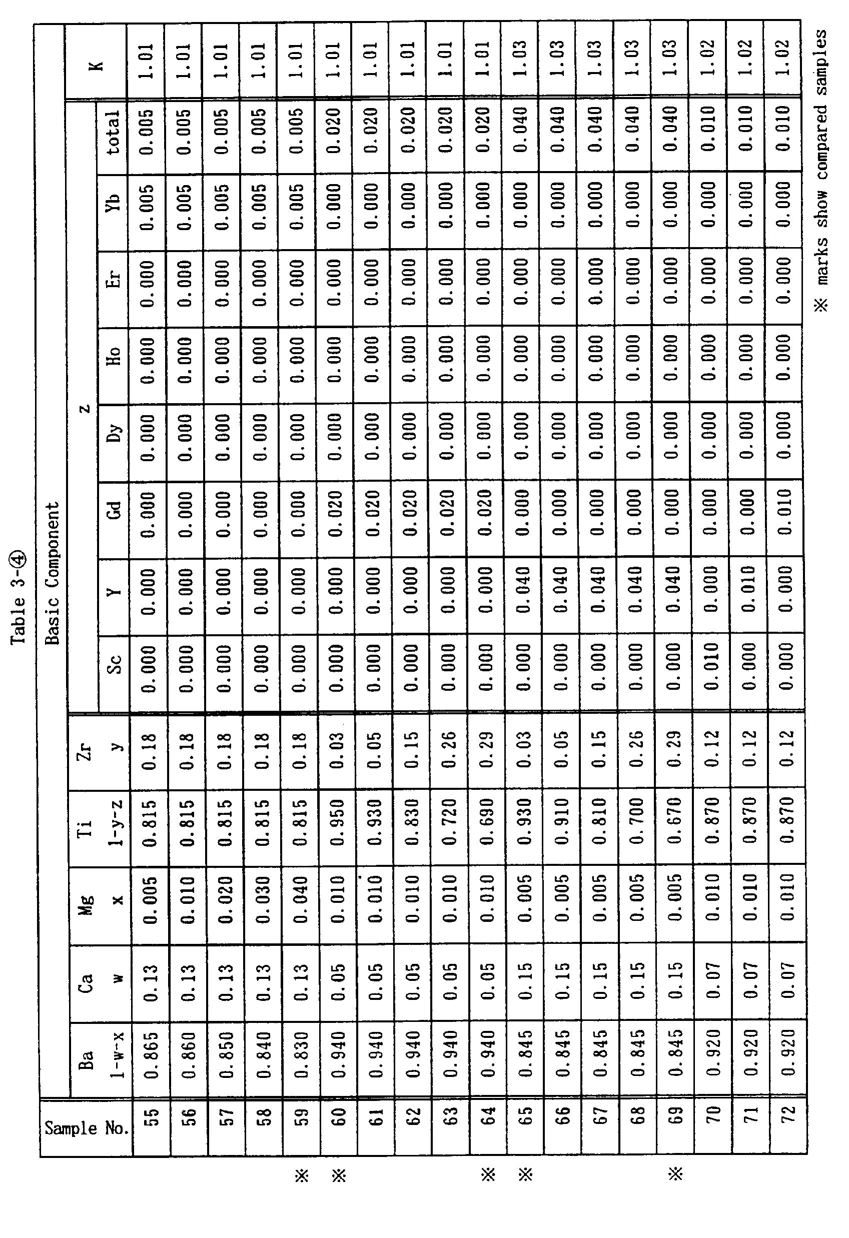

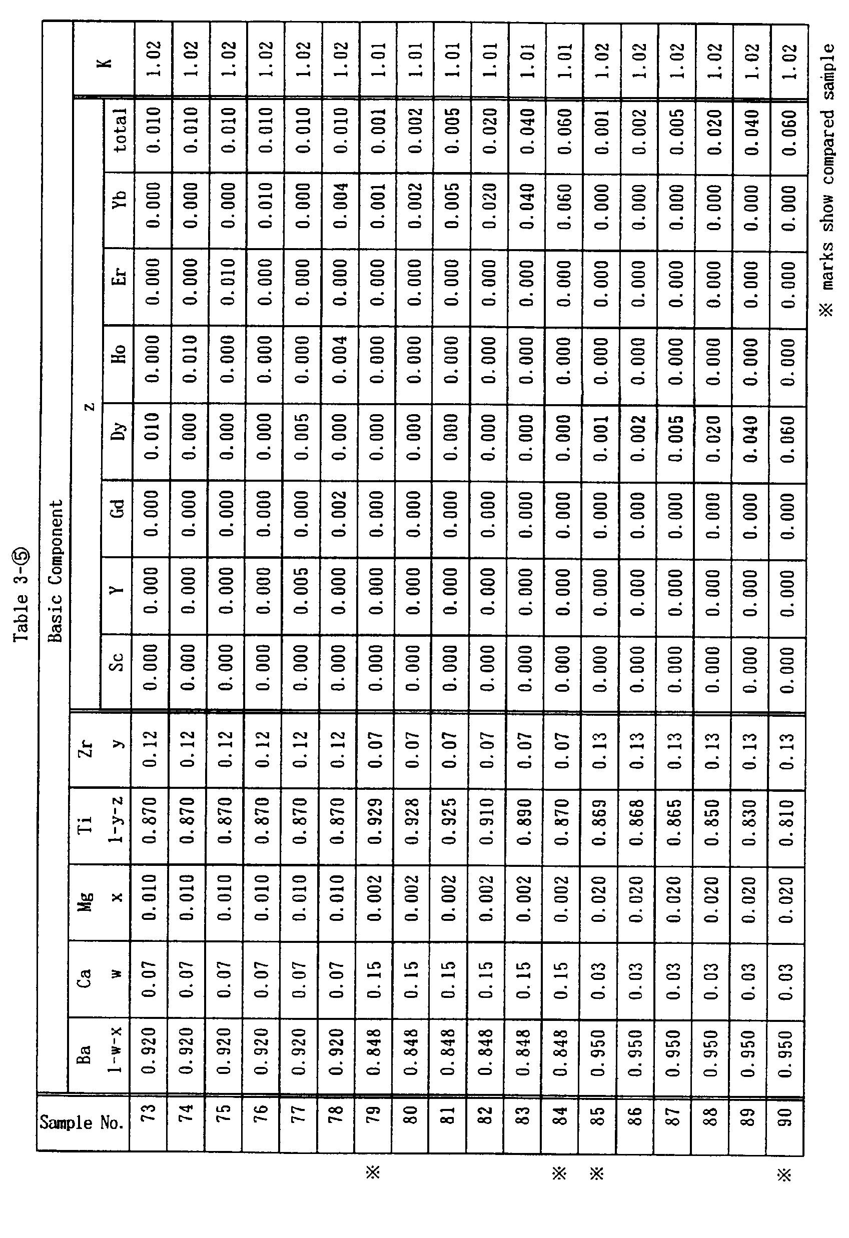

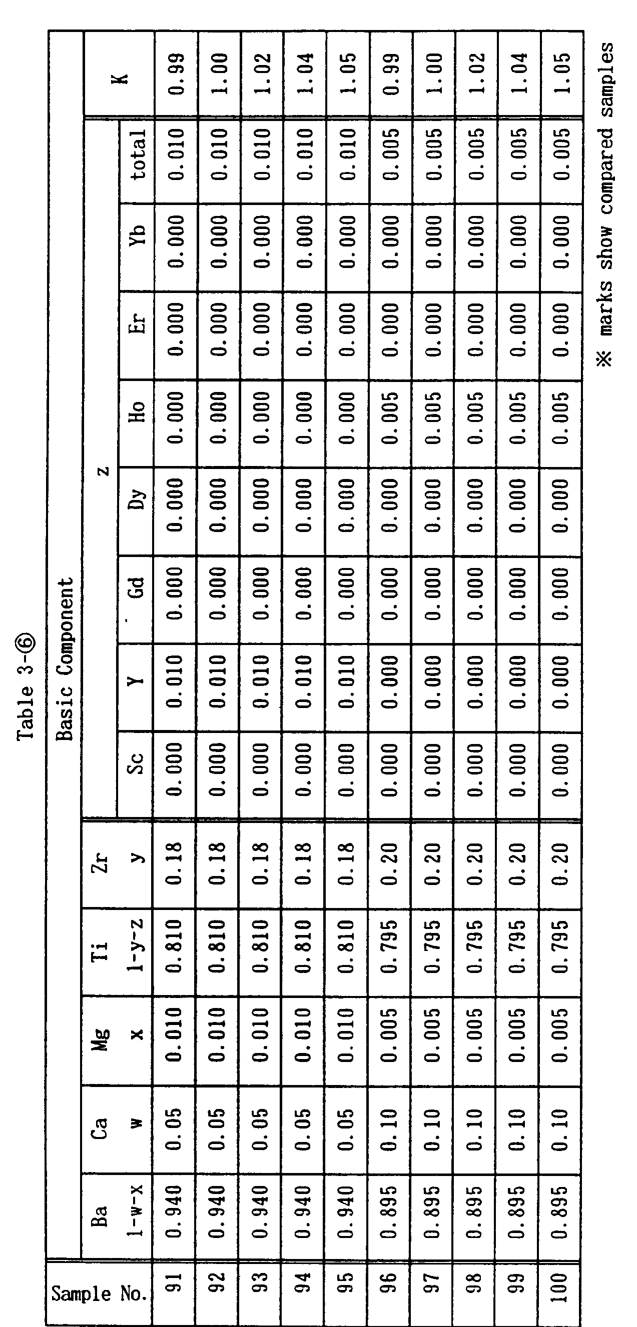

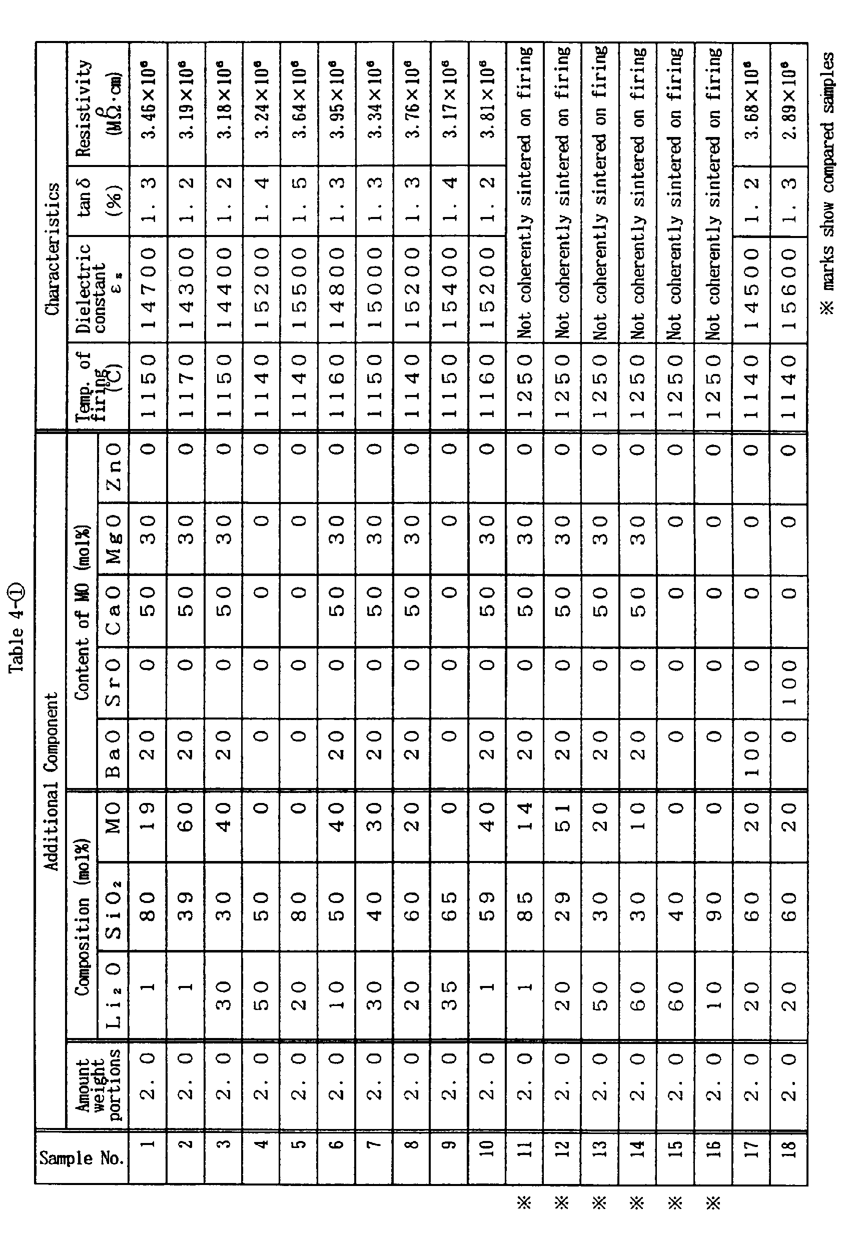

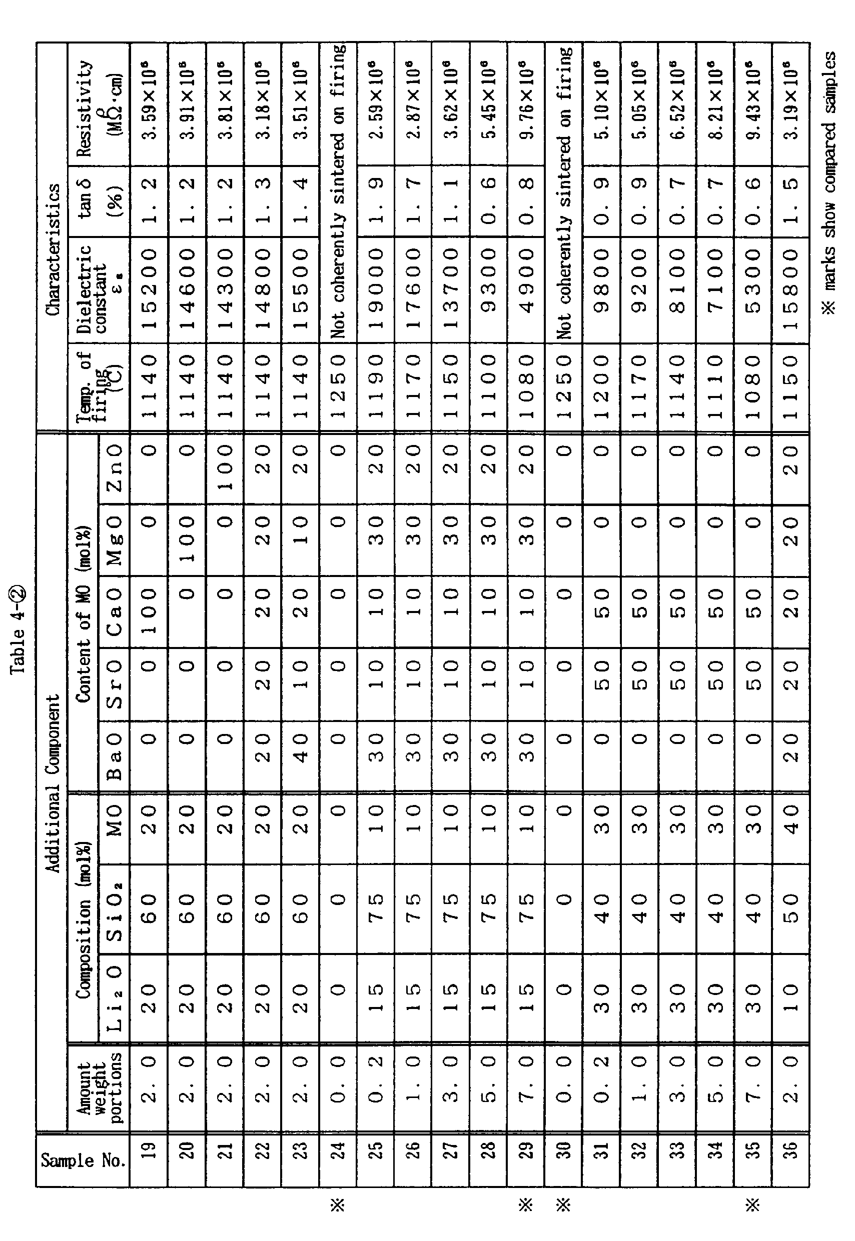

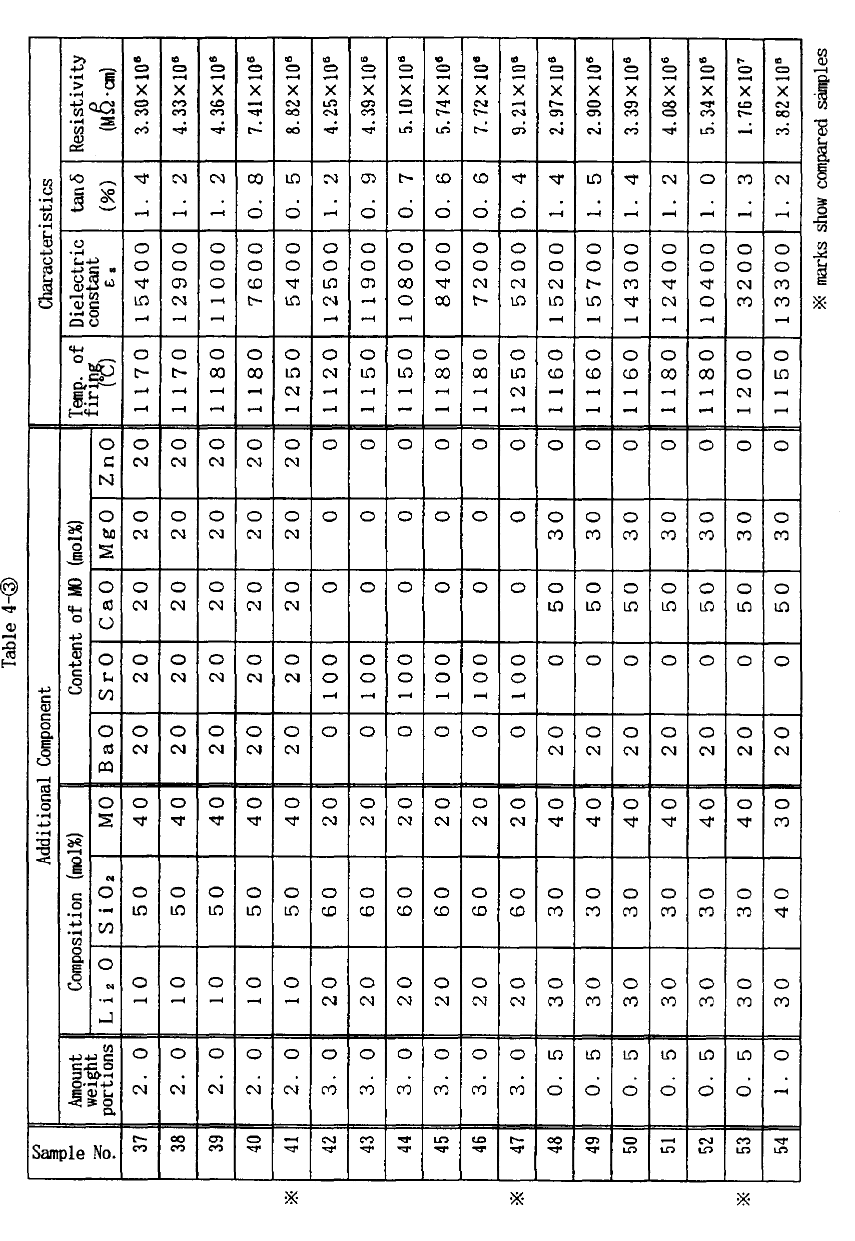

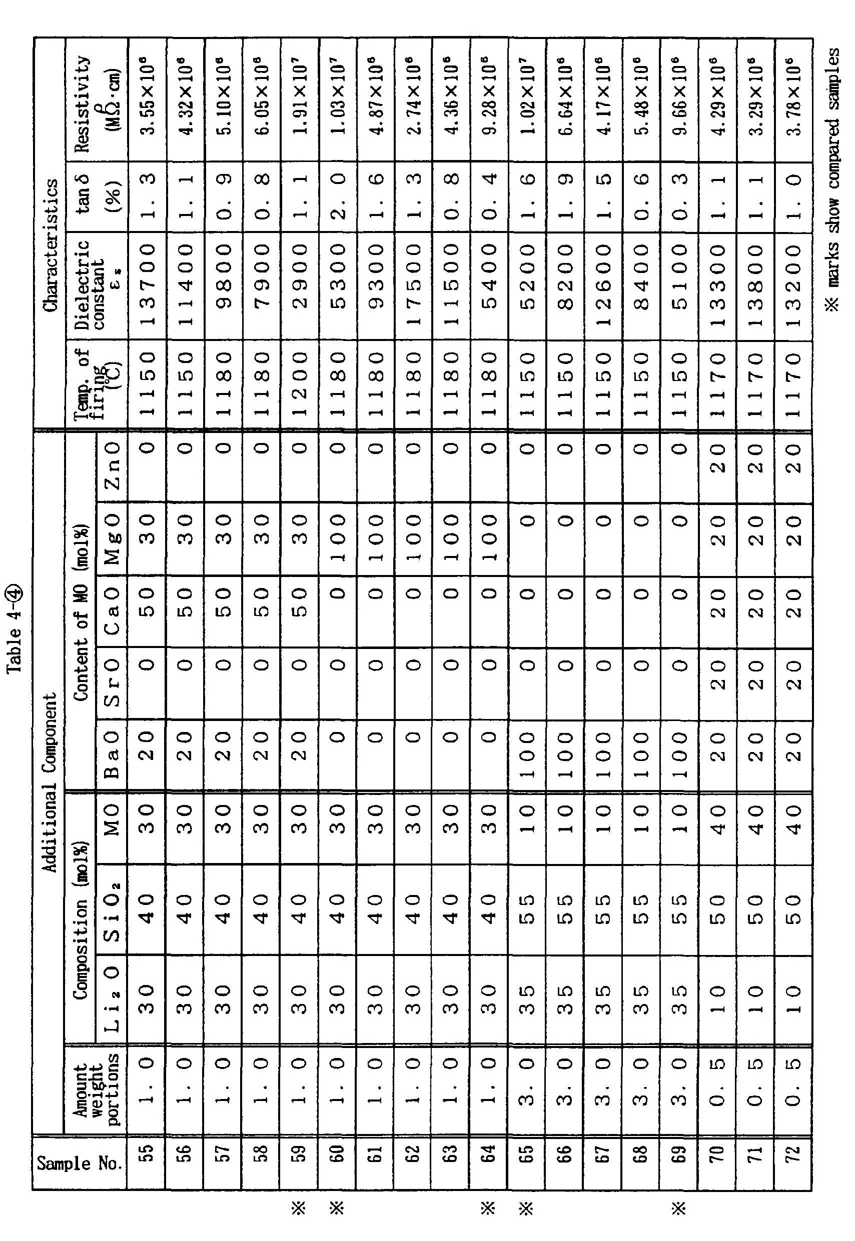

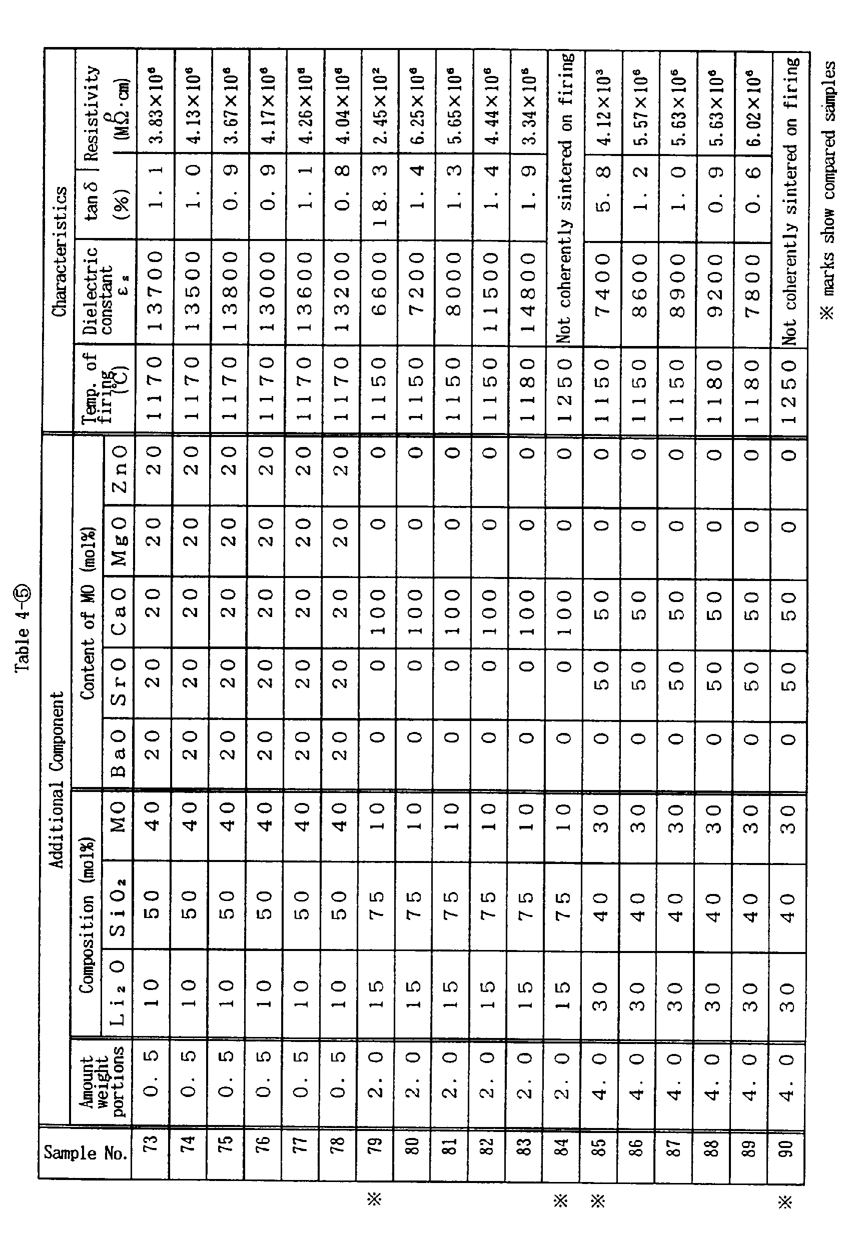

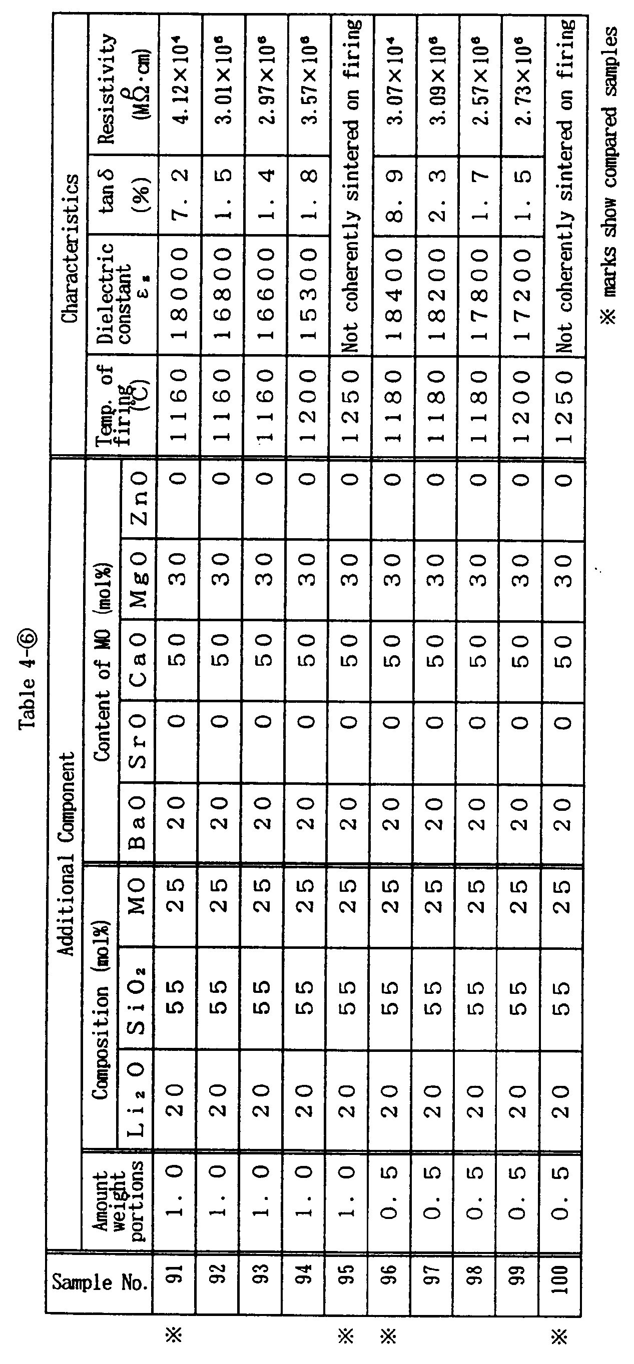

In ① to ⑥ of Table 3, the column 1-w-x shows the ratio of atoms of Ba in the composition formula of the basic component, the column w shows that of Ca, x shows that of Mg, 1-y-z shows that of Ti, and y shows that ofZr.

The column z shows the ratio of atoms of R in the composition formula of the basic component, and k shows that of {(Ba_{1- w- x} Ca_{w} Mgₓ) O}. Sc, Y, Gd, Dy, Ho, Er and Yb of the column z are the contents of R in the composition formula of the basic component, and each column of the elements shows the ratio of atoms thereof, and the column of the total shows the ratio of total numerals of the atoms (value z).

In ① to ⑥ of Table 4, the added amount of the additional component is represented by weight portions in the 100 weight portions of the basic component. The contents of the column MO represent the ratio among BaO, SrO, CaO, MgO and ZnO by mol %.

The experiments with the Samples Nos. 1 to 23 show the proper range of the glass in the additional component, the experiments with the Samples Nos. 24 to 35 show the proper range of the added amount of the glass, the experiments with the Samples Nos. 36 to 47 show the proper range of the value w representing the ratio of Ca, the experiments with the Samples Nos. 48 to 59 show the proper range of the value x representing that of Mg, the experiments with the Samples Nos. 60 to 69 show the proper range of the value y representing that of Zr, the experiments with the Samples Nos. 70 to 78 show how the contents of R influences, the experiments with the Samples Nos. 79 to 90 show the proper range of the value z representing the ratio of R, and the experiments with the Samples Nos. 91 to 100 show the proper range of the value k representing that of {(Ba_{1- w- x}Ca_{w}Mgₓ)O}.

It is clear by ① to ⑥ of Table 3 and ① to ⑥ of Table 4 that, in the samples according to the invention, by firing the samples in a non-oxidative atmosphere at a temperature up to 1200°C, the ceramic capacitor having desired electric characteristics can be obtained, in which a dielectric constants, at least 7000, a dielectric loss (tan 8) up to 2.5 %, a resistivity p at least 1 x 10⁶ MQ.cm.

On the other hand, the ceramic capacitor having desired electric characteristics cannot be obtained by the Samples Nos. 11 to 16, 24, 29, 30, 35, 41, 47, 53, 59, 60, 64, 65, 69, 79, 84, 85, 90, 91, 95, 96 and 100. Accordingly, the Samples mentioned above are out of the range of the invention.

Next, the proper composition range of the dielectric ceramic material according to the invention will be described in conjunction with the results of the experiments shown in ① to ⑥ of Table 3 and ① to ⑥ of Table 4.

First, the proper range of the value w representing the ratio of atoms of Ca in the composition formula of the basic component will be described.

A dielectric sintered ceramic composition having desired electric characteristics can be obtained, if the value w is 0.27 shown in the Samples Nos. 40 and 46. However, if the value w is 0.30 shown in the Samples Nos. 41 and 47, firing temperature is high up to 1250 °C and a dielectric constant sₛ is smaller than 7000. Accordingly, the upper limit of w is 0.27.

Ca is added in order to make the temperature characteristics flat and to improve the resistivity p. However, a dielectric ceramic material having desired electric characteristics can be obtained even if w is 0. Accordingly, the lower limit ofw is 0.

The proper range of value x representing the ratio of atoms of Mg in the composition formula of the basic component will be described.

A dielectric ceramic composition having desired electric characteristics can be obtained if the value x is 0.03 shown in the Samples Nos. 52 and 58. However, if the value x is 0.04 shown in the samples Nos. 53 and 59, a dielectric constant sₛ goes down rapidly to smaller than 7000. Accordingly, the upper limit of x is 0.03.

Mg can shift the Curie point to lower temperature, make the temperature characteristics flat and improve the resistivity p. There is observed a significant effect if x is smaller than 0.03 even in the vicinity of 0, but it is desirable that x is 0.001 or more because the electric characteristics cannot be the same in the case of mass-production.

The proper range of value y representing the ratio of atoms of Zr in the composition formula of the basic component will be described.

A dielectric ceramic composition having desired electric characteristics can be obtained if y is 0.05 shown in the Samples Nos. 61 and 66. However, if y is 0.03 shown in the Samples Nos. 60 and 65, a dielectric constant sₛ is smaller than 7000. Accordingly, the lowest limit of y is 0.05.

On the other hand, a dielectric ceramic composition having desired electric characteristics can be obtained if y is 0.26 shown in the Samples Nos. 63 and 68. However, if y is 0.29 shown in the Samples Nos. 64 and 69, a dielectric constant sₛ is smaller than 7000. Accordingly, the upper limit of y is 0.26.

The proper range of value z representing the ratio of atoms of R in the composition formula in the basic component.

Adielectric ceramic composition having desired electric characteristics can be obtained if z is 0.002 shown in the Samples Nos. 80 and 86. However, if z is 0.001 shown in the Samples Nos. 79 and 85, the dielectric loss (tan 8) goes sharply worse and the resistivity p is smaller than 1 x 10⁴ MΩ.cm. Accordingly, the lowest limit of z is 0.002.

On the other hand, a dielectric ceramic composition having desired electric characteristics can be obtained if z is 0.04 shown in the Samples Nos. 83 and 89. However, if z is 0.06 shown in the Samples Nos. 84 and 90, a dense sintered material cannot be obtained even if the firing temperature is 1250 °C. Accordingly, the upper limit of z is 0.04.

Sc, Y, Dy, Ho, Er and Yb of the R component work almost the same function, so that any one or more than one of them can be used. Tb, Tm and Lu of the R component are not mentioned in ① to ⑥ in Table 3. However, they have the same effect as other elements in the R component.

The proper range of value k representing the ratio of {(Ba_{1-w-x}Ca_{w}Mgₓ)O} in the composition formula of the basic component will be described.

A dielectric ceramic composition having desired electric characteristics can be obtained if k is 1.00 shown in the Samples Nos. 92 and 97. However, if k is 0.99 shown in the Samples Nos. 91 and 96, the resistivity p becomes smaller than 1 x 10⁶ MΩ.cm and tan δ gets worse. Accordingly, the lowest limit of k is 1.00.

On the other hand, a dielectric ceramic composition having desired electric characteristics can be obtained if k is 1.04 shown in the Samples Nos. 94 and 99. However, a dense sintered material cannot be obtained if k is 1.05 shown in the Samples Nos. 95 and 100. Accordingly, the upper limit of k is 1.04.

Next, the proper range of the amount of the additional component will be described.

A dielectric ceramic composition having desired electric characteristics can be obtained if the amount of the additional component added is 0.2 weight portions in 100 weight portions of the basic component by firing at a temperature in the range of 1190 °C to 1200°C as shown in the Samples Nos. 25 and 31, however, a dense sintered material cannot be obtained if the amount of the additional component is 0 even if the firing temperature is 1250 °C as shown in the Samples Nos. 24 and 30. Therefore, the lower limit of the amount of the additional component is 0.2 weight portions in 100 weight portions of the basic component.

A dielectric ceramic composition having desired electric characteristics can be obtained if the amount of the additional component added is 5 weight portions in 100 weight portions of the basic component as shown in the Samples Nos. 28 and 34, however, the dielectric constant sₛ becomes smaller than 7000 if the amount of the additional component is 7 as shown in the Samples Nos. 29 and 35. Therefore, the upper limit of the amount of the additional component is 5 weight portions.

Next, the desired composition ratio of the additional component will be described.

The desired composition ratio in the additional component can be determined by the ternary system diagram in Fig. 2 showing the ratio of the components of Li₂0-Si0₂-MO.

In Fig. 2 of the ternary system diagram, the first vertex A represents the composition of the Sample No. 1 in which Li₂0 is 1 mol %, Si0₂ is 80 mol % and MO is 19 mol %, the second vertex B represents the composition of the Sample No. 2 in which Li₂0 is 1 mol %, Si0₂ is 39 mol %and MO is 60 mol %, the third vertex C represents the composition of the Sample No. 3 in which Li₂0 is 30 mol %, Si0₂ is 30 mol % and MO is 40 mol %, the fourth vertex D represents the composition of the Sample No. 4 in which Li₂0 is 50 mol %, Si0₂ is 50 mol % and MO is 0 mol %, and the fifth vertex E represents the composition of the Sample No. 5 in which Li₂0 is 20 mol %, Si0₂ is 80 mol % and MO is 0 mol %.

The composition ratio in the additional component is desired to be within the area profiled by a polygonal line connecting the first to fifth vertexes of A to E in turn in Fig. 2 of the ternary system diagram. A dielectric ceramic composition having desired electric characteristics can be obtained if the composition ratio of the additional component is within the area described above, however, a dense sintered material cannot be obtained if the composition ratio is out of the area as shown in the Samples Nos. 11 to 16.

MO component may be one of metal oxides selected from a group consisting of BaO, SrO, CaO, MgO and ZnO as like in the Samples Nos. 17 to 21, or more than one of them blended in adequate ratio as like in other samples.

### Example 2:

The second and fifth inventions will be supported here.

First, Sample No. 101 in the Table 6- ①and 7-① is described.

In this example, the laminated chip is made in the same way as Example 1 except for the material compounds of the additional component, which are shown in Table 5.

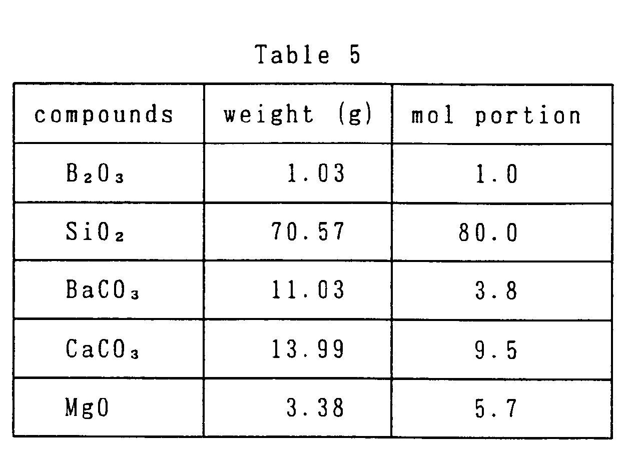

Here, values of the weight (g) of the compounds in Table 5 are calculated so as that the B₂0₃ is 1 mol %, Si0₂ is 80 mol %, and MO is 19 mol % {BaO (3.8 mol %) + CaO (9.5 mol %) + MgO (5.7 mol %)}. The ratio among BaO, CaO and MgO in MO is that of 20 mol %, 50 mol % and 30 mol %, respectively.

The laminated chip obtained in this example is put into a furnace in which an atmosphere firing can be carried out, and the temperature is increased by 100°C/h to 600°C in the atmosphere of the air to burn and remove the organic binder of the non-sintered ceramic sheet.

Then, the atmosphere of the furnace is changed from the atmosphere of the air to the reductive atmosphere of H₂ (2 volume %) + N₂ (98 volume %). The temperature is increased by 100°C/h from 600 °C to 1170°C with keeping the reductive atmosphere, and the highest temperature of 1170°C is kept for 3 hours. After that, the temperature is decreased by 100 °C/h to 600 °C, and the reductive atmosphere is changed to the atmosphere of the air (the oxidative atmosphere), and the temperature of 600 °C is kept for 30 minutes to oxidate the laminated chip. Finally, the temperature is decreased to the room temperature, and a laminated fired chip is obtained.

The external electrodes are fabricated on the laminated fired chip in the same way as Example 1 and the measurements of electric characteristics are carried out in the same way as Example 1. The results of the measurement, shown in Table 7- ①, are that a dielectric constant sₛ is 14300, tan δ is 1.3 %, a resistivity p is 3.99 x 106 MΩ.cm.

The method for making the Sample No. 101 and the characteristics thereof have been described as shown above. As for the Samples Nos. 102 to No. 196, laminated ceramic capacitors are fabricated by the same method and the electric characteristics are measured on the same condition as that of the Sample No. 101, except that the compositions of the basic component are varied as shown in ① to ⑥ of Table 6, the compositions of the additional component and the temperatures of firing are varied as shown in ① to ⑥ of Table 7. The temperatures of firing and the electric characteristics of the Samples Nos. 101 to 196 are shown in ① to ⑥ of Table 7.

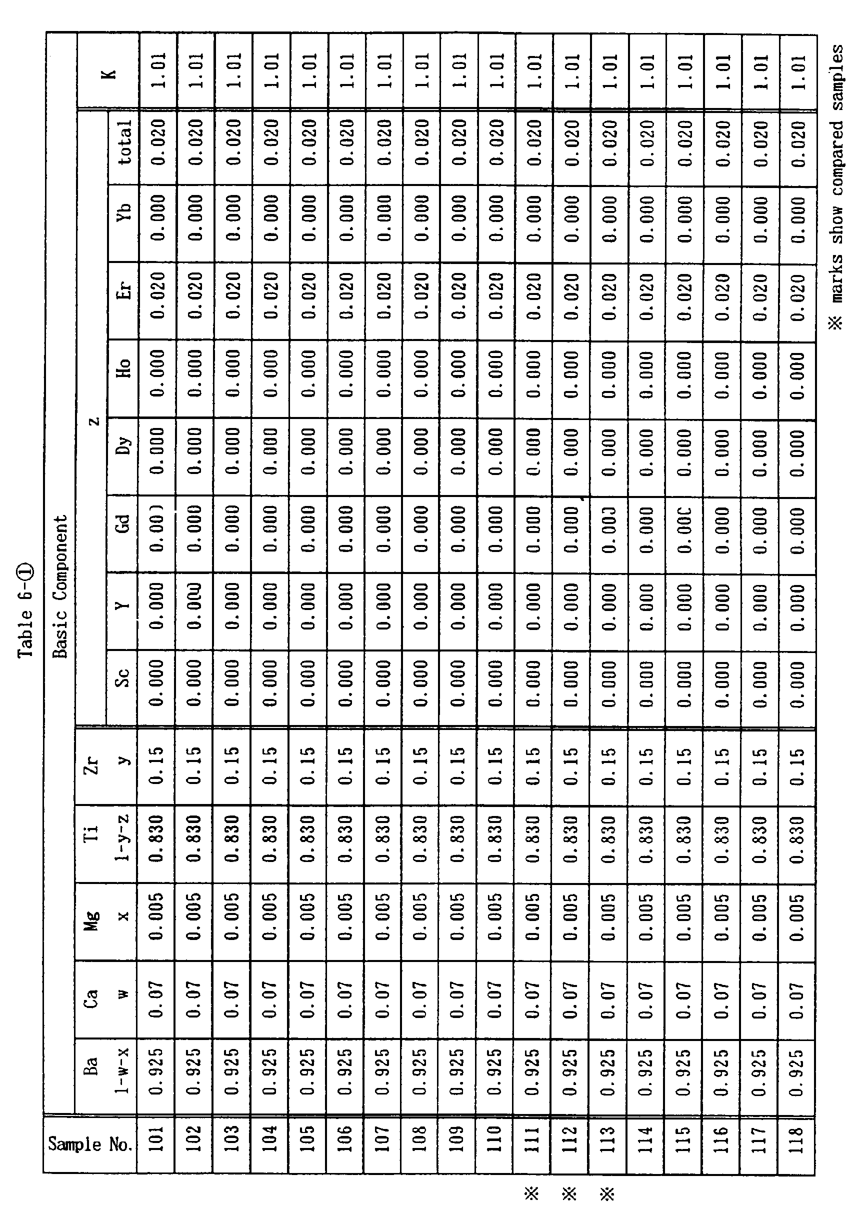

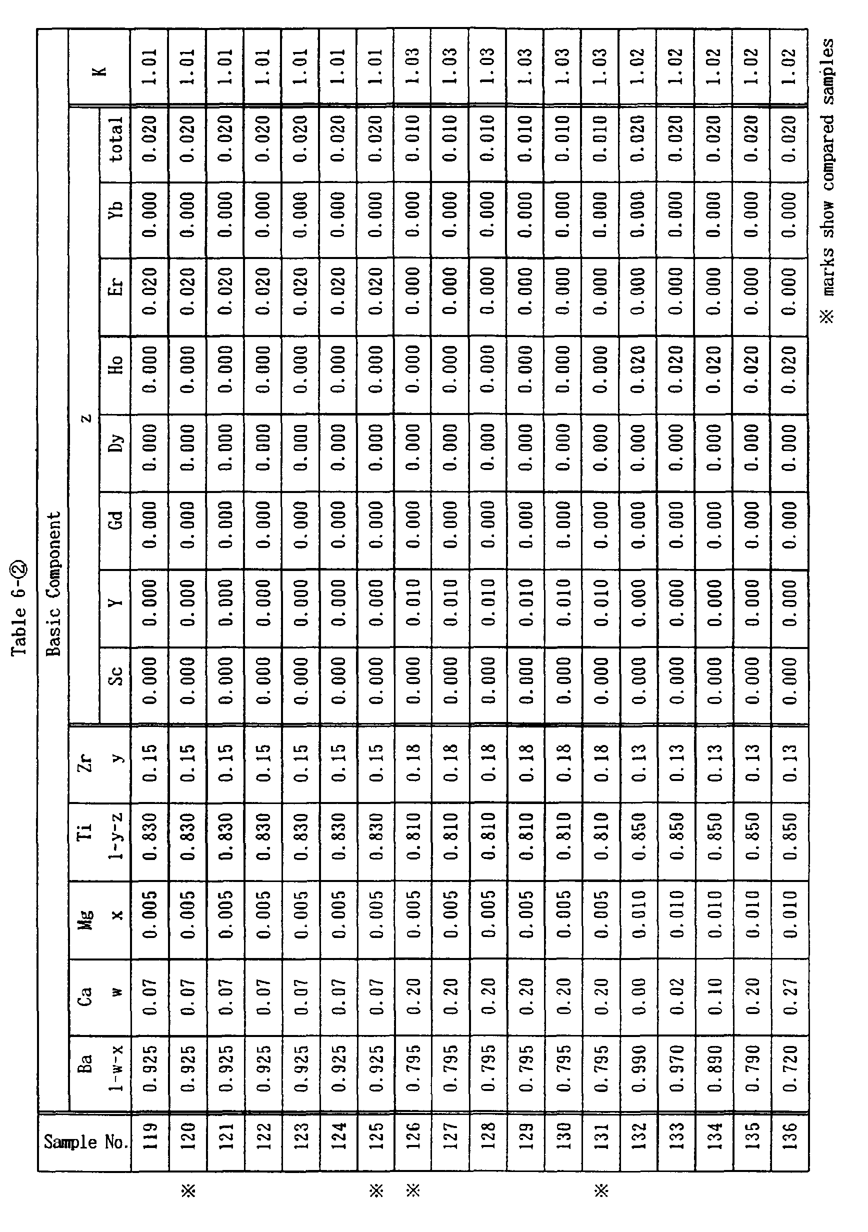

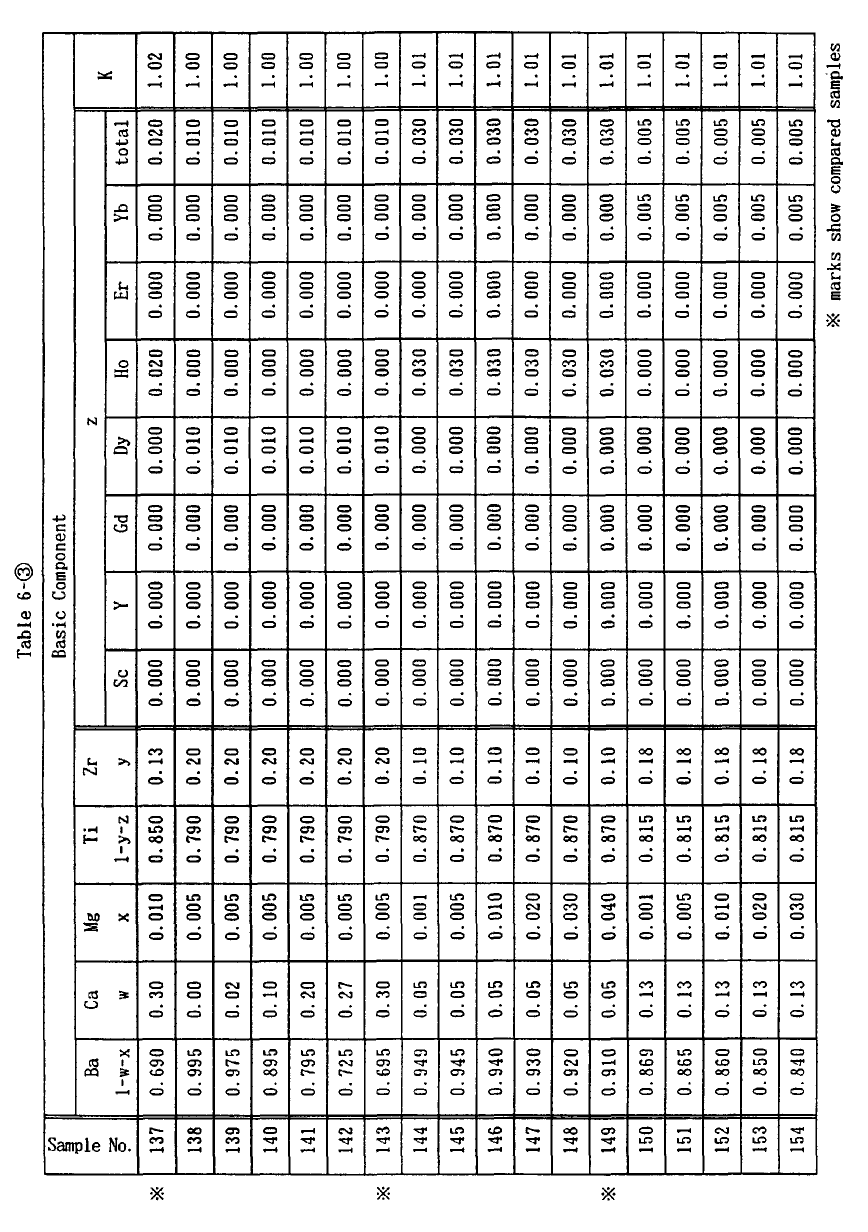

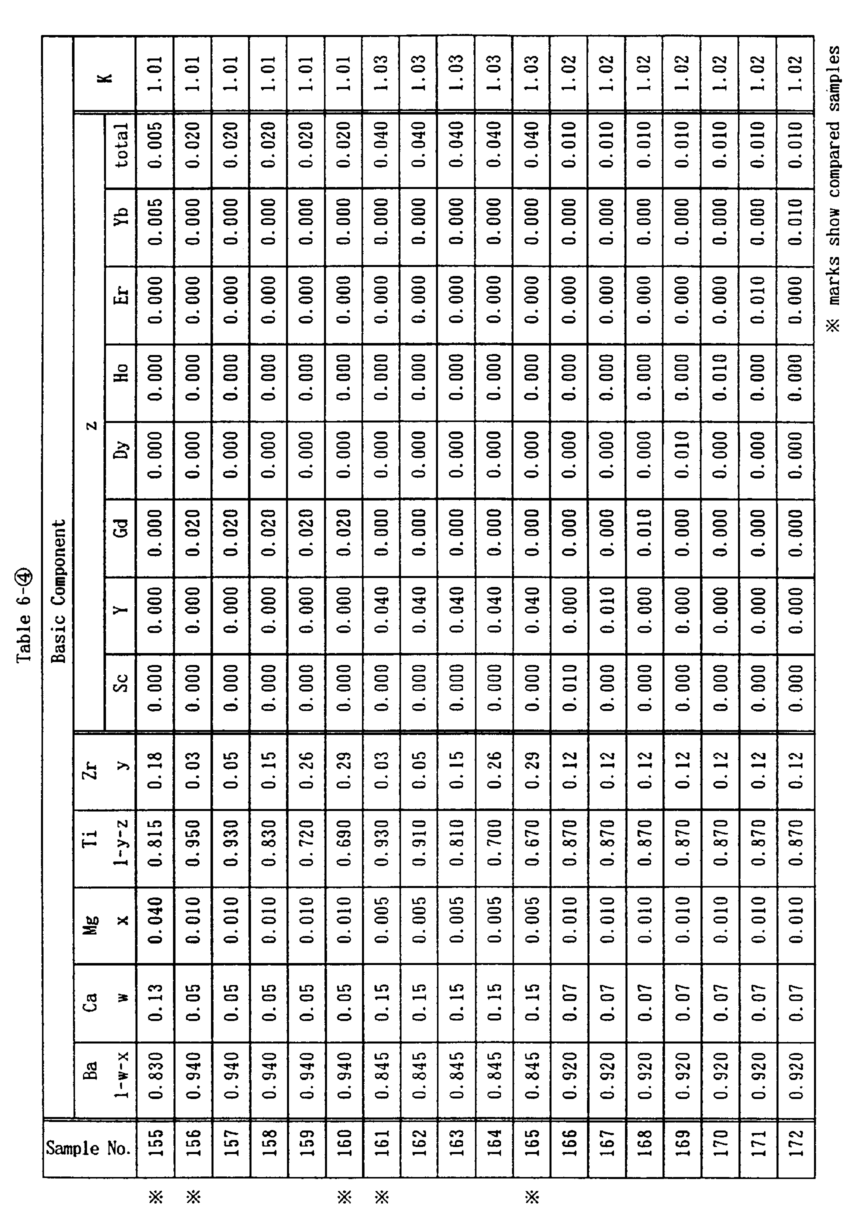

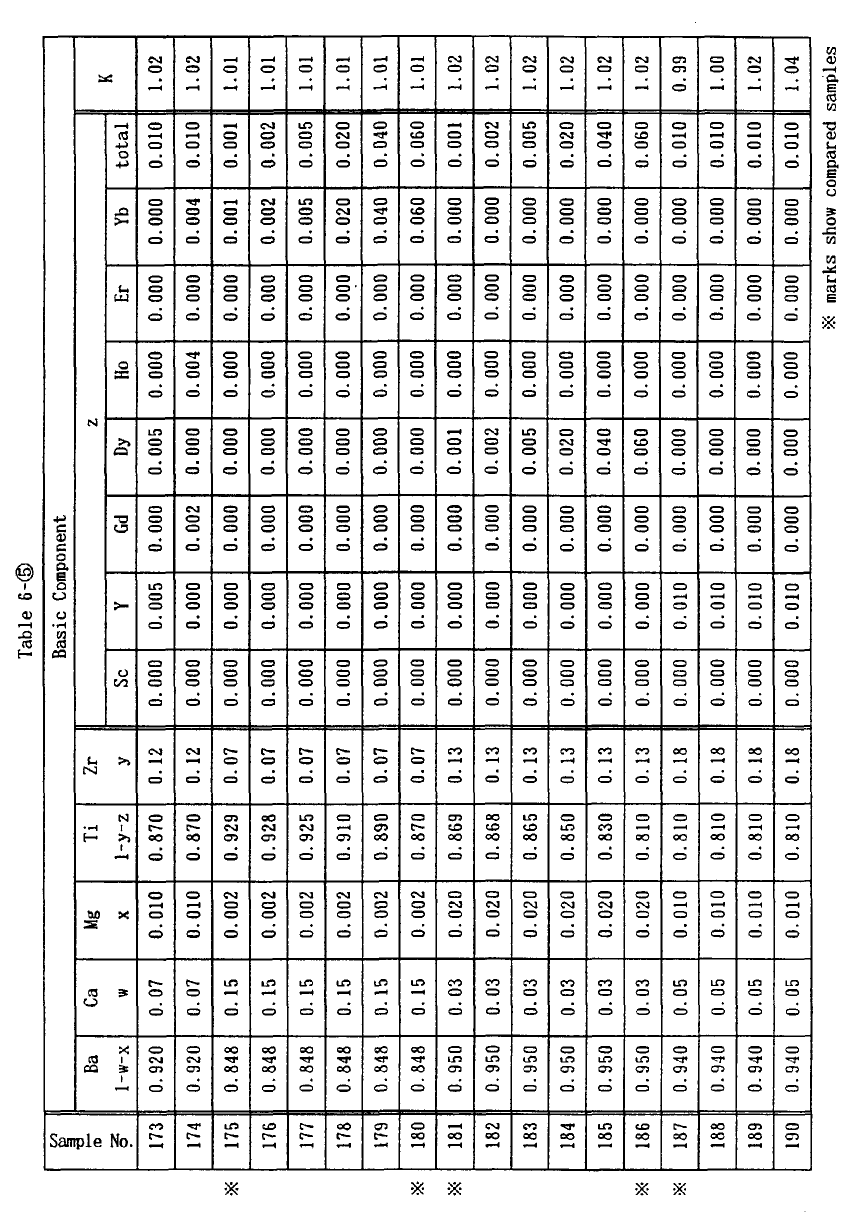

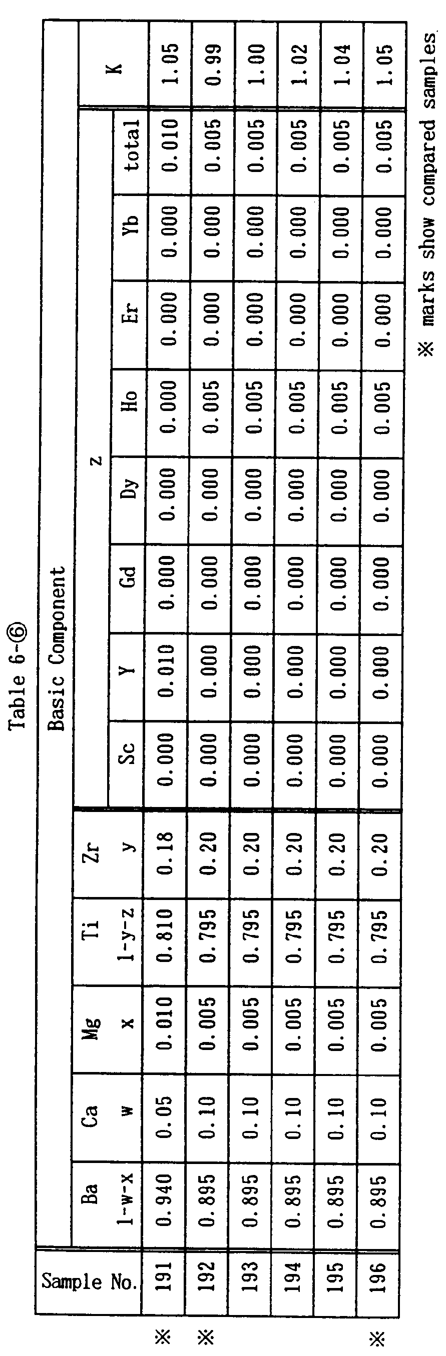

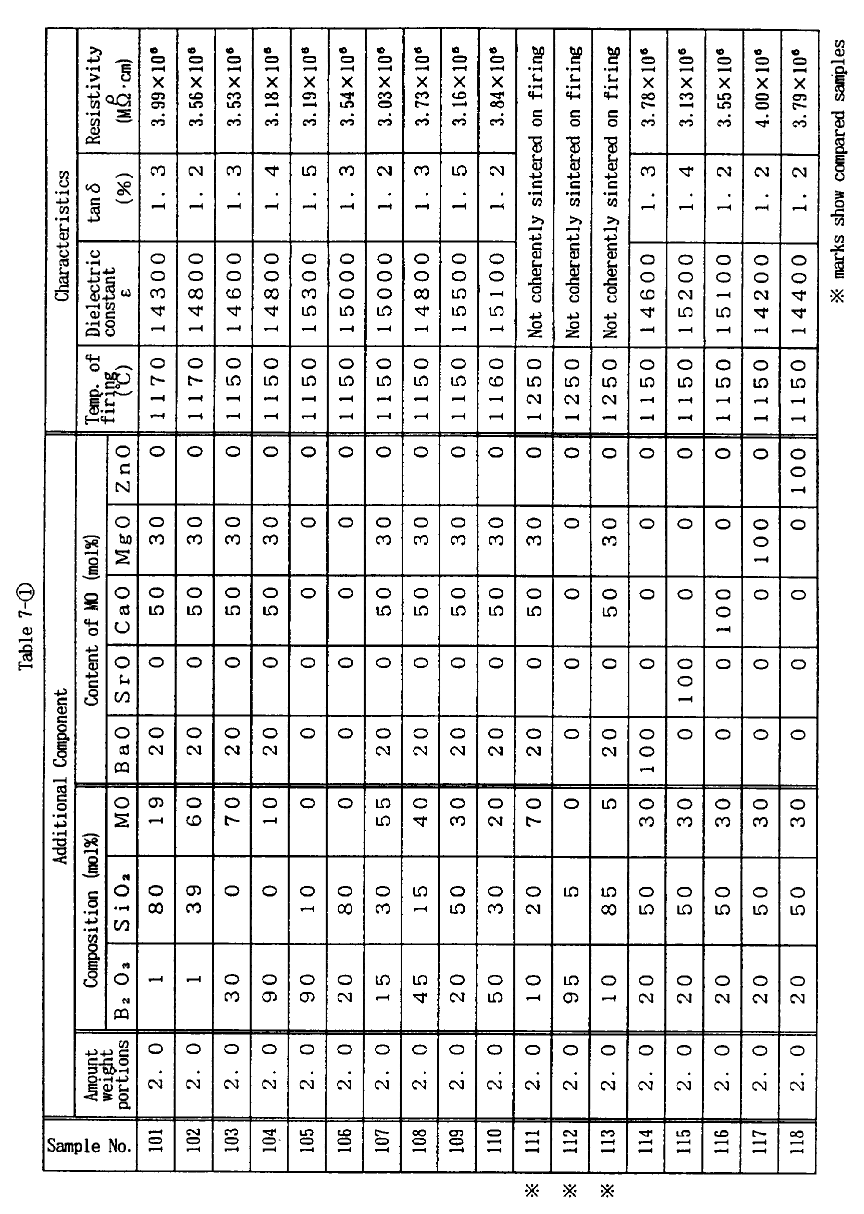

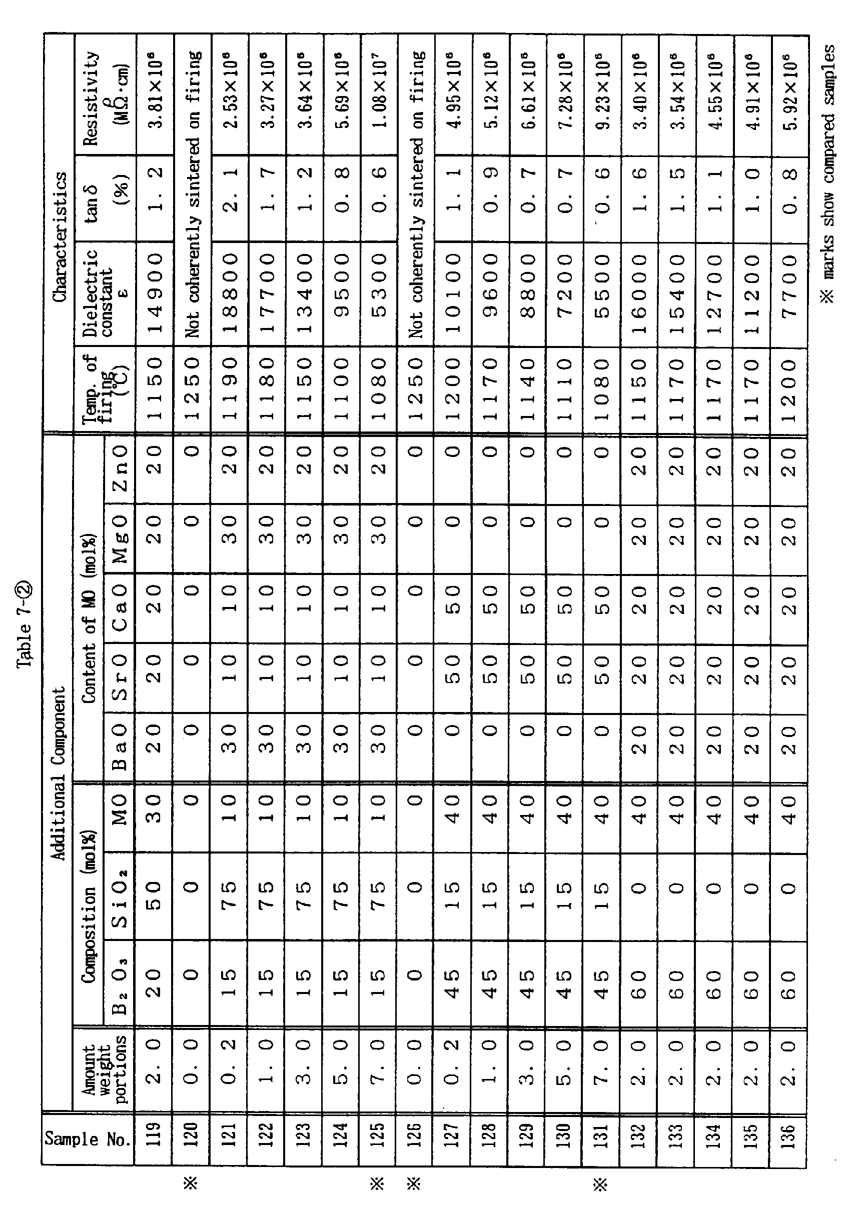

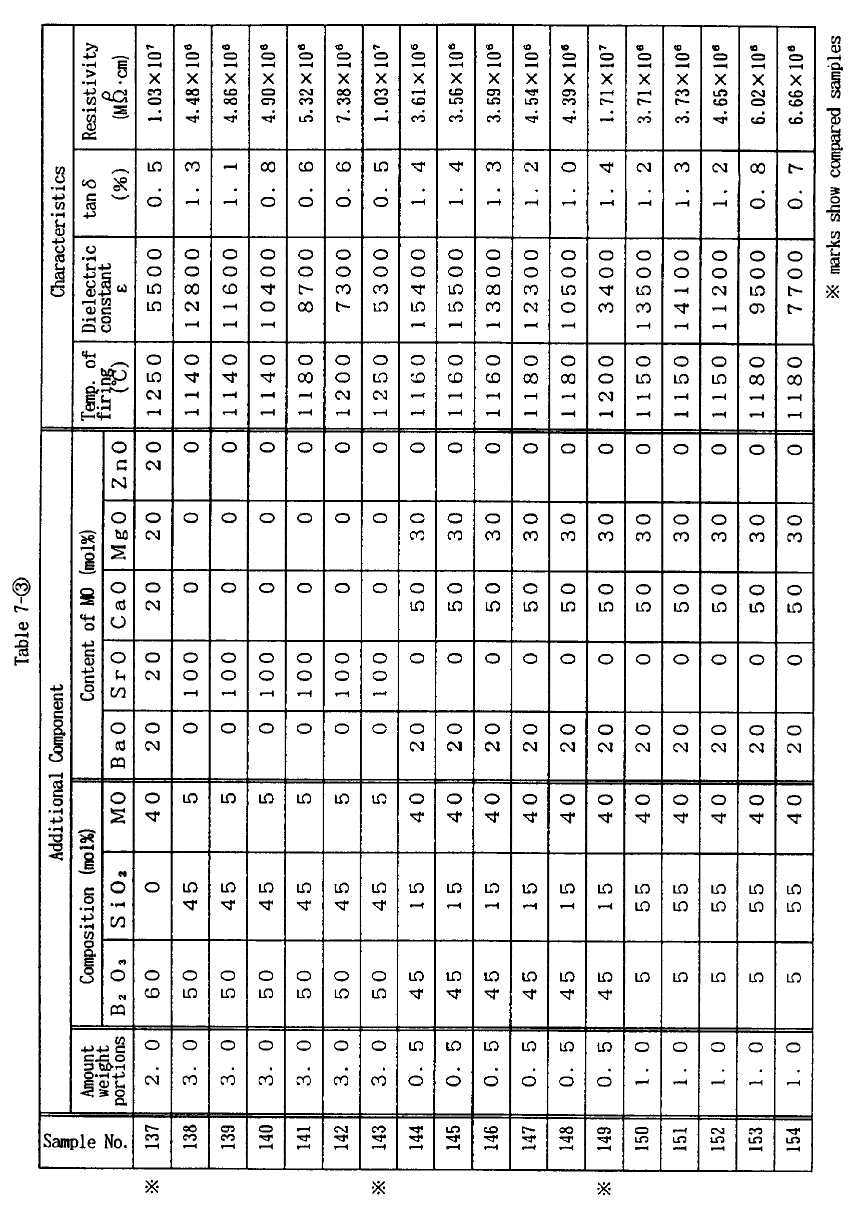

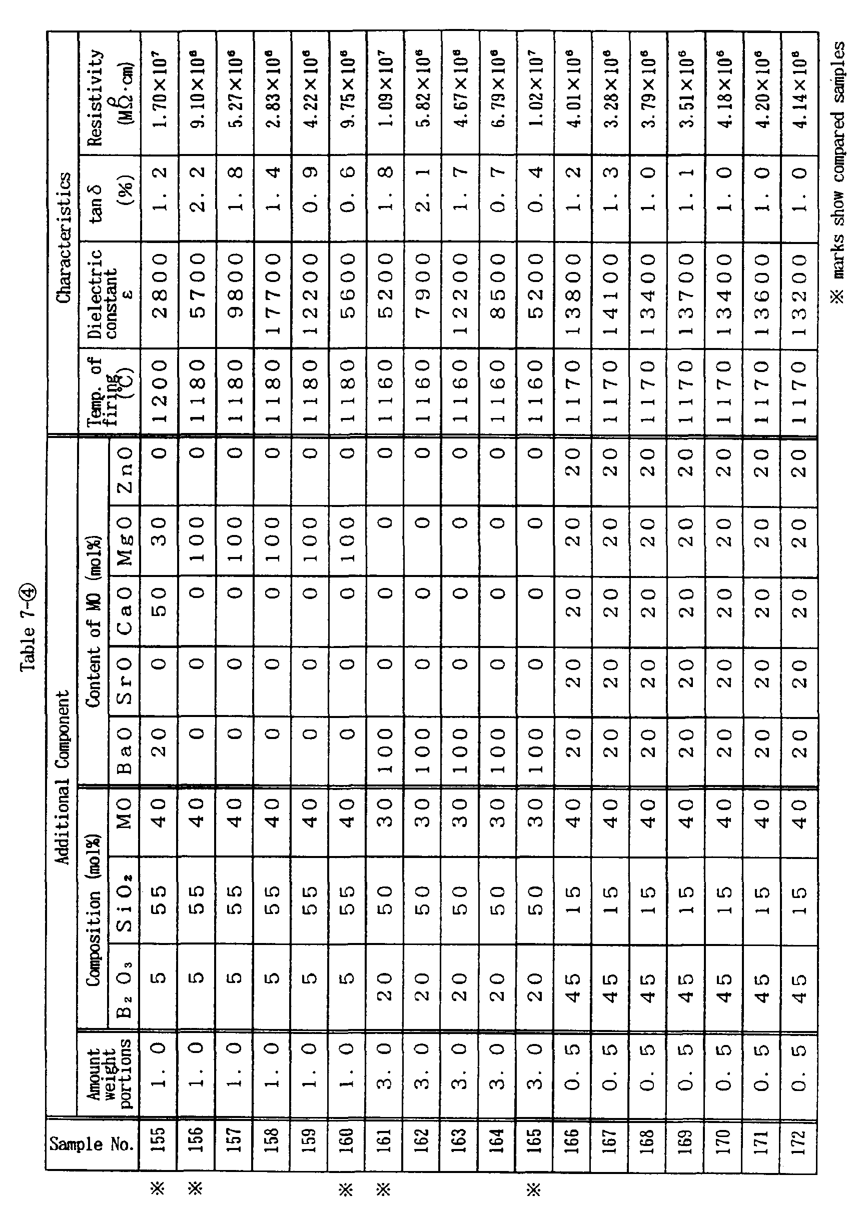

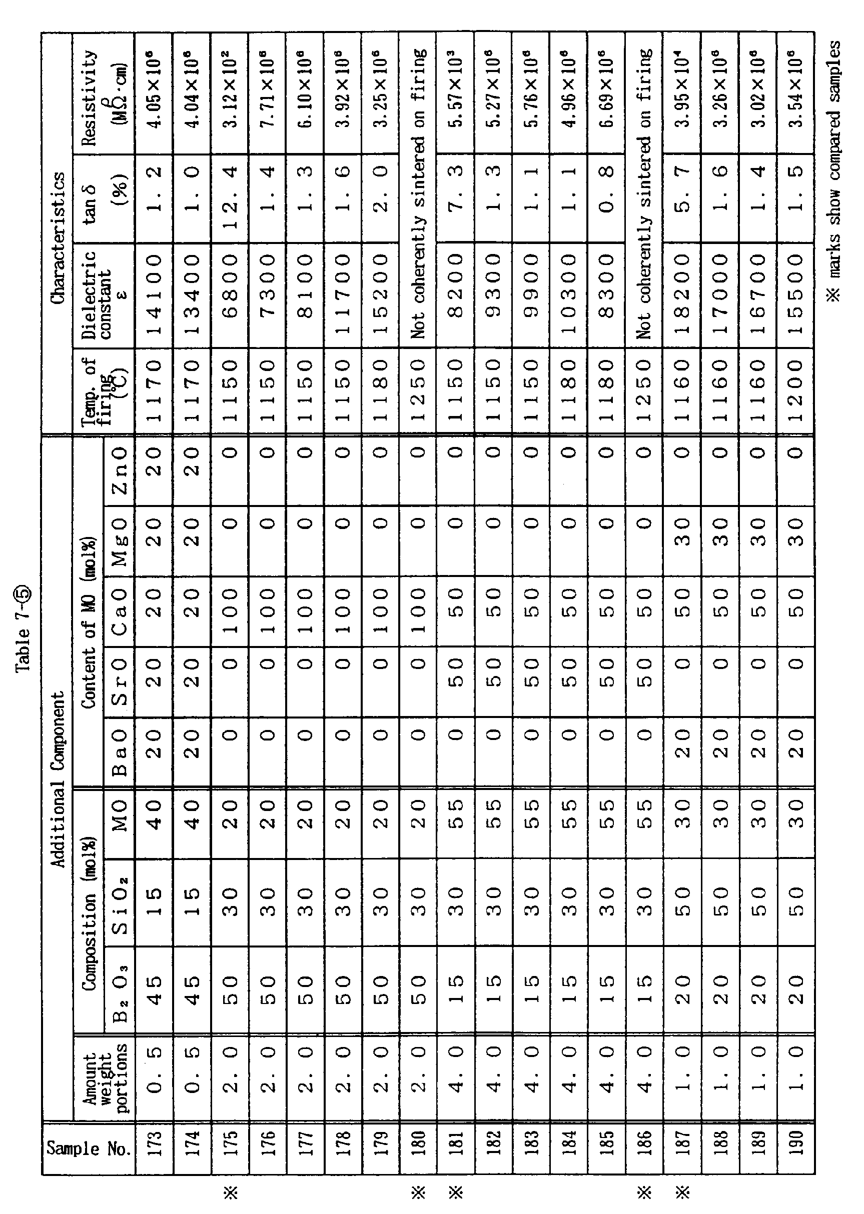

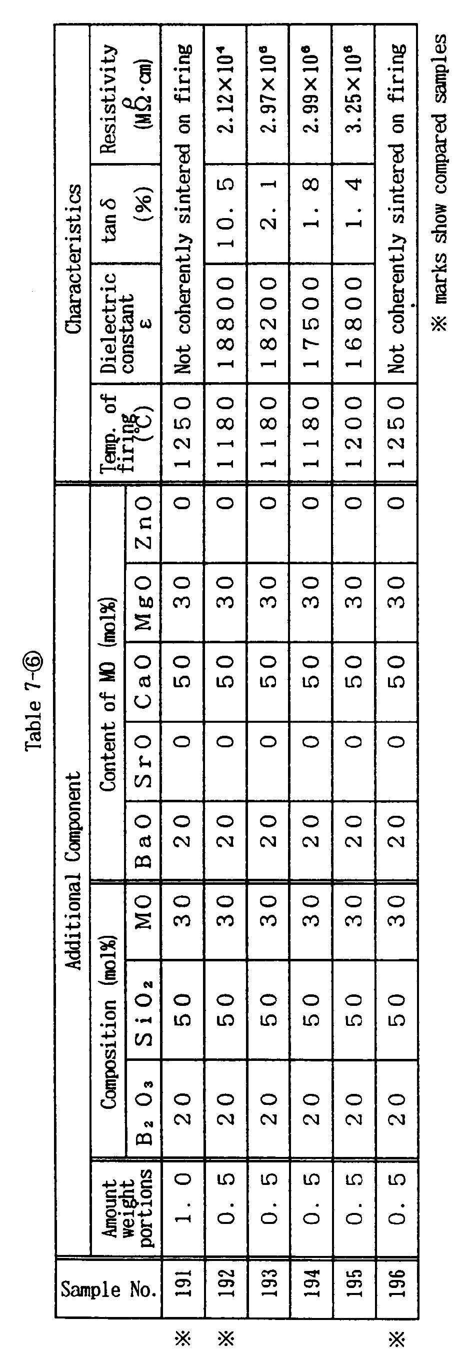

In ① to ⑥ of Table 6, the column 1-w-x shows the ratio of atoms of Ba in the composition formula of the basic component, the column w shows that of Ca, x shows that of Mg, 1-y-z shows that of Ti, and y shows that ofZr.

The column z shows the ratio of atoms of R in the composition formula of the basic component, and k shows that of {(Ba_{1-w-x}Ca_{w}Mgₓ)O}. Sc, Y, Gd, Dy, Ho, Er and Yb of the column z are the contents of R in the composition formula of the basic component, and each column of the elements shows the ratio of atoms thereof, and the column of the total shows the ratio of total numerals of atoms (value z).

In ① to ⑥ of Table 7, the added amount of the additional component is represented by weight portions in the 100 weight portions of the basic component. The contents of the column MO represent the ratio among BaO, SrO, CaO, MgO and ZnO by mol %.

The experiments with the Samples Nos. 101 to 119 show the proper range of the glass in the additional component, the experiments with the Samples Nos. 120 to 131 show the proper range of the added amount of the glass, the experiments with the Samples Nos. 132 to 143 show the proper range of the value w representing the ratio of atoms of Ca, the experiments with the Samples Nos. 144 to 155 show the proper range of the value x representing that of Mg, the experiments with the Samples No. 156 to 165 show the proper range of the value y representing that of Zr, the experiments with the Samples Nos. 166 to 174 show how the contents of R influences, the experiments with the Samples Nos. 175 to 186 show the proper range of the value z representing the ratio of atoms of R, and the experiments with the Samples Nos. 187 to 196 show the proper range of the value k representing that of ((Ba_{1-w-x}Ca_{w}Mgₓ)O}.

It is clear by ① to ⑥ of Table 6 and ① to ⑥ of Table 7 that, in the samples according to the invention, by firing the samples in a non-oxidative atmosphere at a temperature up to 1200°C, the ceramic capacitor having desired electric characteristics can be obtained, in which a dielectric constants, at least 7000, a dielectric loss (tan 8) up to 2.5 %, a resistivity p at least 1 x 10⁶ MΩ.cm. On the other hand, the ceramic capacitor having desired electric characteristics cannot be obtained by the Samples Nos. 111 to 113, 120, 125, 126, 131, 137, 143, 149, 155, 156, 160, 161, 165, 175, 180, 181, 186, 187, 191, 192 and 196. Accordingly, the Samples mentioned above are out of the range of the invention.

Next, the proper composition range of the dielectric ceramic material according to the invention will be described in conjunction with the results of the experiments shown in ① to ⑥ of Table 6 and ① to ⑥of Table 7.

First, the proper range of the value w representing the ratio of atoms of Ca in the composition formula of the basic component will be described.

A dielectric sintered ceramic composition having desired electric characteristics can be obtained if the value w is 0.27 shown in the Samples Nos. 136 and 142. However, if the value w is 0.30 shown in the Samples Nos. 137 ans 143, firing temperature is high up to 1250°C and a dielectric constant sₛ is smaller than 7000. Accordingly, the upper limit of w is 0.27.

Ca is added in order to make the temperature characteristics flat and to improve the resistivity p. However, a dielectric ceramic material having desired electric characteristics can be obtained even if w is 0. Accordingly, the lower limit ofw is 0.

The proper range of value x representing the ratio of atoms of Mg in the composition formula of the basic component will be described.

A dielectric ceramic composition having desired electric characteristics can be obtained if the value x is 0.03 shown in the Samples Nos. 148 and 154. However, if the value x is 0.04 shown in the Samples Nos. 149 and 155, a dielectric constant sₛ goes down rapidly to smaller than 7000. Accordingly, the upper limit of x is 0.03.

Mg can shift the Curie point to lower temperature, make the temperature characteristics flat and improve the resistivity p. There is observed a significant effect if x is smaller than 0.03 even in the vicinity of 0, but it is desirable that x is 0.001 or more because the electric characteristics cannot be the same in the case of mass-production.

The proper range of value y representing the ratio of atoms of Zr in the composition formula of the basic component will be described.

A dielectric ceramic composition having desired electric characteristics can be obtained if y is 0.05 shown in the Samples Nos. 157 and 162. However, if y is 0.03 shown in the Samples Nos. 156 and 161, a dielectric constant sₛ is smaller than 7000. Accordingly, the lowest limit of y is 0.05.

On the other hand, a dielectric ceramic composition having desired electric characteristics can be obtained if y is 0.26 shown in the Samples Nos. 159 and 164. However, if y is 0.29 shown in the Samples Nos. 160 and 165, a dielectric constant sₛ is smaller than 7000. Accordingly, the upper limit of y is 0.26.

The proper range of value z representing the ratio of atoms of R in the composition formula in the basic component.

Adielectric ceramic composition having desired electric characteristics can be obtained if z is 0.002 shown in the Samples Nos. 176 and 182. However, if z is 0. 001 shown in the Samples Nos. 175 and 181, the dielectric loss (tan 8) goes sharply worse and the resistivity p is smaller than 1 x 10⁴ MΩ.cm. Accordingly, the lowest limit of z is 0.002.

On the other hand, a dielectric ceramic composition having desired electric characteristics can be obtained if z is 0.04 shown in the Samples Nos. 179 and 185. However, if z is 0.06 shown in the Samples Nos. 180 and 186, a dense sintered material cannot be obtained even if the firing temperature is 1250°C. Accordingly, the upper limit of z is 0.04.

Sc, Y, Dy, Ho, Er, and Yb of the R component work almost the same function, so that any one or more than one of them can be used. Tb, Tm, and Lu of the R component are not mentioned in ① to ⑥in Table 6. However, they have the same effect as other elements in the R component.

The proper range of value k representing the ratio of {(Ba_{1-w-x}Ca_{w}Mgₓ)O} in the composition formula of the basic component will be described.

A dielectric ceramic composition having desired electric characteristics can be obtained if k is 1.00 shown in the Samples Nos. 188 and 193. However, if k is 0. 99 shown in the Samples Nos. 187 and 192, the resistivity p becomes smaller than 1 x 10⁶ MΩ.cm and tan δ gets worse. Accordingly, the lowest limit of k is 1.00.

On the other hand, a dielectric ceramic composition having desired electric characteristics can be obtained if k is 1.04 shown in the Samples Nos. 190 and 195. However, a dense sintered material cannot be obtained if k is 1.05 shown in the Samples Nos. 191 and 196. Accordingly, the upper limit of k is 1.04.

Next, the proper range of the amount of the additional component will be described.

A dielectric ceramic composition having desired electric characteristics can be obtained if the amount of the additional component added is 0.2 weight portions in 100 weight portions of the basic component by firing at a temperature in the range of 1190 °C to 1200°C as shown in the Samples Nos. 121 and 127, however, a dense sintered material cannot be obtained if the amount of the additional component is 0 even if the firing temperature is 1250 °C as shown in the Samples Nos. 120 and 126. Therefore, the lower limit of the amount of the additional component is 0.2 weight portions in 100 weight portions of the basic component.

A dielectric ceramic composition having desired electric characteristics can be obtained if the amount of the additional component added is 5 weight portions in 100 weight portions of the basic component as shown in the Samples Nos. 124 and 130, however, the dielectric constant sₛ becomes smaller than 7000 if the amount of the additional component is 7 weight portions in 100 weight portions of the basic component as shown in the Samples Nos. 125 and 131. Therefore, the upper limit of the amount of the additional component is 5 weight portions in 100 weight portions of the basic component.

Next, the desired composition ratio of the additional component will be described.

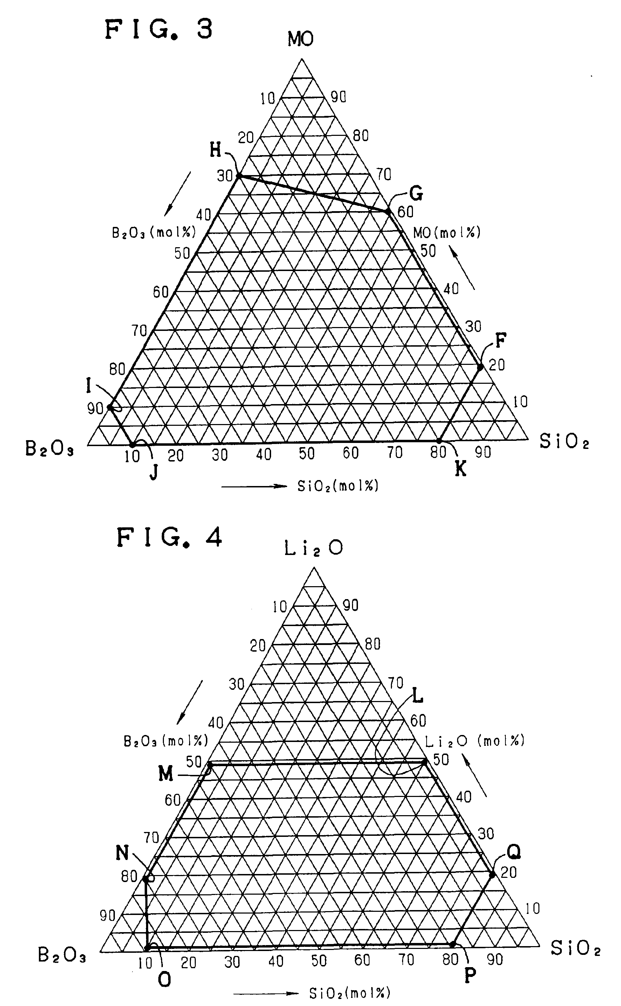

The desired composition ratio in the additional component can be determined by the ternary system diagram in Fig. 3 showing the ratio of the components of B₂0ₐ-Si0₂-MO.

In Fig. 3 of the ternary system diagram, the first vertex F represents the composition of Sample No. 1 in which B₂0₃ is 1 mol %, Si0₂ is 80 mol % and MO is 19 mol %, the second vertex G represents the composition of Sample No. 2 in which B₂0₃ is 1 mol %, Si0₂ is 39 mol % and MO is 60 mol %, the third vertex H represents the composition of Sample No. 3 in which B₂0₃ is 30 mol %, Si0₂ is 0 mol % and MO is 70 mol %, the fourth vertex I represents the composition of Sample No. 4 in which B₂0₃ is 90 mol %, Si0₂ is 0 mol % and MO is 10 mol %, and the fifth vertex J represents the composition of Sample No. 5 in which B₂0₃ is 90 mol %, Si0₂ is 10 mol % and MO is 0 mol %, and the sixth vertex K represents the composition of Sample No. 6 in which B₂0₃ is 20 mol %, Si0₂ is 80 mol % and MO is 0 mol %.

The composition ratio in the additional component is desired to be within the area profiled by a polygonal line connecting the first to sixth vertexes of F to K in turn in Fig. 3 of the ternary system diagram. A dielectric ceramic composition having desired electric characteristics can be obtained if the composition ratio of the additional component is within the area described above, however, a dense sintered material cannot be obtained if the composition ratio is out of the area as shown in the Samples No. 111 to 113.

MO component may be one of metal oxides selected from a group consisting of BaO, SrO, CaO, MgO and ZnO as like in the Samples Nos. 114 to 118, or more than one of them blended in adequate ratio as like in other samples.

### Example 3:

The third and sixth inventions will be supported here.

First, Sample No. 201 in the Table 9- ① and Table 10-① is described.

In this example the laminated chip is made in the same way as Example 1 except fob the material compounds of the additional component, which are shown in Table 8.

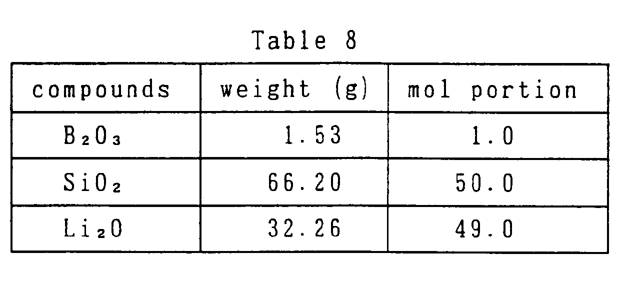

Here, values of the weight (g) of the compounds in Table 8 are calculated so as that the B₂0₃ is 1 mol %, Si0₂ is 50 mol %, and Li₂0 is 49 mol %.

The laminated chip obtained in this example is put into a furnace in which an atmosphere firing can be carried out, and the temperature is increased by 100°C/h to 600°C in the atmosphere of the air to burn and remove the organic binder of the non-sintered ceramic sheet.

Then, the atmosphere of the furnace is changed from the atmosphere of the air to the reductive atmosphere of H₂ (2 volume %) + N₂ (98 volume %). The temperature is increased by 100 °C/h from 600 °C to 1130°C with keeping the reductive atmosphere, and the highest temperature of 1130 °C is kept for 3 hours. After that, the temperature is decreased by 100 °C/h to 600 °C, and the reductive atmosphere is changed to the atmosphere of the air (the oxidative atmosphere), and the temperature of 600°C is kept for 30 minutes to oxidate the laminated chip. Finally, the temperature is decreased to the room temperature, and a laminated fired chip is obtained.

The external electrodes are fabricated on the laminated fired chip in the same way as Example 1 and the measurements of electric characteristics are carried out in the same way as Example 1. The results of the measurement, shown in Table 10- ① are that a dielectric constant sₛ is 15200, tan δ is 1.4 %, a resistivity p is 3.28 x 10⁶ MΩ.cm.

The method for making the Sample No. 201 and the characteristics thereof have been described as shown above. As for the Samples Nos. 202 to No. 292, laminated ceramic capacitors are fabricated by the same method and the electric characteristics are measured on the same condition as that of the Sample No. 201, except that the compositions of the basic component are varied as shown in ① to ⑥ of Table 9, the compositions of the additional component and the temperatures of firing are varied as shown in ① to ⑤ of Table 10. The temperatures of firing and the electric characteristics of the Samples Nos. 201 to 292 are shown in ① to ⑤ of Table 10.

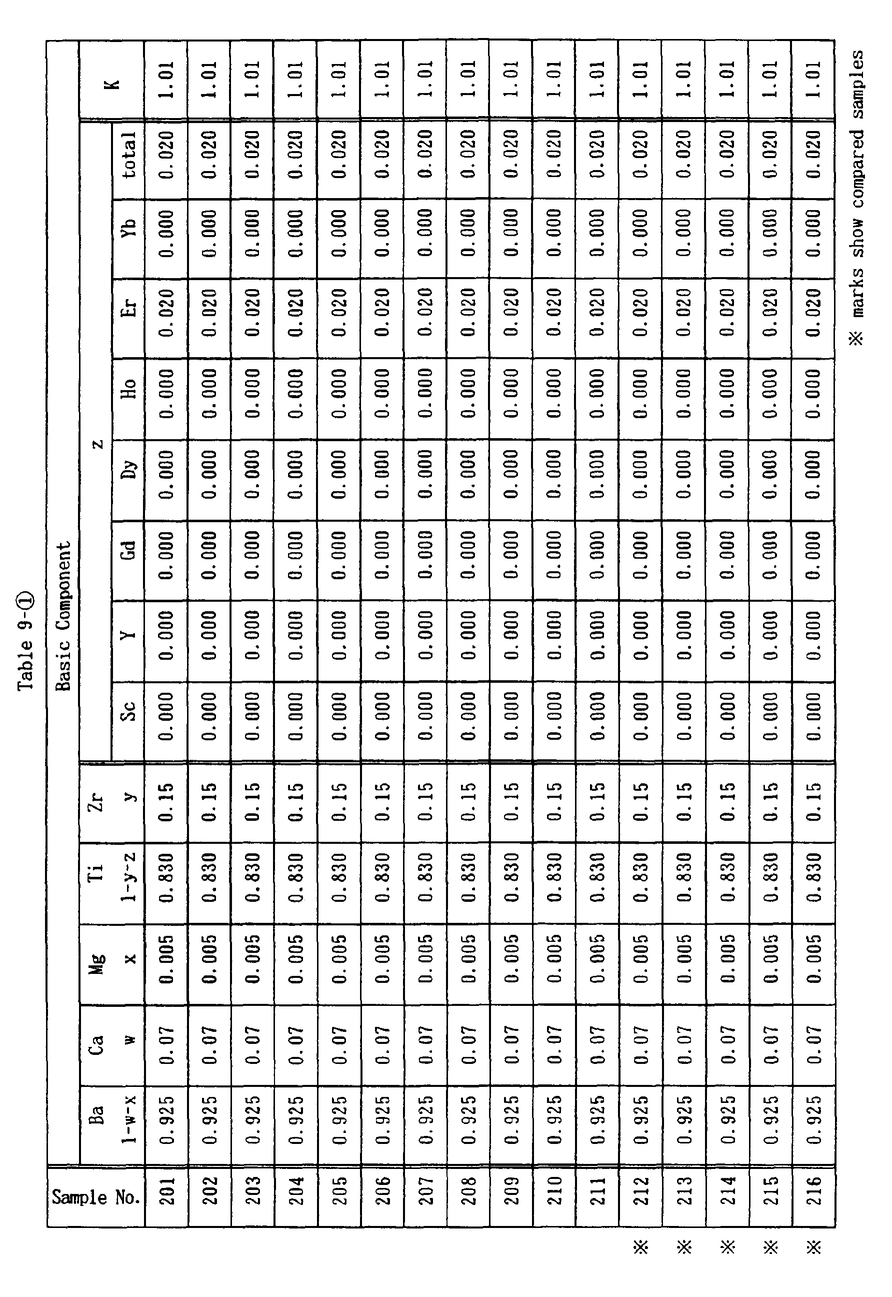

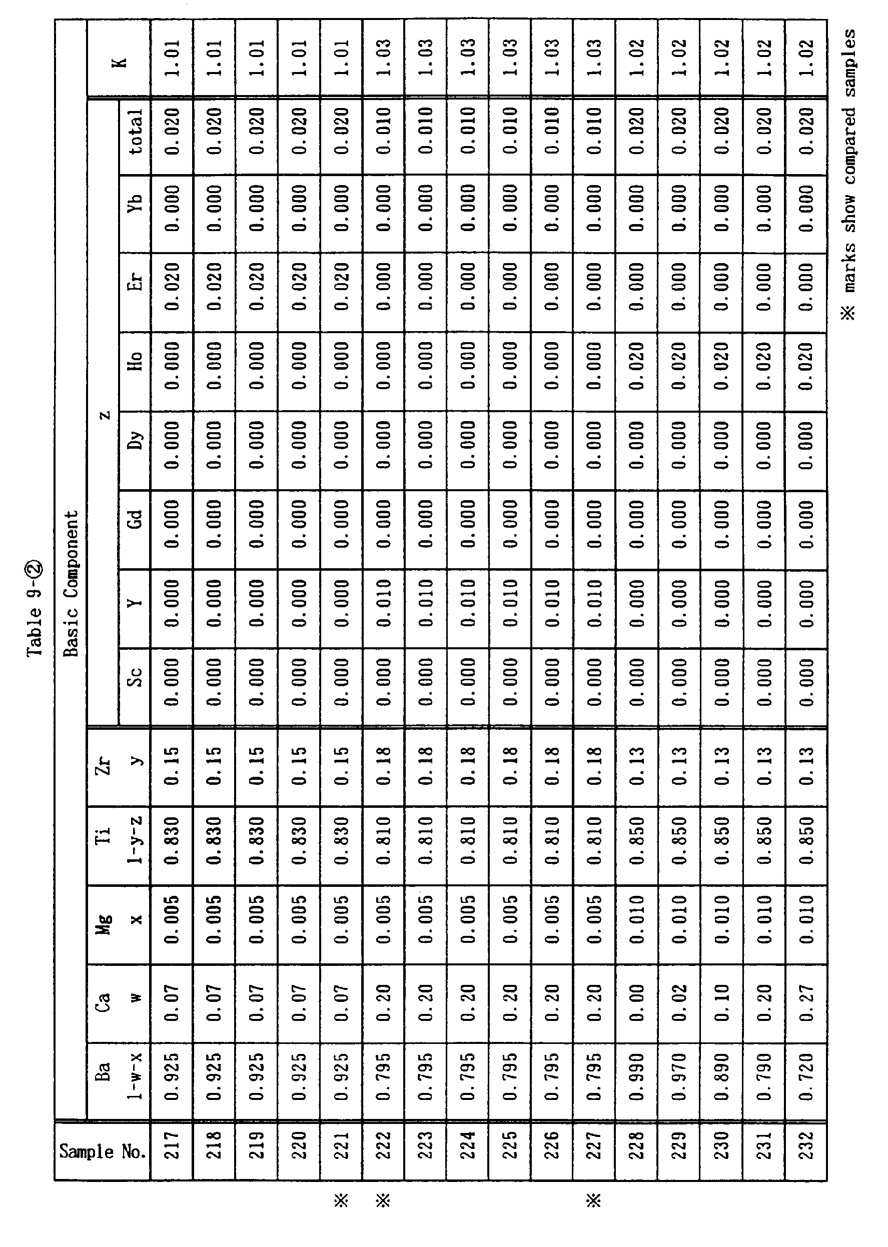

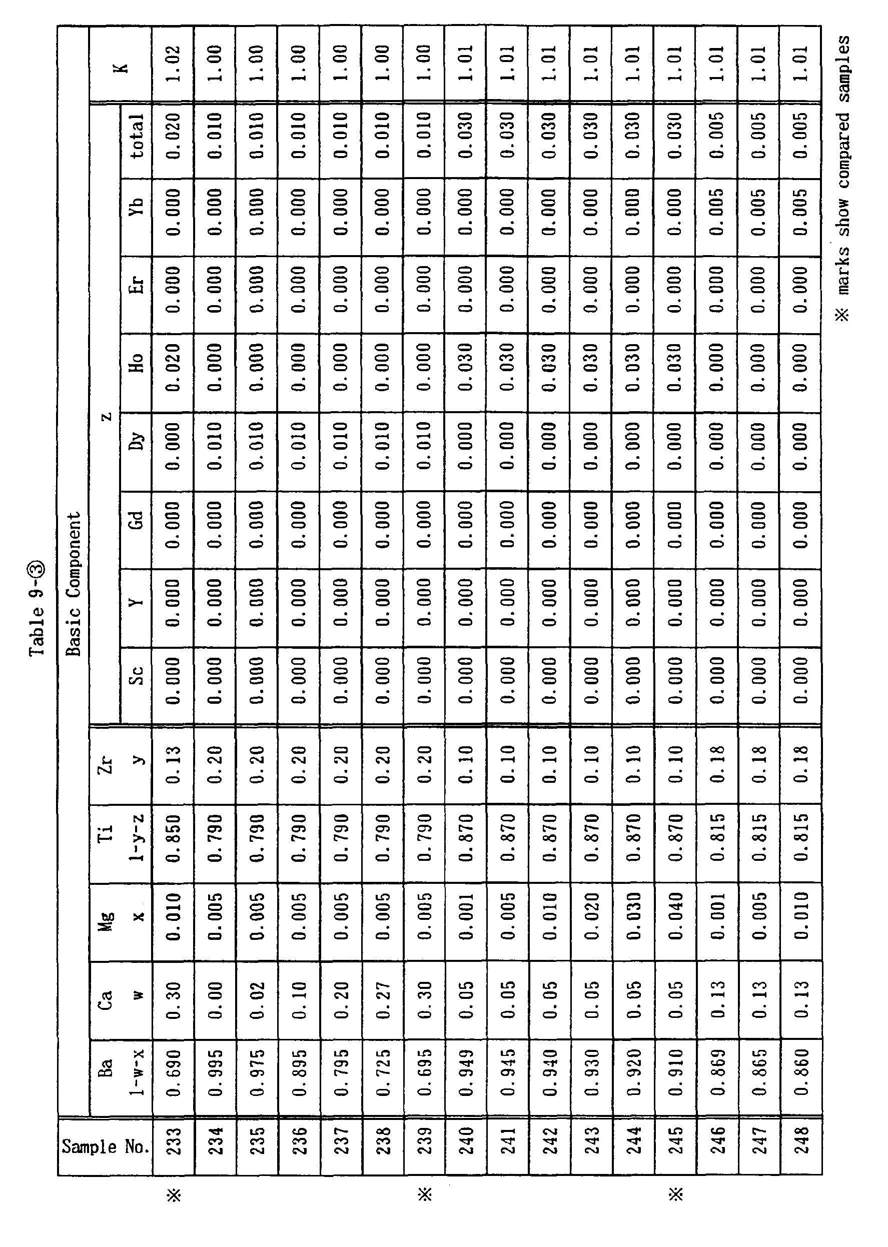

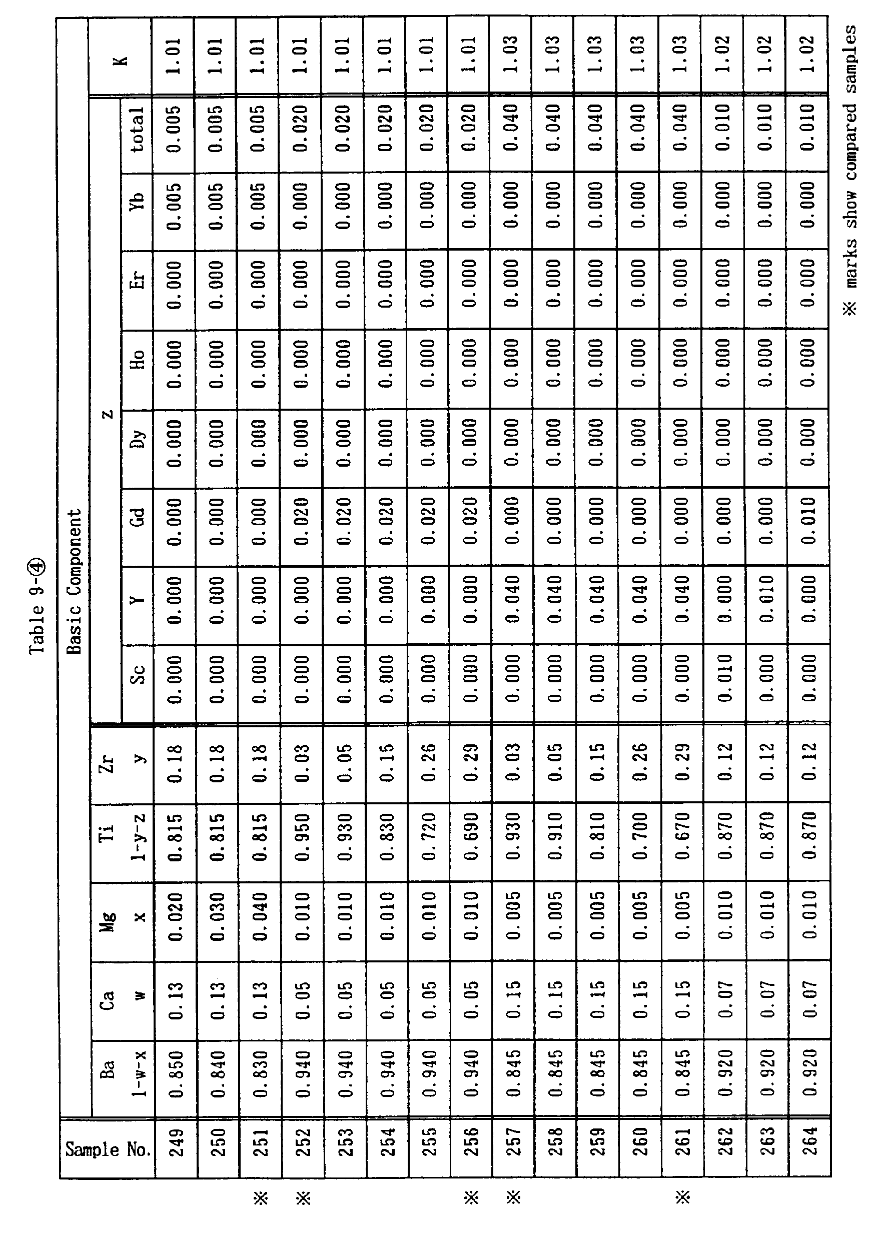

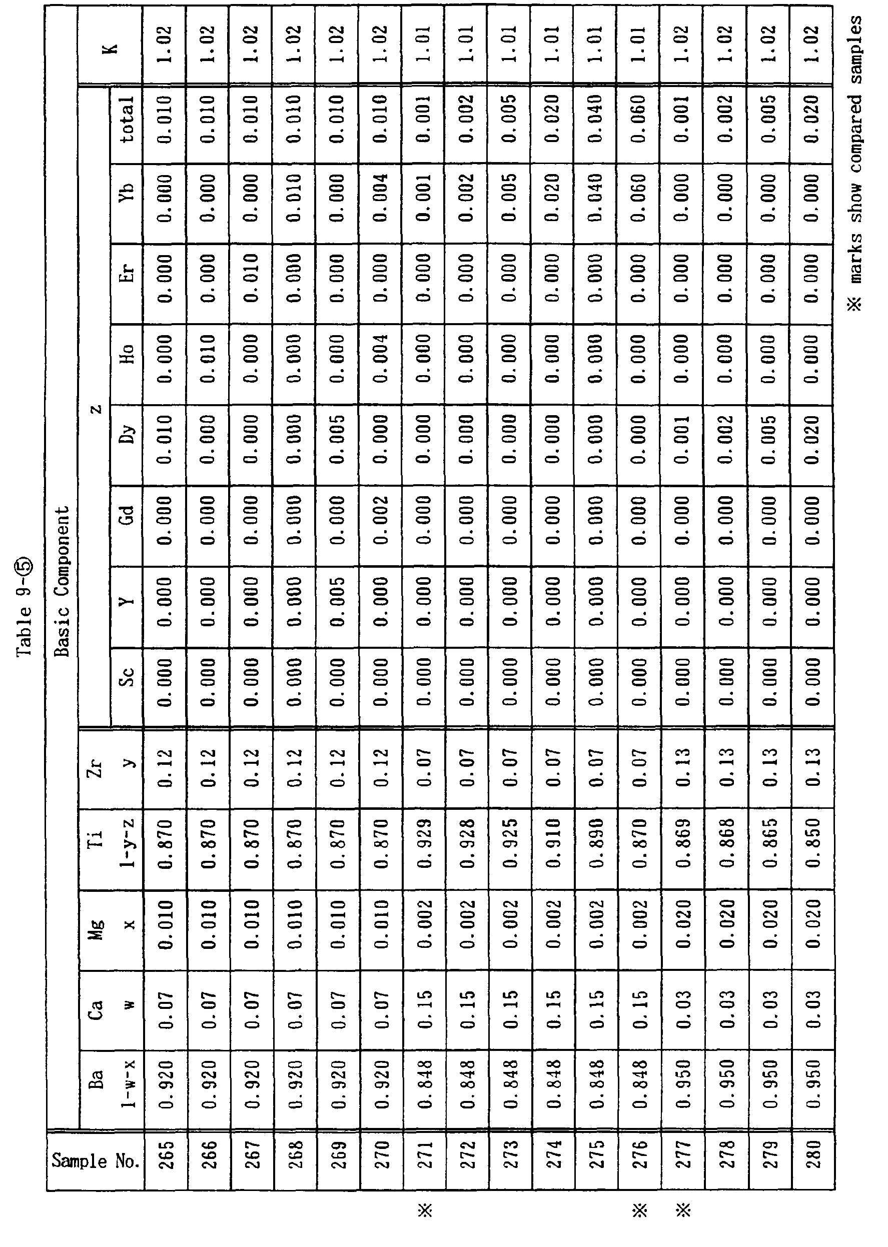

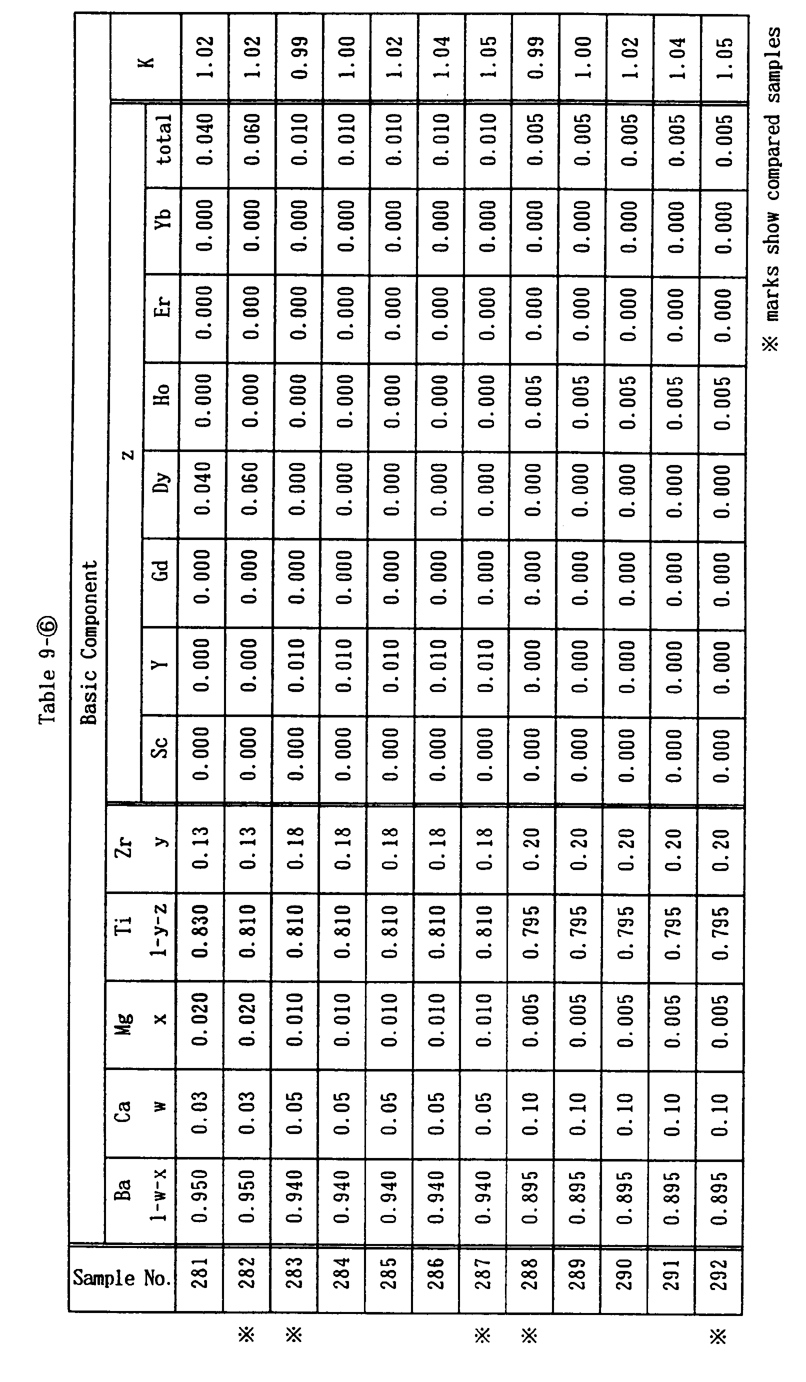

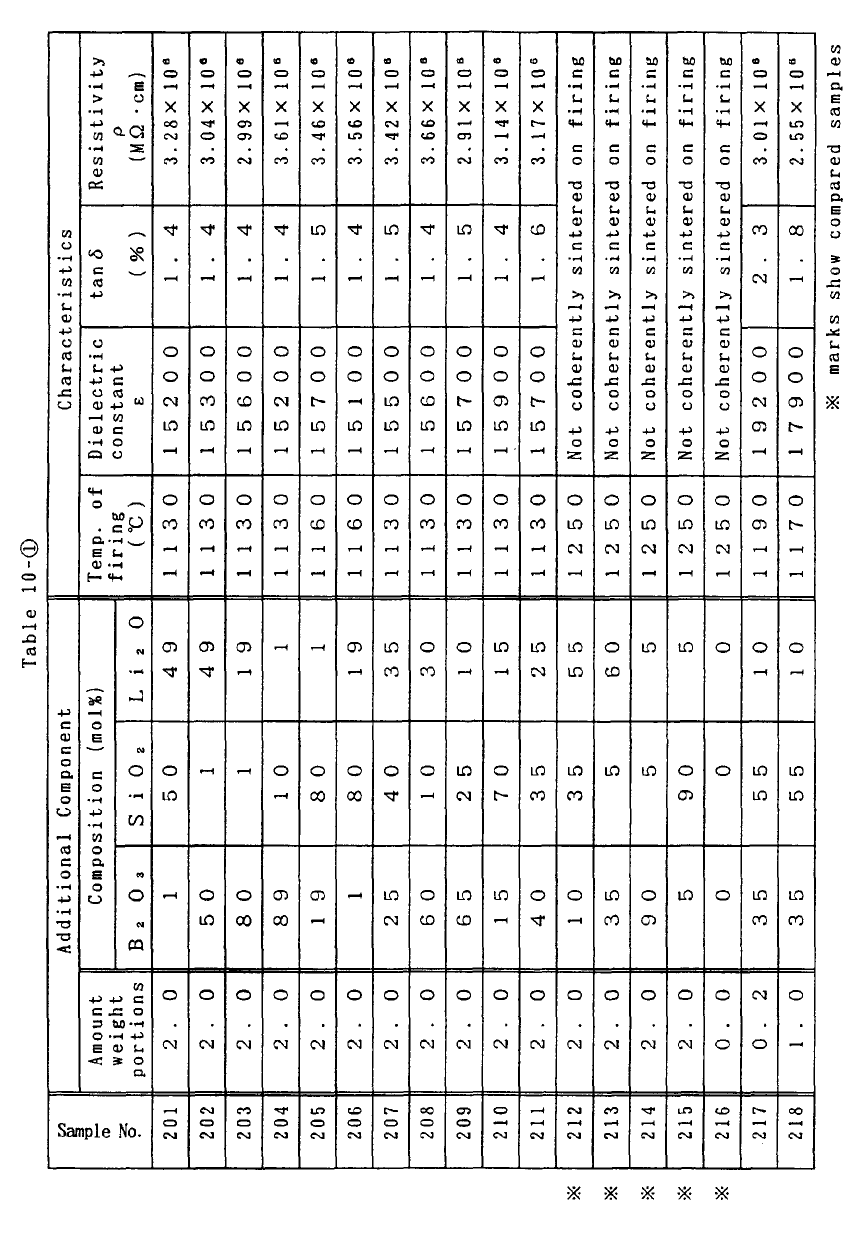

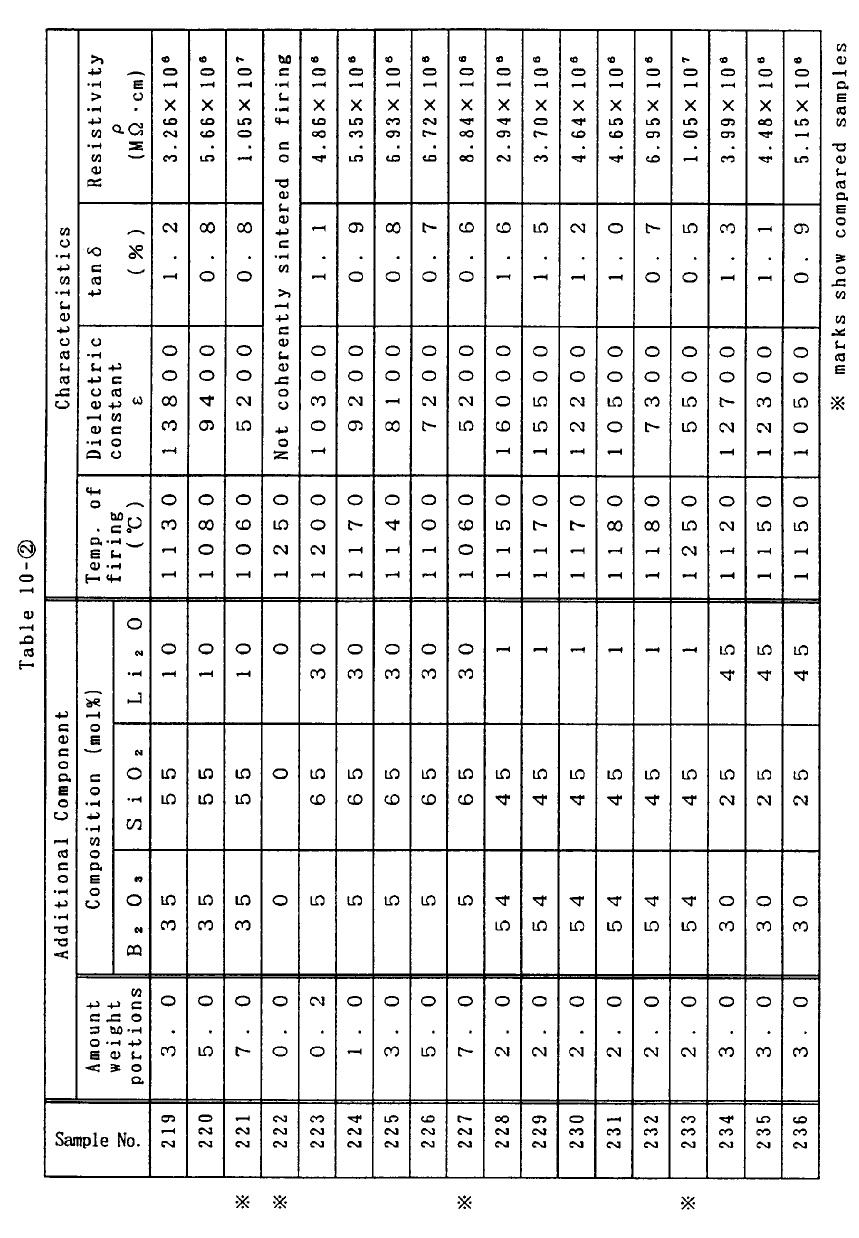

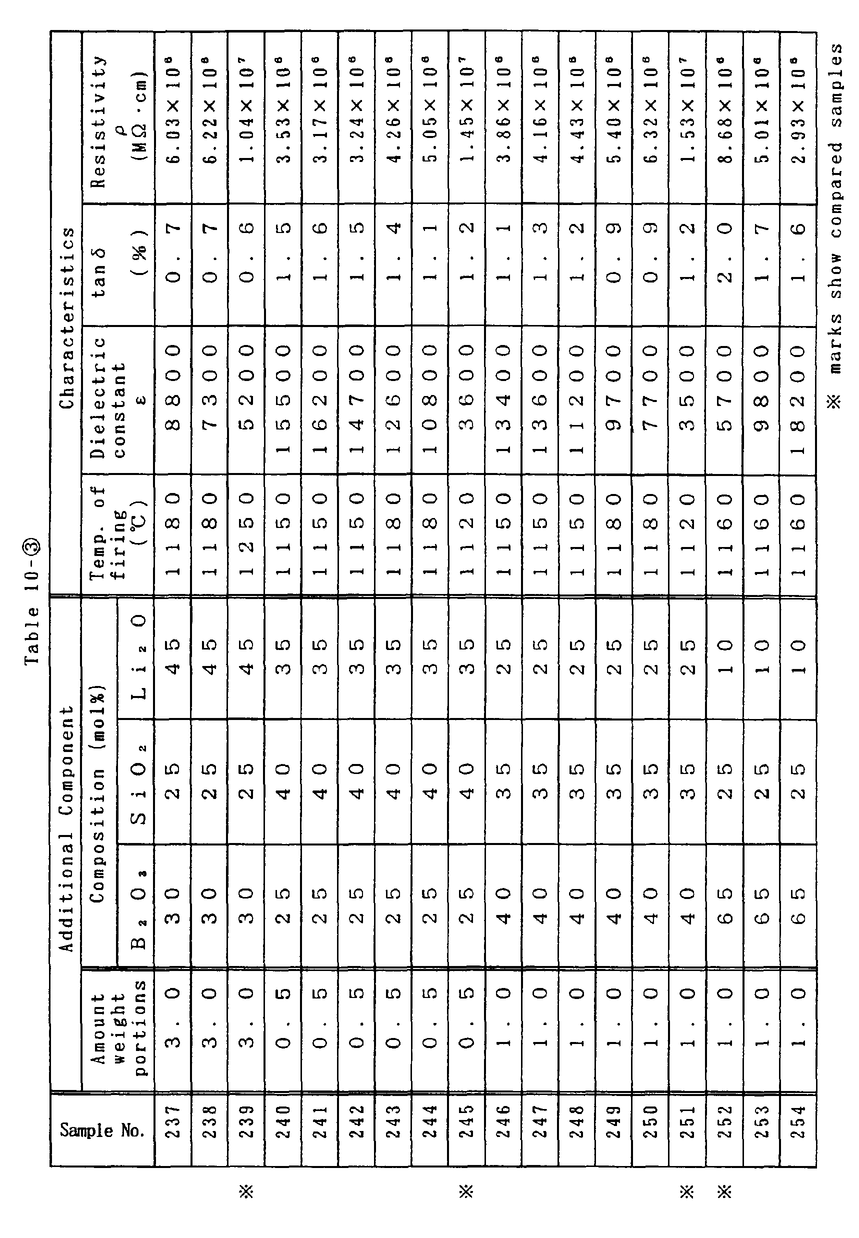

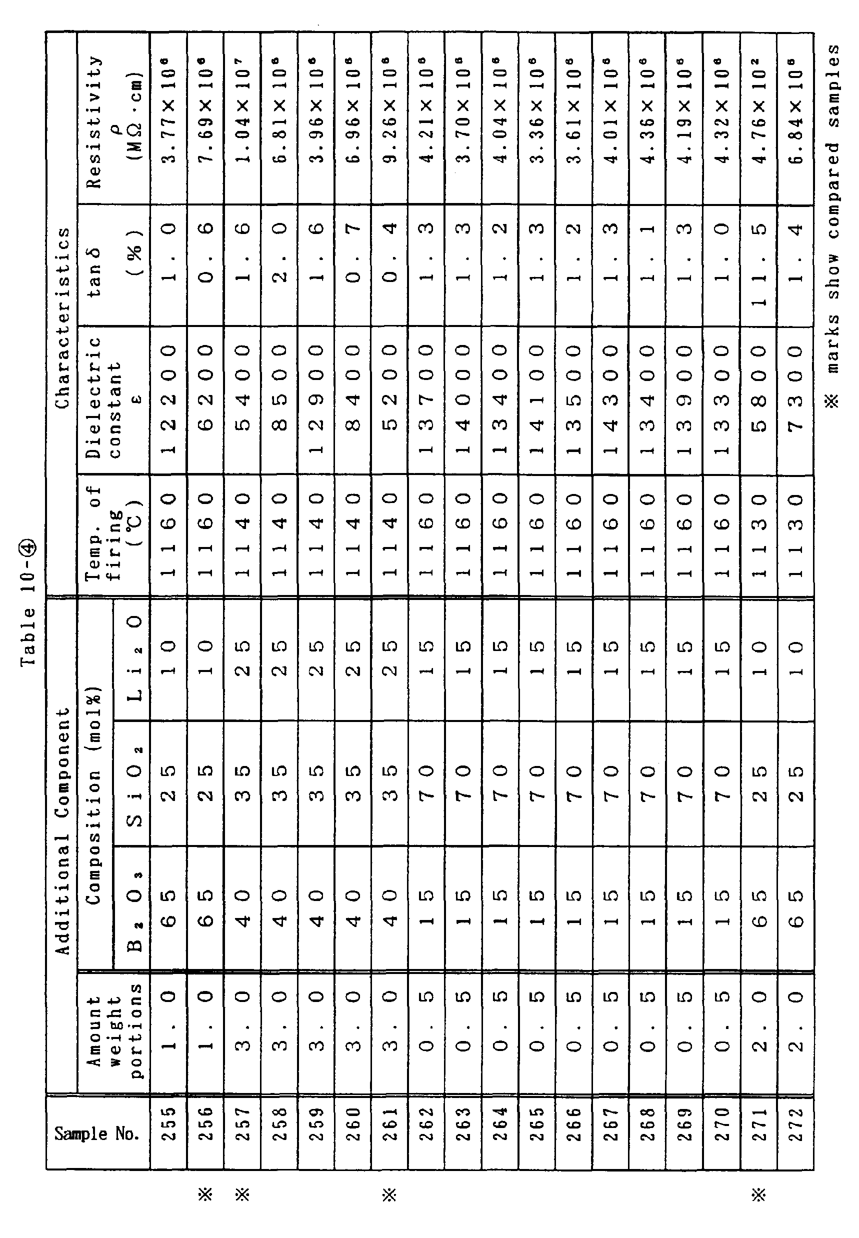

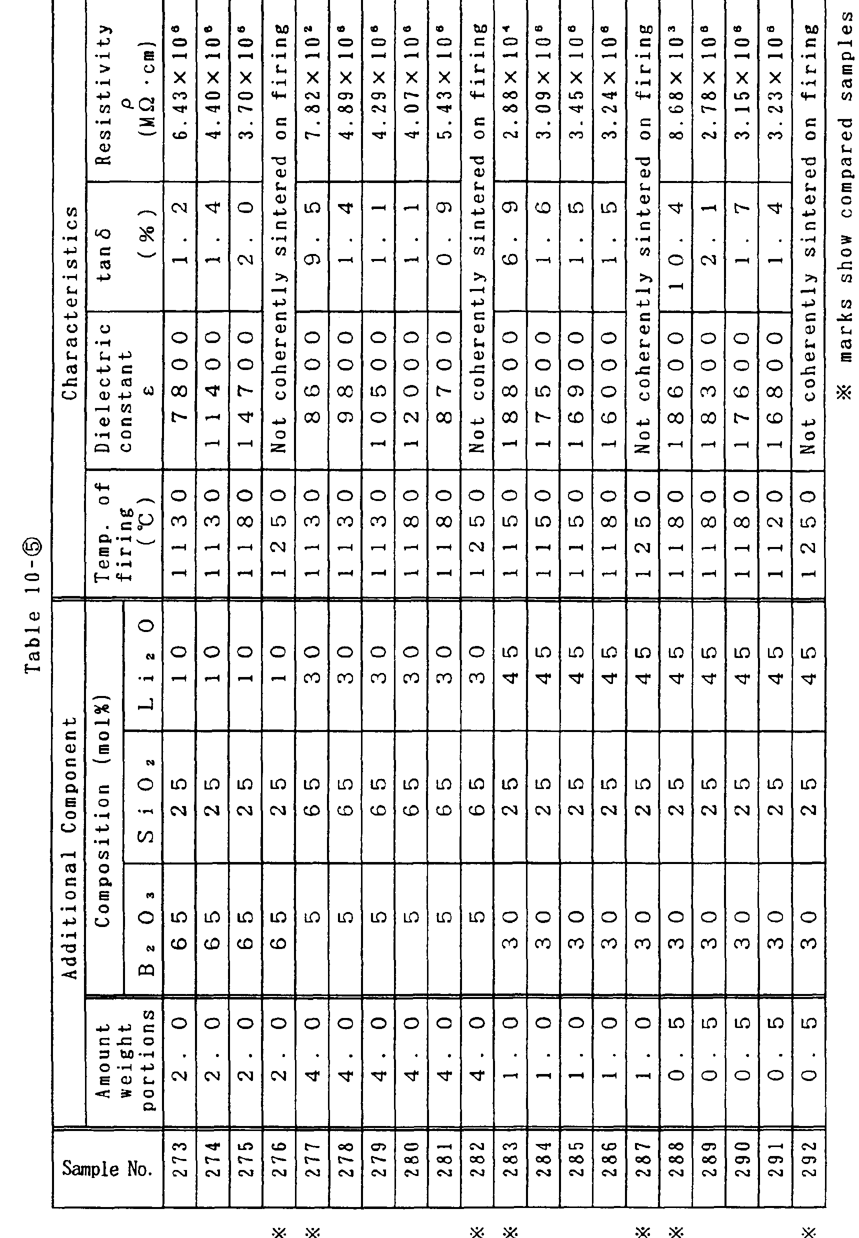

In ① to ⑥ of Table 9, the column 1-w-x shows the ratio of atoms of Ba in the composition formula of the basic component, the column w shows that of Ca, x shows that of Mg, 1-y-z shows that of Ti, and y shows that ofZr.

The column z shows the ratio of atoms of R in the composition formula of the basic component, and k shows that of {(Ba_{1-w-x}Ca_{w}Mgₓ)O}. Sc, Y, Gd, Dy, Ho, Er and Yb of the column z are the contents of R in the composition formula of the basic component, and each column of the elements shows the ratio of atoms thereof, and the column of the total shows the ratio of total numerals of the atoms (value z).

In ① to ⑤ of Table 10, the added amount of the additional component is represented by weight portions in the 100 weight portions of the basic component.

The experiments with the samples Nos. 201 to 215 shows the proper range of the glass in the additional component, the experiments with the samples Nos. 216 to 227 shows the proper range of the added amount of the glass, the experiments with the samples Nos. 228 to 239 shows the proper range of the value w representing the ratio of atoms of Ca, the experiments with the samples Nos. 240 to 251 shows the proper range of the value x representing that of Mg, the experiments with the samples Nos. 252 to 261 shows the proper range of the value y representing that of Zr, the experiments with the samples Nos. 262 to 270 shows how the contents of R influences, the experiments with the samples Nos. 271 to 282 shows the proper range of the value z representing the ratio of atoms of R, and the experiments with the samples Nos. 283 to 292 shows the proper range of the value k representing that of {(Ba_{1-w-x}Ca_{w}Mgₓ)O}.

It is clear by ① to ⑥ of Table 9 and ① to ⑤ of Table 10 that, in the samples according to the invention, by firing the samples in a non-oxidative atmosphere at a temperature up to 1200°C, the ceramic capacitor having desired electric characteristics can be obtained, in which a dielectric constant sₛ at least 7000, a dielectric loss (tan 8) up to 2.5 %, a resistivity p at least 1 x 10⁶ MQ.cm.

On the other hand, the ceramic capacitor having desired electric characteristics cannot be obtained by the Samples Nos. 212 to 216, 221, 222, 227, 233, 239, 245, 251, 252, 256, 257, 261, 271, 276, 277, 282, 283, 287, 288 and 292. Accordingly, the Samples mentioned above are out of the range of the invention.

Next, the proper composition range of the dielectric ceramic material according to the invention will be described in conjunction with the results of the experiments shown in to of Table 9 and to of Table 10.

First, the proper range of the value w representing the ratio of atoms of Ca in the composition formula of the basic component will be described.

A dielectric sintered ceramic composition having desired electric characteristics can be obtained if the value w is 0.27 shown in the Samples Nos. 232 and 238. However, if the value w is 0.30, shown in the Samples Nos. 233 and 239, firing temperature is high up to 1250 °C and a dielectric constant sₛ is smaller than 7000. Accordingly, the upper limit of w is 0.27.

Ca is added in order to make the temperature characteristics flat and to improve the resistivity p. However, a dielectric ceramic material having desired electric characteristics can be obtained even if w is 0. Accordingly, the lower limit ofw is 0.

The proper range of value x representing the ratio of atoms of Mg in the composition formula of the basic component will be described.

A dielectric ceramic composition having desired electric characteristics can be obtained if the value x is 0.03 shown in the Samples Nos. 244 and 250. However, if the value x is 0.04 shown in the Samples Nos. 245 and 251, a dielectric constant sₛ goes down rapidly to smaller than 7000. Accordingly, the upper limit of x is 0.03.

Mg can shift the Curie point to lower temperature, make the temperature characteristics flat and improve the resistivity p. There is observed a significant effect if x is smaller than 0.03 even in the vicinity of 0, but it is desirable that x is 0.001 or more because the electric characteristics cannot be the same in the case of mass-production.

The proper range of value y representing the ratio of atoms of Zr in the composition formula of the basic component will be described.

A dielectric ceramic composition having desired electric characteristics can be obtained if y is 0.05 shown in the Samples Nos. 253 and 258. However, if y is 0.03 shown in the Samples Nos. 252 and 257, a dielectric constant sₛ is smaller than 7000. Accordingly, the lowest limit of y is 0.05.

On the other hand, a dielectric ceramic composition having desired electric characteristics can be obtained if y is 0.26 shown in the Samples Nos. 255 and 260. However, if y is 0.29 shown in the Samples Nos. 256 and 261, a dielectric constant sₛ is smaller than 7000. Accordingly, the upper limit of y is 0.26.

The proper range of value z representing the ratio of atoms of R in the composition formula in the basic component.

Adielectric ceramic composition having desired electric characteristics can be obtained if z is 0.002 shown in the Samples Nos. 272 and 278. However, if z is 0.001 shown in the Samples Nos. 271 and 277, the dielectric loss (tan 8) goes sharply worse and the resistivity p is smaller than 1 x 10⁴ MQ.cm. Accordingly, the lowest limit of z is 0.002.

On the other hand, a dielectric ceramic composition having desired electric characteristics can be obtained if z is 0.04 shown in the Samples Nos. 275 and 281. However, if z is 0.06 shown in the Samples No. 276 and 282, a dense sintered material cannot be obtained even if the firing temperature is 1250°C. Accordingly, the upper limit of z is 0.04.

Sc, Y, Dy, Ho, Er and Yb of the R component work almost the same function, so that any one or more than one of them can be used. Tb, Tm and Lu of the R component are not mentioned in ① to ⑥ in Table 9. However, they have the same effect as other elements in the R component.

The proper range of value k representing the ratio of {(Ba_{1-w-x}Ca_{w}Mgₓ)O} in the composition formula of the basic component will be described.

A dielectric ceramic composition having desired electric characteristics can be obtained if k is 1.00 shown in the Samples Nos. 284 and 289. However, if k is 0.99 shown in the Samples Nos. 283 and 288, the resistivity p becomes smaller than 1 x 10⁶ MQ.cm and tan δ gets worse. Accordingly, the lowest limit of k is 1.00.

On the other hand, a dielectric ceramic composition having desired electric characteristics can be obtained if k is 1.04 shown in the Samples Nos. 286 and 291. However, a dense sintered material cannot be obtained if k is 1.05 shown in the Samples Nos. 287 and 292. Accordingly, the upper limit of k is 1.04.

Next, the proper range of the amount of the additional component will be described.

A dielectric ceramic composition having desired electric characteristics can be obtained if the amount of the additional component added is 0.2 weight portions in 100 weight portions of the basic component by firing at a temperature in the range of 1190 °C to 1200°C as shown in the Samples Nos. 217 and 223, however, a dense sintered material cannot be obtained if the amount of the additional component is 0 even if the firing temperature is 1250 °C as shown in the Samples Nos. 216 and 222. Therefore, the lower limit of the amount of the additional component is 0.2 weight portions in 100 weight portions of the basic component.

A dielectric ceramic composition having desired electric characteristics can be obtained if the amount of the additional component added is 5 weight portions in 100 weight portions of the basic component as shown in the Samples Nos. 220 and 226, however, the dielectric constant sₛ becomes smaller than 7000 if the amount of the additional component is 7 weight portions in 100 weight portions of the basic component as shown in the Samples Nos. 221 and 227. Therefore, the upper limit of the amount of the additional component is 5 weight portions in 100 weight portions of the basic component.

Next, the desired composition ratio of the additional component will be described.

The desired composition ratio in the additional component can be determined by the ternary system diagram in Fig. 4 showing the ratio of the components of B₂O₃-SiO₂-Li₂O.

In Fig. 4 of the ternary system diagram, the first vertex L represents the composition of the Sample No. 1 in which B₂0₃ is 1 mol %, Si0₂ is 50 mol % and Li₂0 is 49 mol %, the second vertex M represents the composition of the Sample No. 2 in which B₂0₃ is 50 mol %, Si0₂ is 1 mol % and Li₂0 is 49 mol %, the third vertex N represents the composition of the Sample No. 3 in which B₂0₃ is 80 mol %, Si0₂ is 1 mol % and Li₂0 is 19 mol %, the fourth vertex O represents the composition of the Sample No. 4 in which B₂0₃ is 89 mol %, Si0₂ is 10 mol % and Li₂0 is 1 mol %, and the fifth vertex P represents the composition of the Sample No. 5 in which B₂0₃ is 19 mol %, Si0₂ is 80 mol % and Li₂0 is 1 mol %, and the sixth vertex Q represents the composition of the Sample No.6 in which B₂0₃ is 1 mol %, Si0₂ is 80 mol % and Li₂0 is 19 mol %.

The composition ratio in the additional component is desired to be within the area profiled by a polygonal line connecting the first to sixth vertexes of L to Q in turn in Fig. 4 of the ternary system diagram. A dielectric ceramic composition having desired electric characteristics can be obtained if the composition ratio of the additional component is within the area described above, however, a dense sintered material cannot be obtained if the composition ratio is out of the area as shown in the Samples Nos. 212 to 215.

## Claims

1. A ceramic capacitor,
comprising:
at least one dielectric ceramic layer consisting essentially of a dielectric ceramic composition and at least two internal electrodes sandwiching said dielectric ceramic composition; and
characterized by:
said dielectric ceramic composition consisting essentially of a fired mixture of a basic component of 100 weight portions and an additional component in the range of 0.2 to 5 weight portions;
said basic component consisting essentially of a material represented by the following formula: 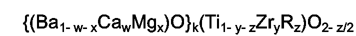 where, R is one or more elements selected from a group consisting of Sc, Y, Gd, Dy, Ho, Er, Yb, Tb, Tm and Lu; and w, x, y, z and k are numerals fulfilling the following conditions: 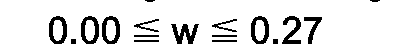 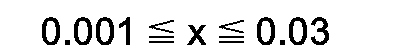 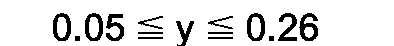 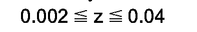 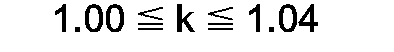
said additional component consisting essentially of Li₂0, Si0₂ and MO, wherein said MO is at least one oxide selected from a group consisting of BaO, SrO, CaO, MgO and ZnO; and
a ratio among amounts of Li₂0, Si0₂ and MO in said additional component is within an area in a ternary system diagram, of mol % having five vertexes of first to fifth vertexes, wherein according to Fig. 2:
said first vertex A represents a condition in which amounts of Li₂0 is 1 mol %, Si0₂ is 80 mol % and MO is 19 mol %;
said second vertex B represents a condition in which amounts of Li₂0 is 1 mol %, Si0₂ is 39 mol % and MO is 60 mol %;
said third vertex C represents a condition in which amounts of Li₂0 is 30 mol %, Si0₂ is 30 mol % and MO is 40 mol %;
said fourth vertex D represents a condition in which amounts of Li₂0 is 50 mol %, Si0₂ is 50 mol % and MO is 0 mol %; and
said fifth vertex E represents a condition in which amounts of Li₂0 is 20 mol %, Si0₂ is 80 mol % and MO is 0 mol %.

2. A ceramic capacitor,
comprising:
at least one dielectric ceramic layer consisting essentially of a dielectric ceramic composition and at least two internal electrodes sandwiching said dielectric ceramic composition; and
characterized by:
said dielectric ceramic composition consisting essentially of a fired mixture of a basic component of 100 weight portions and an additional component in the range of 0.2 to 5 weight portions;
said basic component consisting essentially of a material represented by the following formula: 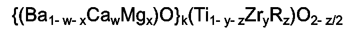 where, R is one or more elements selected from a group consisting of Sc, Y, Gd, Dy, Ho, Er, Yb, Tb, Tm and Lu; and w, x, y, z and k are numerals fulfilling the following conditions: 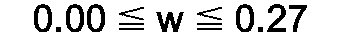 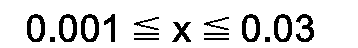 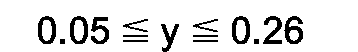 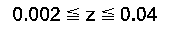 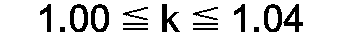
said additional component consisting essentially of B₂0₃, Si0₂ and MO, wherein said MO is at least one oxide selected from a group consisting of BaO, SrO, CaO, MgO and ZnO; and
a ratio among amounts of B₂0₃, Si0₂ and MO in said additional component is within an area in a ternary system diagram of mol % having six vertexes of first to sixth vertexes, wherein according to Fig. 3:
said first vertex F represents a condition in which amounts of B₂0₃ is 1 mol %, Si0₂ is 80 mol % and MO is 19 mol %;
said second vertex G represents a condition in which amounts of B₂0₃ is 1 mol %, Si0₂ is 39 mol % and MO is 60 mol %;
said third vertex H represents a condition in which amounts of B₂0₃ is 30 mol %, Si0₂ is 0 mol % and MO is 70 mol %;
said fourth vertex I represents a condition in which amounts of B₂0₃ is 90 mol %, Si0₂ is 0 mol % and MO is 10 mol %;
said fifth vertex J represents a condition in which amounts of B₂0₃ is 90 mol %, Si0₂ is 10 mol % and MO is 0 mol %; and
said sixth vertex K represents a condition in which amounts of B₂0₃ is 20 mol %, Si0₂ is 80 mol % and MO is 0 mol %.

3. A ceramic capacitor,
comprising:
at least one dielectric ceramic layer consisting essentially of a dielectric ceramic composition and at least two internal electrodes sandwiching said dielectric ceramic composition; and
characterized by:
said dielectric ceramic composition consisting essentially of a fired mixture of a basic component of 100 weight portions and an additional component in the range of 0.2 to 5 weight portions;
said basic component consisting essentially of a material represented by the following formula: 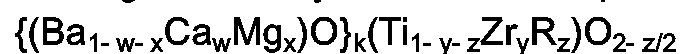 where, R is one or more elements selected from a group consisting of Sc, Y, Gd, Dy, Ho, Er, Yb, Tb, Tm and Lu; and w, x, y, z and k are numerals fulfilling the following conditions: 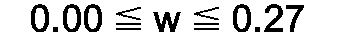 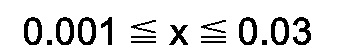 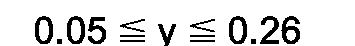 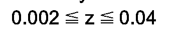 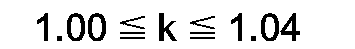
said additional component consisting essentially of B₂0₃, Si0₂ and Li₂0; and
a ratio among amounts of B₂0₃, Si0₂ and Li₂0 in said additional component is within an area in a ternary system diagram of mol % having six vertexes of first to sixth vertexes, wherein according to Fig. 4:
said first vertex L represents a condition in which amounts of B₂0₃ is 1 mol %, Si0₂ is 50 mol % and Li₂0 is 49 mol %;
said second vertex M represents a condition in which amounts of B₂0₃ is 50 mol %, Si0₂ is 1 mol % and Li₂0 is 49 mol %;
said third vertex N represents a condition in which amounts of B₂0₃ is 80 mol %, Si0₂ is 1 mol % and Li₂0 is 19 mol %;
said fourth vertex O represents a condition in which amounts of B₂0₃ is 89 mol %, Si0₂ is 10 mol % and Li₂0 is 1 mol %;
said fifth vertex P represents a condition in which amounts of B₂0₃ is 19 mol %, Si0₂ is 80 mol % and Li₂0 is 1 mol %;and
said sixth vertex Q represents a condition in which amounts of B₂0₃ is 1 mol %, Si0₂ is 80 mol % and Li₂0 is 19 mol %.

4. A method for fabricating a ceramic capacitor,
comprises the steps of:
providing a mixture of non-sintered ceramic powder;
forming a non-sintered ceramic sheet consisting of said mixture;
fabricating a laminated structure in which said non-sintered ceramic sheet is sandwiched between at least two conductive paste layers;
firing said laminated structure under a non-oxidative atmosphere; and
heating said fired laminated structure under an oxidative atmosphere;
characterized by:
said mixture of non-sintered ceramic powder consisting essentially of a fired mixture of a basic component of 100 weight portions and an additional component in the range of 0.2 to 5 weight portions;
said basic component consisting essentially of a material represented by the following formula: 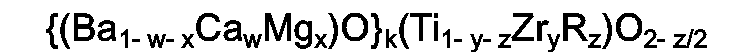 where, R is one or more elements selected from a group consisting of Sc, Y, Gd, Dy, Ho, Er, Yb, Tb, Tm and Lu; and w, x, y, z and k are numerals fulfilling the following conditions: 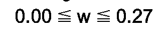 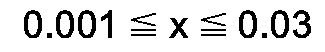 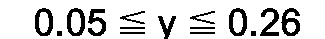 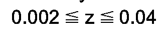 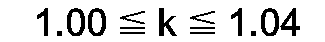
said additional component consisting essentially of Li₂0, Si0₂ and MO, wherein said MO is at least one oxide selected from a group consisting of BaO, SrO, CaO, MgO and ZnO ; and
a ratio among amounts of Li₂0, Si0₂ and MO in said additional component is within an area in a ternary system diagram of mol % having five vertexes of first to fifth vertexes, wherein according to Fig. 2:
said first vertex A represents a condition in which amounts of Li₂0 is 1 mol %, Si0₂ is 80 mol % and MO is 19 mol %;
said second vertex B represents a condition in which amounts of Li₂0 is 1 mol %, Si0₂ is 39 mol % and MO is 60 mol %;
said third vertex C represents a condition in which amounts of Li₂0 is 30 mol %, Si0₂ is 30 mol % and MO is 40 mol %;
said fourth vertex D represents a condition in which amounts of Li₂0 is 50 mol %, Si0₂ is 50 mol % and MO is 0 mol %; and
said fifth vertex E represents a condition in which amounts of Li₂0 is 20 mol %, Si0₂ is 80 mol % and MO is 0 mol %.

5. A method for fabricating a ceramic capacitor,
comprises the steps of:
providing a mixture of non-sintered ceramic powder;
forming a non-sintered ceramic sheet consisting of said mixture;
fabricating a laminated structure in which said non-sintered ceramic sheet is sandwiched between at least two conductive paste layers;
firing said laminated structure under a non-oxidative atmosphere; and
heating said fired laminated structure under an oxidative atmosphere;
characterized by:
said mixture of non-sintered ceramic powder consisting essentially of a fired mixture of a basic component of 100 weight portions and an additional component in the range of 0.2 to 5 weight portions;
said basic component consisting essentially of a material represented by the following formula: 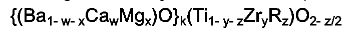 where, R is one or more metal elements selected from a group consisting of Sc, Y, Gd, Dy, Ho, Er, Yb, Tb, Tm and Lu; and w, x, y, z and k are numerals fulfilling the following conditions: 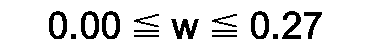 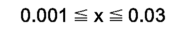 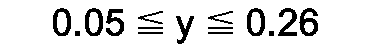 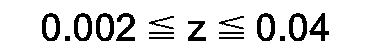 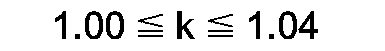
said additional component consisting essentially of B₂0₃, Si0₂ and MO, wherein said MO is at least one oxide selected from a group consisting of BaO, SrO, CaO, MgO and ZnO ; and
a ratio among amounts of B₂0₃, Si0₂ and MO in said additional component is within an area in a ternary system diagram of mol % having six vertexes of first to sixth vertexes, wherein according to Fig. 3:
said first vertex F represents a condition in which amounts of B₂0₃ is 1 mol %, Si0₂ is 80 mol % and MO is 19 mol %;
said second vertex G represents a condition in which amounts of B₂0₃ is 1 mol %, Si0₂ is 39 mol % and MO is 60 mol %;
said third vertex H represents a condition in which amounts of B₂0₃ is 30 mol %, Si0₂ is 0 mol % and MO is 70 mol %;
said fourth vertex I represents a condition in which amounts of B₂0₃ is 90 mol %, Si0₂ is 0 mol % and MO is 10 mol %;
said fifth vertex J represents a condition in which amounts of B₂0₃ is 90 mol %, Si0₂ is 10 mol % and MO is 0 mol %; and
said sixth vertex K represents a condition in which amounts of B₂0₃ is 20 mol %, Si0₂ is 80 mol % and MO is 0 mol %.

6. A method for fabricating a ceramic capacitor,
comprises the steps of:
providing a mixture of non-sintered ceramic powder;
forming a non-sintered ceramic sheet consisting of said mixture;
fabricating a laminated structure in which said non-sintered ceramic sheet is sandwiched between at least two conductive paste layers;
firing said laminated structure under a non-oxidative atmosphere; and
heating said fired laminated structure under an oxidative atmosphere;
characterized by:
said mixture of non-sintered ceramic powder consisting essentially of a fired mixture of a basic component of 100 weight portions and an additional component in the range of 0.2 to 5 weight portions;
said basic component consisting essentially of a material represented by the following formula: 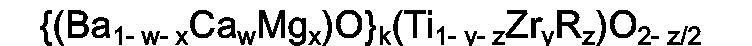 where, R is one or more metal elements selected from a group consisting of Sc, Y, Gd, Dy, Ho, Er, Yb, Tb, Tm and Lu ; and w, x, y, z and k are numerals fulfilling the following conditions: 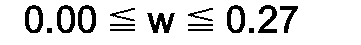 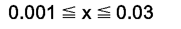 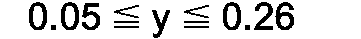 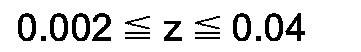 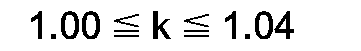
said additional component consisting essentially of B₂0₃, Si0₂ and Li₂0; and
a ratio among amounts of B₂0₃, Si0₂ and Li₂0 in said additional component is within an area in a ternary system diagram of mol % having six vertexes of first to sixth vertexes, wherein according to Fig. 4:
said first vertex L represents a condition in which amounts of B₂0₃ is 1 mol %, Si0₂ is 50 mol % and Li₂0 is 49 mol %;
said second vertex M represents a condition in which amounts of B₂0₃ is 50 mol %, Si0₂ is 1 mol % and Li₂0 is 49 mol %;
said third vertex N represents a condition in which amounts of B₂0₃ is 80 mol %, Si0₂ is 1 mol % and Li₂0 is 19 mol %;
said fourth vertex O represents a condition in which amounts of B₂0₃ is 89 mol %, Si0₂ is 10 mol % and Li₂0 is 1 mol %;
said fifth vertex P represents a condition in which amounts of B₂0₃ is 19 mol %, Si0₂ is 80 mol % and Li₂0 is 1 mol %; and
said sixth vertex Q represents a condition in which amounts of B₂0₃ is 1 mol %, Si0₂ is 80 mol % and Li₂0 is 19 mol %.

## Patentansprüche

1. Keramischer Kondensator umfassend: mindestens eine dielektrische keramische Schicht, die im wesentlichen besteht aus einer dielektrischen keramischen Zusammensetzung und mindestens zwei internen Elektroden, die diese dielektrische keramische Zusammensetzung sandwichartig umgeben; dadurch gekennzeichnet, daß die dielektrische keramische Zusammensetzung im wesentlichen aus einer gebrannten Mischung aus 100 Gewichtsteilen einer Basiskomponente und einer zusätzlichen Komponente im Bereich von 0,2 bis 5 Gewichtsteilen besteht, und die Basiskomponente im wesentlichen aus einem Material besteht, das durch die folgende Formel dargestellt wird: 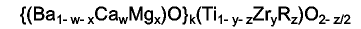 worin R eines oder mehrere Elemente bedeutet ausgewählt aus der Gruppe bestehend aus Sc, Y, Gd, Dy, Ho, Er, Yb, Tb, Tm und Lu; und w, x, y, z und k Zahlen sind, die die folgenden Bedingungen erfüllen: 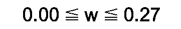 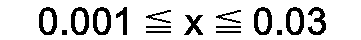 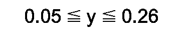 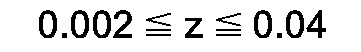 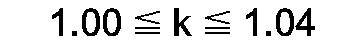 und die zusätzliche Komponente im wesentlichen aus Li₂0, Si0₂ und MO besteht, worin MO mindestens ein Oxid ist ausgewählt aus der Gruppe bestehend aus BaO, SrO, CaO, MgO und ZnO; und das Verhältnis der Mengen an Li₂0, Si0₂ und MO in dieser zusätzlichen Komponente innerhalb einer Fläche eines Molprozent- Diagramms des ternären Systems liegt, die 5 Eckpunkte aufweist, von denen gemäß Figur der erste Eckpunkt A einen Zustand darstellt, in dem die Menge an Li₂0 1 Mol-%, an Si0₂ 80 Mol-% und an MO 19 Mol-% beträgt;
der zweite Eckpunkt B einen Zustand darstellt, in dem die Menge an Li₂0 1 Mol-%, an Si0₂ 39 Mol-% und MO 60 Mol-% beträgt;
der dritte Eckpunkt C einen Zustand darstellt, in dem die Menge an Li₂0 30 Mol-%, an Si0₂ 30 Mol-% und an MO 40 Mol-% beträgt; der vierte Eckpunkt D einen Zustand darstellt, in dem die Menge an Li₂0 50 Mol-%, an Si0₂ 50 Mol-% und an MO 0 Mol-% beträgt: und
der fünfte Eckpunkt E einen Zustand darstellt, in dem die Menge an Li₂0 20 Mol-%, an Si0₂ 80 Mol-% und an MO 0 Mol-% beträgt.

2. Keramischer Kondensator umfassend: mindestens eine dielektrische keramische Schicht, die im wesentlichen besteht aus einer dielektrischen keramischen Zusammensetzung und mindestens zwei internen Elektroden, die diese dielektrische keramische Zusammensetzung sandwichartig umgeben; dadurch gekennzeichnet, daß die dielektrische keramische Zusammensetzung im wesentlichen aus einer gebrannten Mischung aus 100 Gewichtsteilen einer Basiskomponente und einer zusätzlichen Komponente im Bereich von 0,2 bis 5 Gewichtsteilen besteht, und die Basiskomponente im wesentlichen aus einem Material besteht, das durch die folgende Formel dargestellt wird: 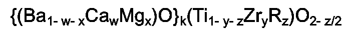 worin R eines oder mehrere Elemente bedeutet ausgewählt aus der Gruppe bestehend aus Sc, Y, Gd, Dy, Ho, Er, Yb, Tb, Tm und Lu; und w, x, y, z und k Zahlen sind, die die folgenden Bedingungen erfüllen: 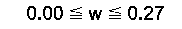 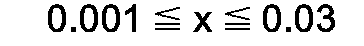 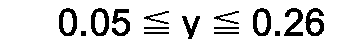 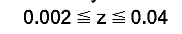 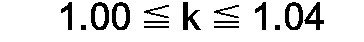 und die zusätzliche Komponente im wesentlichen aus B₂0₃, Si0₂ und MO besteht, worin MO mindestens ein Oxid ist ausgewählt aus der Gruppe bestehend aus BaO, SrO, CaO, MgO und ZnO; und das Verhältnis der Mengen an B₂0₃, Si0₂ und MO in dieser zusätzlichen Komponente innerhalb einer Fläche eines Molprozent- Diagramms des ternären Systems liegt, die 6 Eckpunkte aufweist, von denen gemäß Figur 3 der erste Eckpunkt F einen Zustand darstellt, in dem die Menge an B₂0₃ 1 Mol-%, an Si0₂ 80 Mol-% und an MO 19 Mol-% beträgt; der zweite Eckpunkt G einen Zustand darstellt, in dem die Menge an B₂0₃ 1 Mol-%, an Si0₂ 39 Mol-% und an MO 60 Mol-% beträgt; der dritte Eckpunkt H einen Zustand darstellt, in dem die Menge an B₂0₃ 30 Mol-%, an Si0₂ 0 Mol-% und an MO 70 Mol-% beträgt; der vierte Eckpunkt I einen Zustand darstellt, in dem die Menge an B₂0₃ 90 Mol-%, an Si0₂ 0 Mol-% und an MO 10 Mol-% beträgt; und
der fünfte Eckpunkt J einen Zustand darstellt, in dem die Menge an B₂0₃ 90 Mol-%, an S10₂ 10 Mol-% und an MO 0 Mol-% beträgt; und
der sechste Eckpunkt K einen Zustand darstellt, in dem die Menge an B₂0₃ 20 Mol-%, an Si0₂ 80 Mol-% und an MO 0 Mol-% beträgt.

3. Keramischer Kondensator umfassend: mindestens eine dielektrische keramische Schicht, die im wesentlichen besteht aus einer dielektrischen keramischen Zusammensetzung und mindestens zwei internen Elektroden, die diese dielektrische keramische Zusammensetzung sandwichartig umgeben; dadurch gekennzeichnet, daß die dielektrische keramische Zusammensetzung im wesentlichen aus einer gebrannten Mischung aus 100 Gewichtsteilen einer Basiskomponente und einer zusätzlichen Komponente im Bereich von 0,2 bis 5 Gewichtsteilen besteht, und die Basiskomponente im wesentlichen aus einem Material besteht, das durch die folgende Formel dargestellt wird: 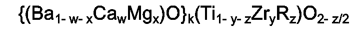 worin R eines oder mehrere Elemente bedeutet ausgewählt aus der Gruppe bestehend aus Sc, Y, Gd, Dy, Ho, Er, Yb, Tb, Tm und Lu; und w, x, y, z und k Zahlen sind, die die folgenden Bedingungen erfüllen: 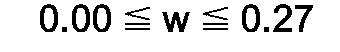 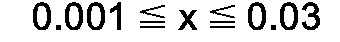 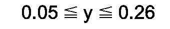 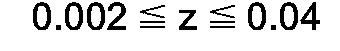 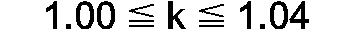
und die zusätzliche Komponente im wesentlichen aus B₂0₃, Si0₂ und Li₂0 besteht; und
das Verhältnis der Mengen an B₂0₃, Si0₂ und Li₂0 in dieser zusätzlichen Komponente innerhalb einer Fläche eines Molprozent- Diagramms des ternären Systems liegt, die 6 Eckpunkte aufweist, von denen gemäß Figur 4
der erste Eckpunkt L einen Zustand darstellt, in dem die Menge an B₂0₃ 1 Mol-%, an Si0₂ 50 Mol-% und an Li₂0 49 Mol-% beträgt; der zweite Eckpunkt M einen Zustand darstellt, in dem die Menge an B₂0₃ 50 Mol-%, an Si0₂ 1 Mol-% und an Li₂0 49 Mol-% beträgt; der dritte Eckpunkt N einen Zustand darstellt, in dem die Menge an B₂0₃ 80 Mol-%, an Si0₂ 1 Mol-% und an Li₂0 19 Mol-% beträgt;
der vierte Eckpunkt O einen Zustand darstellt, in dem die Menge an B₂0₃ 89 Mol-%, an Si0₂ 10 Mol-% und an Li₂0 1 Mol-% beträgt; und
der fünfte Eckpunkt P einen Zustand darstellt, in dem die Menge an B₂0₃ 19 Mol-%, an Si0₂ 80 Mol-% und an Li₂0 1 Mol-% beträgt; und
der sechste Eckpunkt Q einen Zustand darstellt, in dem die Menge an B₂0₃ 1 Mol-%, an Si0₂ 80 Mol-% und an Li₂0 19 Mol-% beträgt.

4. Verfahren zur Herstellung eines keramischen Kondensators, das die Stufen umfaßt:
Bereitstellung einer Mischung aus nicht-gesintertem keramischem Pulver;
Ausbilden einer nicht-gesinterten keramischen Schicht aus dieser Mischung;
Herstellen einer laminierten Struktur, in der die nichtgesinterte keramische Schicht zwischen mindestens zwei leitfähigen Schichten aus einer Paste sandwichartig angeordnet ist;
Brennen der laminierten Struktur in einer nicht-oxidativen Atmosphäre; und
Erhitzen der gebrannten laminierten Struktur in einer oxidativen Atmosphäre; dadurch gekennzeichnet, daß die Mischung aus nicht-gesintertem keramischem Pulver im wesentlichen aus einer gebrannten Mischung aus 100 Gewichtsteilen einer Basiskomponente und einer zusätzlichen Komponente im Bereich von 0,2 bis 5 Gewichtsteilen besteht, und die Basiskomponente im wesentlichen aus einem Material besteht, das durch die folgende Formel dargestellt wird: 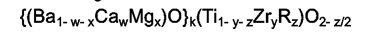
worin R eines oder mehrere Elemente bedeutet ausgewählt aus der Gruppe bestehend aus Sc, Y, Gd, Dy, Ho, Er, Yb, Tb, Tm und Lu; und w, x, y, z und k Zahlen sind, die die folgenden Bedingungen erfüllen: 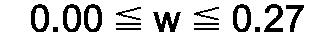 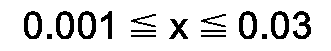 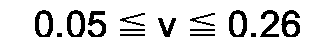 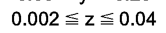 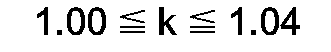
und die zusätzliche Komponente im wesentlichen aus Li₂0, Si0₂ und MO besteht, worin MO mindestens ein Oxid ist ausgewählt aus der Gruppe bestehend aus BaO, SrO, CaO, MgO und ZnO; und
das Verhältnis der Mengen an Li₂0, Si0₂ und MO in dieser zusätzlichen Komponente innerhalb einer Fläche eines Molprozent- Diagramms des ternären Systems liegt, die 5 Eckpunkte aufweist, von denen gemäß Figur 2
der erste Eckpunkt A einen Zustand darstellt, in dem die Menge an Li₂0 1 Mol-%, an Si0₂ 80 Mol-% und an MO 19 Mol-% beträgt; der zweite Eckpunkt B einen Zustand darstellt, in dem die Menge an Li₂0 1 Mol- %, an Si0₂ 39 Mol-% und an MO 60 Mol-% beträgt; der dritte Eckpunkt C einen Zustand darstellt, in dem die Menge an Li₂0 30 Mol-%, an Si0₂ 30 Mol-% und an MO 40 Mol-% beträgt;
der vierte Eckpunkt D einen Zustand darstellt, in dem die Menge an Li₂0 50 Mol-%, an Si0₂ 50 Mol-% und an MO 0 Mol-% beträgt; und
der fünfte Eckpunkt E einen Zustand darstellt, in dem die Menge an Li₂0 20 Mol-%, an Si0₂ 80 Mol-% und an MO 0 Mol-% beträgt.

5. Verfahren zur Herstellung eines keramischen Kondensators, das die Stufen umfaßt:
Bereitstellung einer Mischung aus nicht-gesintertem keramischem Pulver;
Ausbilden einer nicht-gesinterten keramischen Schicht aus dieser Mischung;
Herstellen einer laminierten Struktur, in der die nichtgesinterte keramische Schicht zwischen mindestens zwei leitfähigen Schichten aus einer Paste sandwichartig angeordnet ist;
Brennen der laminierten Struktur in einer nicht-oxidativen Atmosphäre; und
Erhitzen der gebrannten laminierten Struktur in einer oxidativen Atmosphäre; dadurch gekennzeichnet, daß die Mischung aus nicht-gesintertem keramischem Pulver im wesentlichen aus einer gebrannten Mischung aus 100 Gewichtsteilen einer Basiskomponente und einer zusätzlichen Komponente im Bereich von 0,2 bis 5 Gewichtsteilen besteht, und die Basiskomponente im wesentlichen aus einem Material besteht, das durch die folgende Formel dargestellt wird: 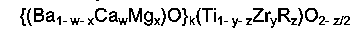 worin R eines oder mehrere Elemente bedeutet ausgewählt aus der Gruppe bestehend aus Sc,
Y, Gd, Dy, Ho, Er, Yb, Tb, Tm und Lu; und w, x, y, z und k Zahlen sind, die die folgenden Bedingungen erfüllen: 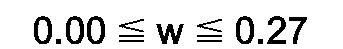 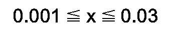 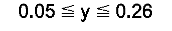 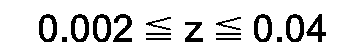 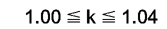
und die zusätzliche Komponente im wesentlichen aus B₂0₃, Si0₂ und MO besteht, worin MO mindestens ein Oxid ist ausgewählt aus der Gruppe bestehend aus BaO, SrO, CaO, MgO und ZnO; und
das Verhältnis der Mengen an B₂0₃, Si0₂ und MO in dieser zusätzlichen Komponente innerhalb einer Fläche eines Molprozent- Diagramms des ternären Systems liegt, die 6 Eckpunkte aufweist, von denen gemäß Figur 3
der erste Eckpunkt F einen Zustand darstellt, in dem die Menge an B₂0₃ 1 Mol-%, an Si0₂ 80 Mol-% und an MO 19 Mol-% beträgt; der zweite Eckpunkt G einen Zustand darstellt, in dem die Menge an B₂0₃ 1 Mol-%, an Si0₂ 39 Mol-% und an MO 60 Mol-% beträgt; der dritte Eckpunkt H einen Zustand darstellt, in dem die Menge an B₂0₃ 30 Mol-%, an Si0₂ 0 Mol-% und an MO 70 Mol-% beträgt; der vierte Eckpunkt I einen Zustand darstellt, in dem die Menge an B₂0₃ 90 Mol-%, an Si0₂ 0 Mol-% und an MO 10 Mol-% beträgt; und
der fünfte Eckpunkt J einen Zustand darstellt, in dem die Menge an B₂0₃ 90 Mol-%, an Si0₂ 10 Mol-% und an MO 0 Mol-% beträgt; und
der sechste Eckpunkt K einen Zustand darstellt, in dem die Menge an B₂0₃ 20 Mol-%, an Si0₂ 80 Mol-% und an MO 0 Mol-% beträgt.

6. Verfahren zur Herstellung eines keramischen Kondensators, das die Stufen umfaßt:
Bereitstellung einer Mischung aus nicht-gesintertem keramischem Pulver;
Ausbilden einer nicht gesinterten keramischen Schicht aus dieser Mischung;
Herstellen einer laminierten Struktur, in der die nichtgesinterte keramische Schicht zwischen mindestens zwei leitfähigen Schichten aus einer Paste sandwichartig angeordnet ist;
Brennen der laminierten Struktur in einer nicht-oxidativen Atmosphäre; und
Erhitzen der gebrannten laminierten Struktur in einer oxidativen Atmosphäre; dadurch gekennzeichnet, daß die Mischung aus nicht-gesintertem keramischem Pulver im wesentlichen aus einer gebrannten Mischung aus 100 Gewichtsteilen einer Basiskomponente und einer zusätzlichen Komponente im Bereich von 0,2 bis 5 Gewichtsteilen besteht, und die Basiskomponente im wesentlichen aus einem Material besteht, das durch die folgende Formel dargestellt wird: 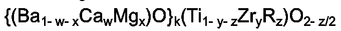 worin R eines oder mehrere Elemente bedeutet ausgewählt aus der Gruppe bestehend aus Sc, Y, Gd, Dy, Ho, Er, Yb, Tb, Tm und Lu; und w, x, y, z und k Zahlen sind, die die folgenden Bedingungen erfüllen: 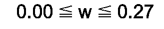 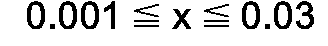 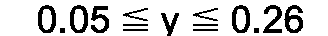 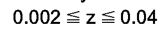 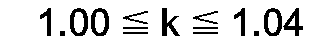 und die zusätzliche Komponente im wesentlichen aus B₂0₃, Si0₂ und Li₂0 besteht; und
das Verhältnis der Mengen an B₂0₃, Si0₂ und Li₂0 in dieser zusätzlichen Komponente innerhalb einer Fläche eines Molprozent- Diagramms des ternären Systems liegt, die 6 Eckpunkte aufweist, von denen gemäß Figur 4
der erste Eckpunkt L einen Zustand darstellt, in dem die Menge an B₂0₃ 1 Mol-%, an Si0₂ 50 Mol-% und an Li₂0 49 Mol-% beträgt; der zweite Eckpunkt M einen Zustand darstellt, in dem die Menge an B₂0₃ 50 Mol-%, an Si0₂ 1 Mol-% und an Li₂0 49 Mol-% beträgt; der dritte Eckpunkt N einen Zustand darstellt, in dem die Menge an B₂0₃ 80 Mol-%, an Si0₂ 1 Mol-% und an Li₂0 19 Mol-% beträgt;
der vierte Eckpunkt 0 einen Zustand darstellt, in dem die Menge an B₂0₃ 89 Mol-%, an Si0₂ 10 Mol-% und an Li₂0 1 Mol-% beträgt; und
der fünfte Eckpunkt P einen Zustand darstellt, in dem die Menge an B₂0₃ 19 Mol-%, an Si0₂ 80 Mol-% und an Li₂0 1 Mol-% beträgt; und der sechste Eckpunkt Q einen Zustand darstellt, in dem die Menge an B₂0₃ 1 Mol-%, an Si0₂ 80 Mol-% und an Li₂0 19 Mol-% beträgt.

## Revendications

1. Une capacité céramique comprenant:
- au moins une couche céramique diélectrique essentiellement formée d'une composition céramique diélectrique et d'au moins deux électrodes internes, de part et d'autre de ladite composition céramique de façon à former un sandwich, cette capacité céramique étant caractérisée en ce que:
- ladite composition céramique diélectrique est essentiellement formée d'un mélange, ayant été soumis à cuisson, d'un constituant de base formant 100 parties pondérales et d'un constituant supplémentaire formant 0,2 à 5 parties pondérales;
- ledit constituant de base est essentiellement formé d'une matière représentée par la formule générale: 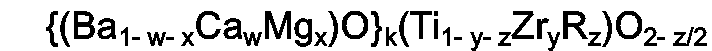 dans laquelle:
R est un ou plusieurs métaux choisis dans le groupe comprenant Sc, Y, Gd, Dy, Ho, Er, Yb, Tb, Tm et Lu; et
w, x, y, z et k sont des nombres satisfaisant aux conditions suivantes: 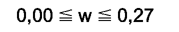 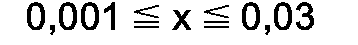 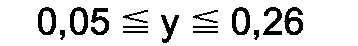 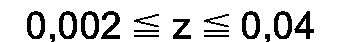 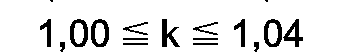
- ledit constituant supplémentaire étant essentiellement formé de Li0₂, Si0₂ et MO, MO correspondant à au moins un oxyde métallique choisi dans le groupe comprenant BaO, SrO, CaO, MgO et ZnO; et
- le rapport entre les quantités de Li0₂, Si0₂ et MO contenues dans ledit constituant supplémentaire étant compris dans une zone formée entre cinq sommets inclus dans un diagramme d'un système ternaire, exprimé en % en moles, étant entendu que, dans la figure 2:
- le premier sommet A représente une condition dans laquelle les quantités de Li0₂ sont de 1 mole %, de Si0₂ de 80 moles % et de MO de 19 moles %;
- un second sommet B dans lequel les quantités de Li0₂ sont de 1 mole %, de Si0₂ de 39 moles % et de MO de 60 moles %;
- un troisième sommet C dans lequel les quantités de Li0₂ sont de 30 moles %, de Si0₂ de 30 moles % et de MO de 40 moles %;
- un quatrième sommet D dans lequel les quantités de Li0₂ sont de 50 moles %, de Si0₂ de 50 moles % et de MO de 0 mole %; et
- un cinquième sommet E dans lequel les quantités de Li0₂ sont de 20 moles %, de Si0₂ de 80 moles % et de MO de 0 mole %.

2. Une capacité céramique comprenant:
- au moins une couche céramique diélectrique essentiellement formée d'une composition céramique diélectrique et d'au moins deux électrodes internes, de part et d'autre de ladite composition céramique de façon à former un sandwich, cette capacité céramique étant caractérisée en ce que:
- ladite composition céramique diélectrique est essentiellement formée d'un mélange, ayant été soumis à cuisson, d'un constituant de base formant 100 parties pondérales et d'un constituant supplémentaire formant 0,2 à 5 parties pondérales;
- ledit constituant de base est essentiellement formé d'une matière représentée par la formule générale: 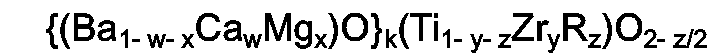 dans laquelle:
R est un ou plusieurs métaux choisis dans le groupe comprenant Sc, Y, Gd, Dy, Ho, Er, Yb, Tb, Tm et Lu; et
w, x, y, z et k sont des nombres satisfaisant aux conditions suivantes: 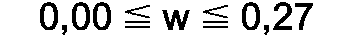 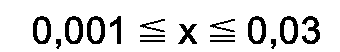 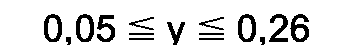 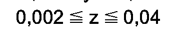 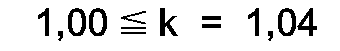
- ledit constituant supplémentaire étant essentiellement formé de B₂0₃, Si0₂ et MO, MO correspondant à au moins un oxyde métallique choisi dans le groupe comprenant BaO, SrO, CaO, MgO etZnO; et
- le rapport entre les quantités de B₂0₃, Si0₂ et MO contenues dans ledit constituant supplémentaire étant compris dans une zone formée entre six sommets inclus dans un diagramme d'un système ternaire, exprimé en % en moles, étant entendu que, dans la figure 3:
- le premier sommet F représente une condition dans laquelle les quantités de B₂0₃ sont de 1 mole %, de Si0₂ de 80 moles % et de MO de 19 moles %;
- un second sommet G dans lequel les quantités de B₂0₃ sont de 1 mole %, de Si0₂ de 39 moles % et de MO de 60 moles %;
- un troisième sommet H dans lequel les quantités de B₂0₃ sont de 30 moles %, de Si0₂ de 0 mole % et de MO de 70 moles %;
- un quatrième sommet dans lequel les quantités de B₂0₃ sont de 90 moles %, de Si02 de 0 mole % et de MO de 10 moles %;
- un cinquième sommet J dans lequel les quantités de B₂0₃ sont de 90 moles %, de Si0₂ de 10 moles % et de MO de 0 mole %; et
- un sixième sommet K dans lequel les quantités de B₂0₃ sont de 20 moles %, de Si0₂ de 80 moles % et de MO de 0 mole %.

3. Une capacité céramique comprenant:
- au moins une couche céramique diélectrique essentiellement formée d'une composition céramique diélectrique et d'au moins deux électrodes internes, de part et d'autre de ladite composition céramique de façon à former un sandwich, cette capacité céramique étant caractérisée en ce que:
- ladite composition céramique diélectrique est essentiellement formée d'un mélange, ayant été soumis à cuisson, d'un constituant de base formant 100 parties pondérales et d'un constituant supplémentaire formant 0,2 à 5 parties pondérales;
- ledit constituant de base est essentiellement formé d'une matière représentée par la formule générale: 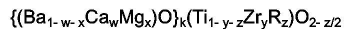 dans laquelle:
R est un ou plusieurs métaux choisis dans le groupe comprenant Sc, Y, Gd, Dy, Ho, Er, Yb, Tb, Tm et Lu; et
w, x, y, z et k sont des nombres satisfaisant aux conditions suivantes: 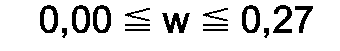 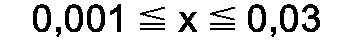 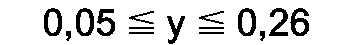 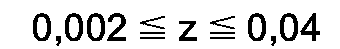 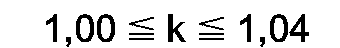
- ledit constituant supplémentaire étant essentiellement formé de B₂0₃, Si0₂ et Li0₂;
- le rapport entre les quantités de B₂0₃, Si0₂ et Li0₂ contenus dans ledit constituant supplémentaire étant compris dans une zone formée entre six sommets inclus dans un diagramme d'un système ternaire, exprimé en % en moles, étant entendu que dans la figure 4
- le premier sommet L représente une condition dans laquelle les quantités de B₂0₃ sont de 1 mole %, de Si0₂ de 50 moles % et de Li0₂ de 49 moles %;
- un second sommet M dans lequel les quantités de B₂0₃ sont de 50 moles %, de Si0₂ de 1 mole % et de Li0₂ de 49 moles %;
- un troisième sommet N dans lequel les quantités de B₂0₃ sont de 80 moles %, de Si0₂ de 1 mole % et de Li0₂ de 19 moles %;
- un quatrième sommet O dans lequel les quantités de B₂0₃ sont de 89 moles %, de Si0₂ de 10 moles % et de Li0₂ de 1 mole %;
- un cinquième sommet P dans lequel les quantités de B₂0₃ sont de 19 moles %, de Si0₂ de 80 moles % et de Li0₂ de 1 mole %; et
- un sixième sommet Q dans lequel les quantités de B₂0₃ sont de 1 mole %, de Si0₂ de 80 moles % et de Li0₂ de 19 moles %.

4. Un procédé de fabrication d'une capacité céramique comprenant les étapes de:
- préparation d'un mélange de poudre céramique non frittée;
- formation d'une feuille céramique non frittée à partir dudit mélange;
- fabrication d'une structure stratifiée dans laquelle ladite feuille céramique non frittée est mise en sandwich entre au moins deux couches de pâte conductrice;
- cuisson de ladite structure stratifiée dans une atmosphère non oxydante; et
- chauffage de ladite structure stratifiée ayant été soumise à cuisson sous une atmosphère oxydante; ce procédé étant caractérisé en ce que:
- le mélange de poudre céramique non fritté est essentiellement formé d'un constituant de base formant 100 parties pondérales et d'un constituant supplémentaire formant de 0,2 à 5 parties pondérales;
- ledit constituant de base est essentiellement formé d'une matière représentée par la formule suivante: 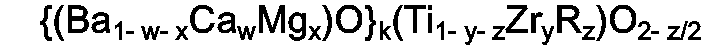 dans laquelle:
R est un ou plusieurs métaux choisis dans le groupe comprenant Sc, Y, Gd, Dy, Ho, Er, Yb, Tb, Tm et Lu; et
w, x, y, z et k sont des nombres satisfaisant aux conditions suivantes: 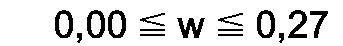 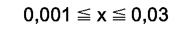 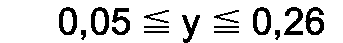 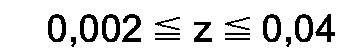 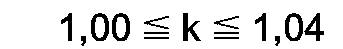
- ledit constituant supplémentaire étant essentiellement formé de Li0₂, Si0₂ et MO, MO correspondant à au moins un oxyde métallique choisi dans le groupe comprenant BaO, SrO, CaO, MgO et ZnO; et
- le rapport entre les quantités de Li0₂, Si0₂ et MO contenues dans ledit constituant supplémentaire étant compris dans une zone formée entre cinq sommets inclus dans un diagramme d'un système ternaire, exprimé en % en moles, étant entendu que dans la figure 2:
- le premier sommet A représente une condition dans laquelle les quantités de Li0₂ sont de 1 mole %, de Si0₂ de 80 moles % et de MO de 19 moles %;
- un second sommet B dans lequel les quantités de Li0₂ sont de 1 mole %, de Si0₂ de 39 moles % et de MO de 60 moles %;
- un troisième sommet C dans lequel les quantités de Li0₂ sont de 30 moles %, de Si0₂ de 30 moles % et de MO de 40 moles %;
- un quatrième sommet D dans lequel les quantités de Li0₂ sont de 50 moles %, de Si0₂ de 50 moles % et de MO de 0 mole %; et
- un cinquième sommet E dans lequel les quantités de Li0₂ sont de 20 moles %, de Si0₂ de 80 moles % et de MO de O mole %.

5. Un procédé de fabrication d'une capacité céramique comprenant les étapes de:
- préparation d'un mélange de poudre céramique non frittée;
- formation d'une feuille céramique non frittée à partir dudit mélange;
- fabrication d'une structure stratifiée dans laquelle ladite feuille céramique non frittée est mise en sandwich entre au moins deux couches de pâte conductrice;
- cuisson de ladite structure stratifiée dans une atmosphère non oxydante; et
- chauffage de ladite structure stratifiée ayant été soumise à cuisson sous une atmosphère oxydante; ce procédé étant caractérisé en ce que:
- le mélange de poudre céramique non fritté est essentiellement formé d'un constituant de base formant 100 parties pondérales et d'un constituant supplémentaire formant de 0,2 à 5 parties pondérales;
- ledit constituant de base est essentiellement formé d'une matière représentée par la formule suivante: 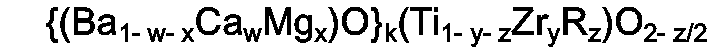 dans laquelle:
R est un ou plusieurs métaux choisis dans le groupe comprenant Sc, Y, Gd, Dy, Ho, Er, Yb, Tb, Tm et Lu; et
w, x, y, z et k sont des nombres satisfaisant aux conditions suivantes: 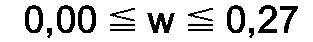 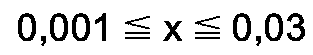 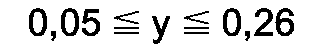 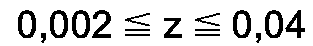 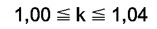
- ledit constituant supplémentaire étant essentiellement formé de B₂0₃, Si0₂ et MO, MO correspondant à au moins un oxyde métallique choisi dans le groupe comprenant BaO, SrO, CaO, MgO etZnO; et
- le rapport entre les quantités de B₂0₃, Si0₂ et MO contenues dans ledit constituant supplémentaire étant compris dans une zone formée entre six sommets inclus dans un diagramme d'un système ternaire, exprimé en % en moles, étant entendu que dans la figure 3:
- le premier sommet F représente une condition dans laquelle les quantités de B₂0₃ sont de 1 mole %, de Si0₂ de 80 moles % et de MO de 19 moles %;
- un second sommet G dans lequel les quantités de B₂0₃ sont de 1 mole %, de Si0₂ de 39 moles % et de MO de 60 moles %;
- un troisième sommet H dans lequel les quantités de B₂0₃ sont de 30 moles %, de Si0₂ de 0 moles % et de MO de 70 moles %;
- un quatrième sommet dans lequel les quantités de B₂0₃ sont de 90 moles %, de Si0₂ de 0 moles % et de MO de 10 moles %;
- un cinquième sommet J dans lequel les quantités de B₂0₃ sont de 90 moles %, de Si0₂ de 10 moles % et de MO de 0 mole %; et
- un sixième sommet K dans lequel les quantités de B₂0₃ sont de 20 moles %, de Si0₂ de 80 moles % et de MO de 0 mole %.

6. Un procédé de fabrication d'une capacité céramique comprenant les étapes de:
- préparation d'un mélange de poudre céramique non frittée;
- formation d'une feuille céramique non frittée à partir dudit mélange;
- fabrication d'une structure stratifiée dans laquelle ladite feuille céramique non frittée est mise en sandwich entre au moins deux couches de pâte conductrice;
- cuisson de ladite structure stratifiée dans une atmosphère non oxydante; et
- chauffage de ladite structure stratifiée ayant été soumise à cuisson sous une atmosphère oxydante; ce procédé étant caractérisé en ce que:
- le mélange de poudre céramique non fritté est essentiellement formé d'un constituant de base formant 100 parties pondérales et d'un constituant supplémentaire formant de 0,2 à 5 parties pondérales;
- ledit constituant de base est essentiellement formé d'une matière représentée par la formule suivante: 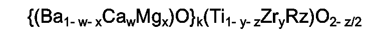 dans laquelle:
R est un ou plusieurs métaux choisis dans le groupe comprenant Sc, Y, Gd, Dy, Ho, Er, Yb, Tb, Tm et Lu; et
w, x, y, z et k sont des nombres satisfaisant aux conditions suivantes: 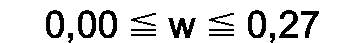 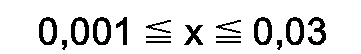 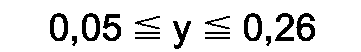 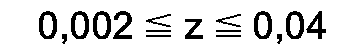 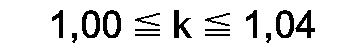
- ledit constituant supplémentaire étant essentiellement formé de B₂0₃, Si0₂ et Li0₂; et
- le rapport entre les quantités de B₂0₃, Si0₂ et Li0₂ contenus dans ledit constituant supplémentaire étant compris dans une zone formée entre six sommets inclus dans un diagramme d'un système ternaire, exprimé en % en moles, étant entendu que dans la figure 4:
- le premier sommet L représente une condition dans laquelle les quantités de B₂0₃ sont de 1 mole %, de Si0₂ de 50 moles % et de Li0₂ de 49 moles %;
- un second sommet M dans lequel les quantités de B₂0₃ sont de 50 moles %, de Si0₂ de 1 mole % et de Li0₂ de 49 moles %;
- un troisième sommet N dans lequel les quantités de B₂0₃ sont de 80 moles %, de Si0₂ de 1 mole et de Li0₂ de 19 moles %;
- un quatrième sommet O dans lequel les quantités de B₂0₃ sont de 89 moles %, de Si0₂ de 10 moles % et de Li0₂ de 1 mole %;
- un cinquième sommet P dans lequel les quantités de B₂0₃ sont de 19 moles %, de Si0₂ de 80 moles % et de Li0₂ de 1 mole %; et
- un sixième sommet Q dans lequel les quantités de B₂0₃ sont de 1 mole %, de Si0₂ de 80 moles % et de Li0₂ de 19 moles %.
